# EUROPEAN PATENT SPECIFICATION

(11) **EP 1 175 467 B1**
(45) Date of publication and mention of the grant of the patent: **14.06.2006**
(21) Application number: 00927012.5
(22) Date of filing: 20.04.2000
(51) Int. Cl.: C09J 11/06, B32B 7/12, C08K 5/00, C08K 5/3475

(54) **STABILIZED ADHESIVE COMPOSITIONS CONTAINING HIGHLY SOLUBLE, RED-SHIFTED, PHOTOSTABLE BENZOTRIAZOLE UV ABSORBERS AND LAMINATED ARTICLES DERIVED THEREFROM**
STABILISIERTE KLEBZUSAMMENSETZUNG MIT HOCHLÖSLICHEN, ROTVERSCHOBENEN, PHOTOSTABILEN BENZOTRIAZOLEN UV-ABSORBENTE UND DARAUS GEWONNENE LAMINERTE GEGENSTÄNDE
COMPOSITIONS ADHESIVES STABILISEES CONTENANT DES ABSORBEURS D'U.V. A BASE DE BENZOTRIAZOLE DECALEES VERS LE ROUGE TRES SOLUBLES ET PHOTOSTABLES ET ARTICLES STRATIFIES FABRIQUES AVEC CES COMPOSITIONS

(30) Priority: 03.05.1999 US 303583; 03.05.1999 US 303582
(43) Date of publication of application: 30.01.2002
(73) Proprietor: Ciba Specialty Chemicals Holding Inc., 4057 Basel (CH)
(72) Inventor: RENZ, Walter, Brookfield, CT 06804 (US); WOOD, Mervin, Gale, Poughquag, NY 12570 (US); SUHADOLNIK, Joseph, Yorktown Heights, NY 10598 (US); RAVICHANDRAN, Ramanathan, Suffern, NY 10901 (US); IYENGAR, Revathi, Cortlandt Manor, NY 10567 (US); HALL, Luther, A., R., Woodcliff Lake, NJ 07675 (US)
(86) International application number: PCT/EP2000/003616
(87) International publication number: WO 2000/066676

(56) References cited:
- EP-A- 0 698 637
- GB-A- 2 051 672
- PATENT ABSTRACTS OF JAPAN vol. 1999, no. 09, 30 July 1999 (1999-07-30) & JP 11 116910 A (SEKISUI CHEM CO LTD), 27 April 1999 (1999-04-27)
- PATENT ABSTRACTS OF JAPAN vol. 014, no. 446 (C-0763), 25 September 1990 (1990-09-25) & JP 02 175782 A (NIPPON CARBIDE IND CO INC), 9 July 1990 (1990-07-09)
- PATENT ABSTRACTS OF JAPAN vol. 1995, no. 01, 28 February 1995 (1995-02-28) & JP 06 299132 A (OTSUKA CHEM CO LTD), 25 October 1994 (1994-10-25)
- PATENT ABSTRACTS OF JAPAN vol. 1996, no. 06, 28 June 1996 (1996-06-28) & JP 08 048954 A (SEKISUI CHEM CO LTD), 20 February 1996 (1996-02-20)
- PATENT ABSTRACTS OF JAPAN vol. 017, no. 427 (M-1459), 9 August 1993 (1993-08-09) & JP 05 092514 A (NIPPON STEEL CORP), 16 April 1993 (1993-04-16)

## Description

This invention pertains to stabilized adhesive compositions containing an effective amount of a benzotriazole UV absorber having enhanced solubility, durability and absorption in the 350 to 400 nm range. Also subject of the invention are stabilized adhesive compositions containing an effective amount of a benzotriazole substituted in the ortho position of the hydroxyphenyl ring by α-cumyl or phenyl, such as 2-(2-hydroxy-3-α-cumyl-5-tert-octylphenyl)-2H-benzotriazole having enhanced solubility and durability. A further subject of the invention pertains to novel asymmetrical bisbenzotriazole compounds which are red-shifted, and are particularly soluble due to that asymmetry and which are useful in a host of end-use applications.

### Background of the Invention

Adhesives are made up of various components such as polymers, tackifiers, waxes and oils. Adhesive formulations based on these ingredients are susceptible to degradation. The consequences of degradation are discoloration, loss of elongation, loss of tensile strength, loss of tack and change in viscosity, molecular weight and molecular weight distribution. Degradation can be caused by prolonged exposure to sunlight. Sunlight contains invisible ultraviolet (UV) radiation with wavelengths between 290 and 400 nm. This radiation is responsible for the initiation of photodegradation.

Absorption of UV light by chromophores present in the adhesive formulation transforms the chromophores into their excited states which can undergo further undesired reactions. Some polymers contain strongly absorbing chromophores as a major part of their structures. Other polymers contain unintentional impurities such as ketones and hydroperoxide moieties and catalyst residues which act as chromophores. Absorption of UV radiation by these chromophores eventually results in bond cleavage, chain scission and/or crosslinking reactions.

Photostabilization of adhesives can be achieved by the addition of UV absorbers which convert the absorbed energy into harmless heat. An ideal UV absorber should be extremely photostable and have strong absorption over the UV range from 290 to 400 nm, but particularly the range of 350 to 400 nm. Classes of UV absorbers include the salicylates, cyanoacrylates, malonates, oxanilides, benzophenones, s-triazines and benzotriazoles.

Salicylates, cyanoacrylates, malonates and oxanilides absorb UV light primarily at the lower wavelengths of the UV range. These compounds have little to no absorption in the range of 350 to 400 nm which make them unsuitable for the instant applications. Benzophenones absorb over the lower half of the UV range, and they tend to be prone to yellowing upon light exposure due to photodegradation. Recently, it has been shown photochemically that benzophenones decompose prematurely in ethylene-vinyl acetate encapsulants which lead to the production of polyenic chromophores. This color generation from light yellow to brown is not only highly undesirable and unsightly in adhesive systems, but also can result in a loss of adhesive properties. By contrast, selected benzotriazole UV absorbers are particularly useful because of their increased photostability.

Some polymers such as polycarbonates, polyesters and aromatic polyurethanes contain strongly absorbing chromophores as a major and integral part of their structures. Poly(ethylene terephthalate) (PET) and poly(ethylene 2,6-naphthalenedicarboxylate) (PEN) are particular examples the latter of which absorbs into the red UV region and especially need red-shifted benzotriazoles for UV protection. U.S. Patent No. 5,294,473 and WO 98/34981 teach the use of coatings containing UV absorbers including some benzotriazoles in stabilizing PEN films. Adding an adhesive UV screening layer containing the benzotriazoles, especially those described in the instant invention, further protects such polymers in multilayered constructions and articles.

The description, preparation and uses of the 2H-benzotriazole UV absorbers are described in United States Patent Nos. 3,004,896; 3,055,896; 3,072,585; 3,074,910; 3,189,615; 3,230,194; 4,127,586; 4,226,763; 4,278,589; 4,315,848; 4,383,863; 4,675,352; 4,681,905 and 4,853,471.

Selected benzotriazoles with just hydrogen or halogen at the 5-position of the benzo ring are photostable and soluble in adhesive formulations. One such benzotriazole is 2-(2-hydroxy-3-α-cumyl-5-tert-octylphenyl)-2H-benzotriazole as described in United States Patent Nos. 5,554,760; 5,563,242; 5,574,166 and 5,607,987. While the absorbance of this benzotriazole is not red-shifted toward longer UV wavelengths, it is very photostable and is amazingly soluble in adhesives making it especially well-suited for the instant applications.

Although benzotriazoles with just hydrogen at the 5-position of the benzo ring are photostable and useful in adhesive formulations, they lack a red-shifted absorbance toward longer UV wavelengths which would be most useful in giving added protection to the substrates. United States Patent Nos. 5,319,091 and 5,410,071 described the preparation of benzotriazoles substituted at the 5-position of the benzo ring with alkyl- or aryl-sulfonyl moieties. It is taught in United States Patent No. 5,280,124 that by introducing a higher alkyl or aryl sulfoxide or sulfone at the 5-position of the benzo ring of the benzotriazole, the resulting benzotriazole exhibits enhanced absorption in the near visible range (over 350 nm). Such sulfone substituted products were shown to be useful in automotive coatings applications. Additionally such an electron withdrawing group dramatically increases the photostability of these benzotriazole UV absorbers in automotive coatings. Quite surprisingly, these red-shifted benzotriazoles and particularly the asymetric substituted ones are amazingly soluble in adhesives making them especially well-suited for the instant applications.

It is known in the art that the concomitant use of a hindered amine light stabilizer with a UV absorber such as a benzotriazole provides excellent stabilization in many polymer compositions as summarized by G. Bemer and M. Rembold, "New Light Stabilizers for High Solids Coatings", Organic Coatings and Science and Technology, Vol. 6, Dekkar, New York, pp 55-85.

The benzotriazole UV absorbers represent a special class of commercial UV absorbers as described above. Only a few references refer to substitution on the benzo ring by an aryl or alkyl sulfoxide or sulfonyl moiety.

United States Patent No. 3,218,332 discloses benzotriazoles substituted at the 5-position of the benzo ring by a lower alkyl sulfonyl moiety. However, this patent deals with putting reactable groups, namely alkenyl groups, at the 3-position on the phenyl ring and is of little relevance to the instant application. United States Patent Nos. 5,268,450 and 5,319,091 disclose polymer compositions and a process for the production of substituted aryl thio and aryl sulfonyl benzotriazoles which are covalently bound to polymers, such as poly(phenylene sulfide), RYTON®, Phillips Petroleum. United States Patent No. 5,280,124 discloses benzotriazoles with only higher alkyl or aryl sulfinyl or sulfonyl moieties at the 5-position of the benzo ring which are useful for protecting thermoset automotive coatings.

Japanese Patent No. 92-352228 discloses the use of 5-ethylsulfonyl benzotriazoles with the 3-position of the phenyl ring being unsubstituted or substituted by methyl for the UV protection of dust proof poly(vinyl chloride) resin films. These compounds when studied in the instant adhesive compositions were found to be quite insoluble and totally useless for the instant adhesive compositions. By contrast, when a tertiary alkyl group is inserted at the 3-position of the phenyl ring, the solubility of the thus substituted benzotriazole in adhesive composition is surprisingly enhanced.

The instant in 5 position substituted compounds exhibit enhanced broadened absorption characteristics particularly in the long wavelength UV region (over 350 nm) when compared with compounds of the prior art. Additionally, the instant compounds have surprising and unexpectedly high solubility in adhesives making them especially well suited for use in adhesive formulations.

Bisbenzotriazoles such as 2,2'-methylene-bis[4-tert-octyl-6-(2H-benzotriazolyl-2-yl)phenol], TINUVIN® 360 (Ciba) are described in United States Patent No. 5,299,521. While useful, these compounds are not red-shifted.

German 1,670,951 describes generically both symmetrical and asymmetrical alkylenebisbenzotriazoles, but specifically only some symmetical bisbenzotriazoles which are outside of the scope of the instant claims. None of the compounds described in German 1,670,951 are substituted by a perfluroalkyl moiety, such as by CF₃.

United States Patent No. 4,812,498 describes symmetrical bisbenzotriazoles as stabilizers for polycarbonate resins. The bisbenzotriazoles are symmetrical in structure, do not contain perfluoroalkyl moieties, and are clearly outside the scope of the instant compounds.

EP 924,203 A1 describes bisbenzotriazole compounds each containing a polymerizable moiety and polymers made therefrom. None of these prior art bisbenzotriazoles is red-shifted or contains a perfluoroalkyl group. The instant compounds are clearly distinguished from these prior bisbenzotriazoles.

The effect of UV light on laminated articles that are exposed to the sun or other sources of UV light are of great concern to the manufacturers of such articles. Over time, constant or repeated exposure to UV light can result in dye and/or pigment fade for dyes and/or pigments used in such articles and in the degradation or breakdown of the adhesives, polymers or other materials used in the construction of the articles. The aforementioned fading and degradation shorten the useful life of the articles in question, making protection from UV light exposure an issue of great importance to the manufacturers of such articles.

Molecules known as UV absorbers are generally known in the art. However, due to the differences discussed above between the various UV absorber classes, it is the benzotriazoles and articles containing them which will be discussed here. Due to the incompatibility and low solubility of certain benzotriazoles, a need exists for selected benzotriazoles that are highly soluble and which would provide added protection in the 350 to 400 nm region of the ultraviolet. T. Nagashima et al., J. Non-Cryst. Solids, 178 (1994), 182, report recently ultraviolet light (UV) shielding glass, which is UV absorbing over the range of long wavelengths (320-400 nm) to avoid sunburn effects, has become an important issue because of the possible hazard of skin cancer due to depletion of the ozone layer."

In addition, articles which incorporate the selected benzotriazoles of the instant invention are useful in protecting interior structures, textiles and fabrics from UV induced photodegradation such as in automotive applications.

International application WO 97/32225 describes the use of PEN films having reflective and polarizing elements for use as optical films.

United States Patent No. 5,770,114 discloses stabilized compositions containing soluble benzotriazoles that are used in electrochromic devices. However, these benzotriazoles lack the red-shifted absorption at the 350 to 400 nm region.

Articles which would benefit from the incorporation of the instant, highly soluble, photostable and red-shifted benzotriazoles include, but are not limited to:
(a) Retroreflective Sheets and Signs and Conformable Marking Sheets as seen in WO 97/42261; and United States Patent No. 5,387,458;
(b) Solar Control Films of Various Construction as seen in British 2,012,668; European 355,962; and United States Patent Nos. 3,290,203; 3,681,179; 3,776,805 and 4.095,013;
(c) Corrosion Resistant Silver Mirrors and Solar Reflectors as seen in United States Patent No. 4,645,714;
(d) Reflective Print Labels as seen in United States Patent No. 5,564,843;
(e) UV Absorbing Glasses and Glass Coatings as seen in United States Patent Nos. 5,372,889; 5,426,204; 5,683,804 and 5,618,626;
(f) Electrochromic Devices as seen in European 752,612 A1; and United States Patent Nos. 5,239,406; 5,523,877 and 5,770,114;
(g) Films/Glazings as seen in WO 92/01557; Japanese Nos. 75-33286; 93-143668; 95-3217 and 96-143831; and United States Patent No. 5,643,676;
(h) Windscreens and Intermediate Layers as seen in Japanese Nos. 80-40018; 90-192118; 90-335037; 90-335038; 92-110128 and 94-127591; and United States Patent No. 5,618,863; and
(i) Optical Films as seen in WO 97/32225; and United States Patent Nos. 4,871,784 and 5,217,794.

### Detailed Disclosure

One subject of the present invention is a stabilized adhesive composition, suitable for use as an adhesive layer in a laminated article or multilayer construction, which comprises
(a) an adhesive; and
(b1) a highly soluble, red-shifted, photostable benzotriazole of formula I, II or III 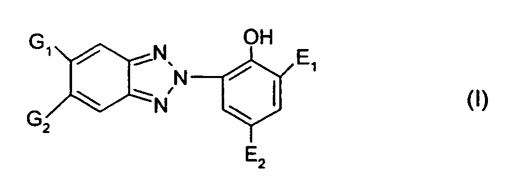 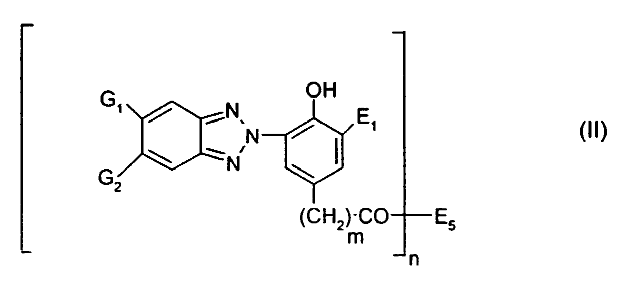 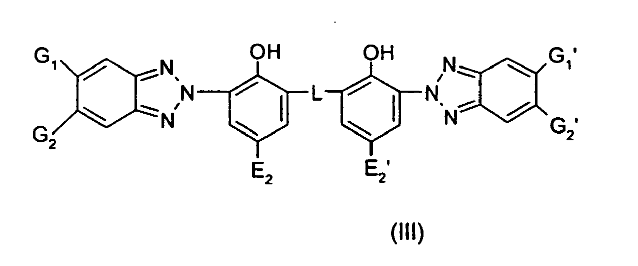
(b2) a highly soluble and photostable benzotriazole which is 2-(2-hydroxy-3-α-cumyl-5-tert-octylphenyl)-2H-benzotriazole or 2-(2-hydroxy-3-α-cumyl-5-tert-butylphenyl)-2H-benzotriazole; or
a combination of the compounds of (b1) and (b2);
wherein in formula (I)
G₁ is hydrogen,
G₂ is cyano, chloro, fluoro, CF₃-, -CO-G₃, E₃SO- or E₃SO₂-,
G₃ is straight or branched chain alkyl of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 4 alkyl of 1 to 4 carbon atoms,
E₁ is phenylalkyl of 7 to 15 carbon atoms, phenyl, or said phenyl or said phenylalkyl substituted on the phenyl ring by 1 to 4 alkyl of 1 to 4 carbon atoms,
E₂ is straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 3 alkyl of 1 to 4 carbon atoms; or E₂ is said alkyl of 1 to 24 carbon atoms or said alkenyl bf 2 to 18 carbon atoms substituted by one or more -OH, -OE₄, -NCO, -NH₂, -NHCOE₁₁, -NHE₄ or -N(E₄)₂, or mixtures thereof, where E₄ is straight or branched chain alkyl of 1 to 24 carbon atoms; or said alkyl or said alkenyl interrupted by one or more -O-, -NH- or -NE₄₋groups or mixtures thereof and which can be unsubstituted or substituted by one or more - OH, -OE₄ or -NH₂ groups or mixtures thereof;
E₁₁ is as defined below:
E₃ is alkyl of 1 to 20 carbon atoms, hydroxyalkyl of 2 to 20 carbon atoms, alkenyl of 3 to 18 carbon atoms, cycloalkyl of 5 to 12 carbon atoms, phenyl alkyl of 7 to 15 carbon atoms, aryl of 6 to 10 carbon atoms or said aryl substituted by one or two alkyl of 1 to 4 carbon atoms or 1,1,2,2-tetrahydroperfluoroalkyl where the perfluoroalkyl moiety is of 6 to 16 carbon atoms; or
is a compound of formula I wherein,
G₁ is hydrogen,
G₂ is chloro, fluoro, CF₃-, E₃SO- or E₃SO₂-,
E₁ is hydrogen or straight or branched alkyl of 1 to 24 carbon atoms,
E₂ is as defined above, and
E₃ is straight or branched chain alkyl of 1 to 7 carbon atoms.
wherein in formula (II) and (III)
G₁ and G₁' are independently hydrogen or halogen,
G₂ and G₂' are independently halogen, nitro, cyano, perfluoroalkyl of 1 to 12 carbon atoms, -COOG₃, -P(O)(C₈H₃)₂, -CO-G₃, -CO-NH-G₃, -CO-N(G₃)₂, -N(G₃)-CO-G₃, E₃SO- or E₃SO₂-; or G₂' is also hydrogen,
G₃ is hydrogen, straight or branched chain alkyl of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 4 alkyl of 1 to 4 carbon atoms,
G₆ is perfluoroalkyl of 1 to 12 carbon atoms,
G₇ is hydrogen or perfluoroalkyl of 1 to 12 carbon atoms,
E₁ is hydrogen, straight or branched chain alkyl of 1 to 24 carbon atoms, straight or branched chain alkenyl of 2 to 24 carbon atoms, cycloalkyl of 5 to 12 carbon atoms, phenylalkyl of 7 to 15 carbon atoms, phenyl, or said phenyl or said phenylalkyl substituted on the phenyl ring by 1 to 4 alkyl of 1 to 4 carbon atoms; or E₁ is alkyl of 1 to 24 carbon atoms substituted by one or two hydroxy groups,
E₂ and E₂' are independently straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by one to three alkyl of 1 to 4 carbon atoms; or E₂ and E₂' are independently said alkyl of 1 to 24 carbon atoms or said alkenyl of 2 to 18 carbon atoms substituted by one or more -OH, -OCOE₁₁, -OE₄, -NCO, -NH₂, -NHCOE₁₁, -NHE₄ or -N(E₄)₂, or mixtures thereof, where E₄ is straight or branched chain alkyl of 1 to 24 carbon atoms; or said alkyl or said alkenyl interrupted by one or more -O-, -NH- or -NE₄- groups or mixtures thereof and which can be unsubstituted or substituted by one or more -OH, -OE₄ or -NH₂ groups or mixtures thereof;
n is 1 or 2,
when n is 1, E₅ is OE₆ or NE₇E₈, or
E₅ is -PO(OE₁₂)₂, -OSi(E₁₁)₃ or -OCO-E₁₁,
or straight or branched chain C₁-C₂₄alkyl which is interrupted by -O-, -S- or -NE₁₁ and which can be unsubstituted or substituted by -OH or -OCO-E₁₁, C₅-C₁₂ cycloalkyl which is unsubstituted or substituted by -OH, straight chain or branched C₂-C₁₈alkenyl which is unsubstituted or substituted by -OH, C₇-C₁₅aralkyl, -CH₂-CHOH-E₁₃ or glycidyl,
E₆ is hydrogen, straight or branched chain C₁-C₂₄alkyl which is unsubstituted or substituted by one or more OH, OE₄ or NH₂ groups, or -OE₆ is -(OCH₂CH₂)_{w}OH or - (OCH₂CH₂)_{w}OE₂₁where w is 1 to 12 and E₂₁ is alkyl of 1 to 12 carbon atoms,
E₇ and E₈ are independently hydrogen, alkyl of 1 to 18 carbon atoms, straight or branched chain C₃-C₁₈alkyl which is interrupted by -O-, -S- or -NE₁₁-, C₅-C₁₂cycloalkyl, C₆₋C₁₄aryl or C₁-C₃hydroxylalkyl, or E₇ and E₈ together with the N atom are a pyrrolidine, piperidine, piperazine or morpholine ring,
E₅ is -X-(Z)ₚ-Y-E₁₅
wherein
X is -O- or -N(E₁₆)-,
Y is -O- or -N(E₁₇)-,
Z is C₂-C₁₂-alkylene, C₄-C₁₂-alkylene interrupted by one to three nitrogen atoms, oxygen atoms or a mixture thereof, or is C₃-C₁₂-alkylene, butenylene, butynylene, cyclohexylene or phenylene, each substituted by a hydroxyl group,
m is zero, 1 or 2,
p is 1, or p is also zero when X and Y are -N(E₁₆)- and -N(E₁₇)-, respectively,
E₁₅ is a group -CO-C(E₁₈)=C(H)E₁₉ or, when Y is -N(E₁₇)-, forms together with E₁₇ a group -CO-CH=CH-CO-, wherein E₁₈ is hydrogen or methyl, and E₁₉ is hydrogen, methyl or - CO-X-E₂₀, wherein E₂₀ is hydrogen, C₁-C₁₂-alkyl or a group of the formula 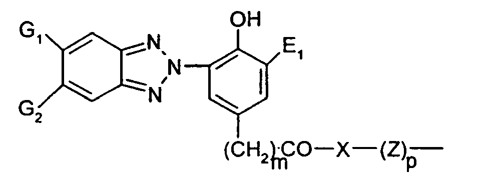 wherein the symbols E₁, G₂, X, Z, m and p have the meanings defined above, and E₁₆ and E₁₇ independently of one another are hydrogen, C₁-C₁₂-alkyl, C₃-C₁₂-alkyl interrupted by 1 to 3 oxygen atoms, or is cyclohexyl or C₇-C₁₅aralkyl, and E₁₆ together with E₁₇ in the case where Z is ethylene, also forms ethylene,
when n is 2, E₅ is one of divalent radicals -O-E₉-O- or -N(E₁₁)-E₁₀N(E₁₁)-,
E₉ is C₂-C₈alkylene, C₄-C₈alkenylene, C₄alkynylene, cyclohexylene, straight or branched chain C₄-C₁₀alkylene which is interrupted by -O- or by -CH₂-CHOH-CH₂-O-E₁₄-O-CH₂-CHOH-CH₂-,
E₁₀ being straight or branched chain C₂-C₁₂alkylene which may be interrupted by -O-, cyclohexylene, or 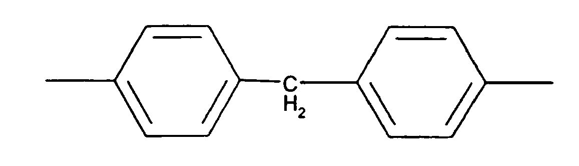 or 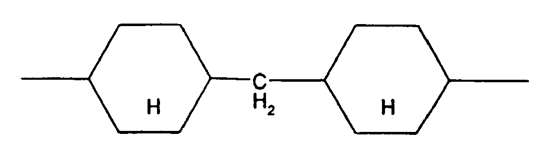 or E₁₀ and E₁₁ with the two nitrogen atoms form a piperazine ring,
E₁₄ is straight or branched chain C₂-C₈alkylene, straight or branched chain C₄₋C₁₀alkylene which is interrupted by -O-, cycloalkylene, arylene or 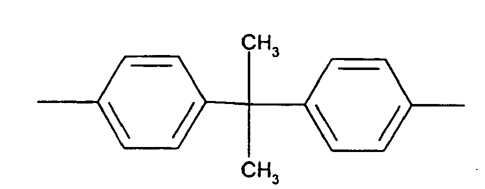 or 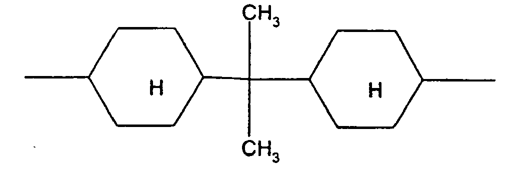 where E₇ and E₈ are independently hydrogen, alkyl of 1 to 18 carbon atoms or E₇ and E₈ together are alkylene of 4 to 6 carbon atoms, 3-oxapentamethylene, 3-iminopentamethylene or 3-methyliminopentamethylene,
E₁₁ is hydrogen, straight or branched chain C₁-C₁₈alkyl, C₅-C₁₂cycloalkyl, straight or branched chain C₂-C₁₈alkenyl, C₆-C₁₄aryl or C₇-C₁₅aralkyl,
E₁₂ is straight or branched chain C₁-C₁₈alkyl, straight or branched chain C₃₋C₁₈alkenyl, C₅-C₁₀cycloalkyl, C₆-C₁₆aryl or C₇-C₁₅aralkyl,
E₁₃ is H, straight chain or branched C₁-C₁₈alkyl which is substituted by -PO(OE₁₂)₂, phenyl which is unsubstituted or substituted by OH, C₇-C₁₅aralkyl or -CH₂OE₁₂,
E₃ is alkyl of 1 to 20 carbon atoms, hydroxyalkyl of 2 to 20 carbon atoms, alkyl substituted by alkoxycarbonyl of 2 to 9 carbon atoms, alkenyl of 3 to 18 carbon atoms, cycloalkyl of 5 to 12 carbon atoms, phenylalkyl of 7 to 15 carbon atoms, aryl of 6 to 10 carbon atoms or said aryl substituted by one or two alkyl of 1 to 4 carbon atoms or 1,1,2,2-tetrahydroperfluoroalkyl where the perfluoroalkyl moiety is of 6 to 16 carbon atoms, and
L is alkylene of 1 to 12 carbon atoms, alkylidene of 2 to 12 carbon atoms, benzylidene, p-xylylene, a,a,a',a'-tetramethyl-m-xylylene or cycloalkylidene.
C₁-C₁₈alkyl can be linear or branched. Examples are methyl, ethyl, propyl, isopropyl, butyl, 2-butyl, isobutyl, t-butyl, pentyl, 2-pentyl, hexyl, heptyl, octyl, 2-ethylhexyl, t-octyl, nonyl, decyl, undecyl, dodecyl, tridecyl, tetradecyl, hexadecyl and octadecyl.

### Examples of alkoxy are methoxy, ethoxy, propoxy, isopropoxy, butoxy, isobutoxy, pentoxy, isopentoxy, hexoxy, heptoxy or octoxy.

C₂-C₁₈alkenyl is for example ethenyl, propenyl or butenyl, dodecenyl or octoxenyl.

Cycloalkyl having 5 to 12 carbon atoms is for example cyclopentyl, cyclohexyl and cyclooctyl

Phenylalkyl is for example benzyl.

Preferably the benzotriazole (b1) of formula I, II or III and the benzotriazoles (b2) exhibit enhanced durability and low loss of absorbance when exposed to actinic radiation as witnessed by an absorbance loss of less than 0.5 absorbance units after exposure for 893 hours or less than 0.8 absorbance units after exposure for 1338 hours in a Xenon Arc Weather-Ometer.

Also preferred is a composition wherein the benzotriazole compound is a compound of formula IIA 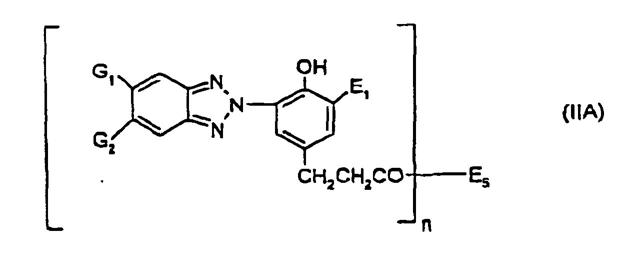 wherein
G₁ is hydrogen,
G₂ is is CF₃- or fluoro,
E₁ is hydrogen, straight or branched alkyl of 1 to 24 carbon atoms or phenylalkyl of 7 to 15 carbon atoms,
E₅ is -OE₆ or -NE₇E₈, or
E₅ is -X-(Z)ₚ-Y-E₁₅
wherein
X is -O- or -N(E₁₆)-,
Y is -O- or -N(E₁₇)-,
Z is C₂-C₁₂-alkylene, C₄-C₁₂-alkylene interrupted by one to three nitrogen atoms, oxygen atoms or a mixture thereof, or is C₃-C₁₂-alkylene, butenylene, butynylene, cyclohexylene or phenylene, each substituted by a hydroxyl group,
m is 0, 1, 2 or 3,
p is 1, or p is also zero when X and Y are -N(E₁₆)- and -N(E₁₇)-, respectively,
E₁₅ is a group -CO-C(E₁₈)=C(H)E₁₉ or, when Y is -N(E₁₇)-, forms together with E₁₇ a group -CO-CH=CH-CO-, wherein E₁₈ is hydrogen or methyl, and E₁₉ is hydrogen, methyl or - CO-X-E₂₀, wherein E₂₀ is hydrogen, C₁-C₁₂-alkyl or a group of the formula.

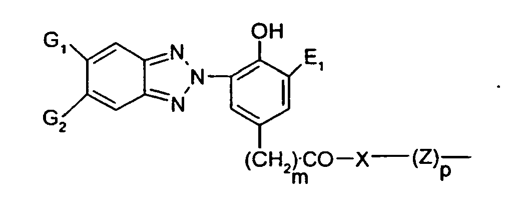

A further preferred composition is wherein the benzotriazole is a compound of formula IIIA 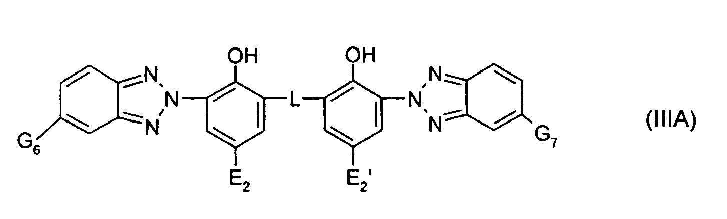 wherein
G₆ is CF₃,
G₇ is hydrogen or CF₃,
E₂ and E₂' are independently straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 3 alkyl of 1 to 4 carbon atoms; and
L is alkylene of 1 to 12 carbon atoms, alkylidene of 2 to 12 carbon atoms, benzylidene, p-xylylene, a,a,a',a'-tetramethyl-m-xylylene or cycloalkylidene.

More prefered is a composition wherein the benzotriazole is a compound of formula I 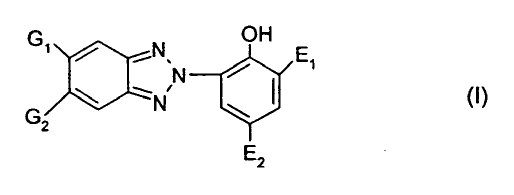 wherein
G₁ is hydrogen,
G₂ is CF₃-,
E₁ is phenylalkyl of 7 to 15 carbon atoms, phenyl, or said phenyl or said phenylalkyl substituted on the phenyl ring by 1 to 4 alkyl of 1 to 4 carbon atoms,
E₂ is straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 3 alkyl of 1 to 4 carbon atoms; or E₂ is said alkyl of 1 to 24 carbon atoms or said alkenyl of 2 to 18 carbon atoms substituted by one or more -OH, -NH₂ or -NHCOE₁₁, or mixtures thereof, or said alkyl or said alkenyl interrupted by one or more -O- and which can be unsubstituted or substituted by one or more -OH; or
is a compound of formula I
wherein,
G₁ is hydrogen,
G₂ is CF₃-,
E₁ is hydrogen, straight or branched alkyl of 1 to 24 carbon atoms or phenylalkyl of 7 to 15 carbon atoms, and
E₂ is as defined above.

Also more preferred is a composition wherein the benzotriazole is a compound of formula IIA 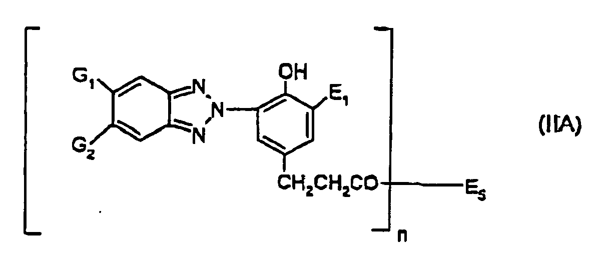 wherein
G₁ is hydrogen,
G₂ is CF₃-,
E₁ is hydrogen, straight or branched alkyl of 1 to 24 carbon atoms or phenylalkyl of 7 to 15 carbon atoms,
E₅ is -OE₈ or -NE₇E₈ where
E₈ is hydrogen, straight or branched chain C₁-C₂₄alkyl which Is unsubstituted or substituted by one or more OH groups, or -OE₆ is -(OCH₂CH₂)_{w}OH or - (OCH₂CH₂)_{w}OE₂₁where w is 1 to 12 and E₂₁ is alkyl of 1 to 12 carbon atoms, and
E₇ and E₈ are independently hydrogen, alkyl of 1 to 18 carbon atoms, straight or branched chain C₃-C₁₈alkyl which is interrupted by -O-, -S- or -NE₁₁-, C₅-C₁₂cycloalkyl, C₆₋C₁₄aryl or C₁-C₃hydroxylalkyl, or E₇ and E₈ together with the N atom are a pyrrolidine, piperidine, piperazine or morpholine ring.

Particularly preferred is a composition wherein the benzotriazole is a compound of formula IIIA 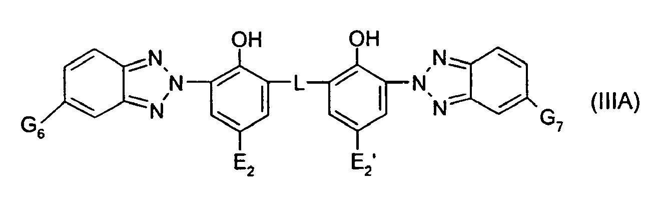 wherein
G₆ is CF₃,
G₇ is hydrogen or CF₃,
E₂ and E₂' are independently straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 3 alkyl of 1 to 4 carbon atoms; and
L is methylene.

Most preferred is a composition wherein the benzotriazole is
(a) 5-trifluoromethyl-2-(2-hydroxy-3-α-cumyl-5-tert-octylphenyl)-2H-benzotriazole;
(b) 5-trifluoromethyl-2-(2-hydroxy-5-tert-octylphenyl)-2H-benzotriazole;
(c) 5-trifluoromethyl-2-(2-hydroxy-3,5-di-tert-octylphenyl)-2H-benzotriazole;
(d) 2,2'-methylene-bis[6-(5-trifluoromethyl-2H-benzotriazol-2-yl)-4-tert-octyl phenol];
(e) methylene-2-[4-tert-octyl-6-(2H-benzotriazol-2-yl)phenol]2'-[4-tert-octyl-6-(5-trifluoromethyl-2H-benzotriazol-2-yl)phenol];
(f) 3-(5-trifluoromethyl-2H-benzotriazol-2-yl)-5-tert-butyl-4-hydroxyhydrocinnamic acid;
(g) methyl 3-(5-trifluoromethyl-2H-benzotriazol-2-yl)-5-tert-butyl-4-hydroxyhydro cinnamate;
(h) isooctyl 3-(5-trifluoromethyl-2H-benzotriazol-2-yl)-5-tert-butyl-4-hydroxyhydro cinnamate;
(i) 5-trifluoromethyl-2-[2-hydroxy-5-(3-hydroxypropyl)phenyl]-2H-benzotriazole;
(j) 5-butylsulfonyl-2-(2-hydroxy-3-α-cumyl-5-tert-octylphenyl)-2H-benzotriazole;
(k) 5-octylsulfonyl-2-(2-hydroxy-3,5-di-α-cumylphenyl)-2H-benzotriazole;
(l) 5-dodecylsulfonyl-2-(2-hydroxy-3,5-di-tert-butylphenyl)-2H-benzotriazole;
(m) 5-octylsulfonyl-2-(2-hydroxy-3,5-di-tert-octylphenyl)-2H-benzotriazole;
(n) 5-trifluoromethyl-2-(2-hydroxy-3-α-cumyl-5-tert-butylphenyl)-2H-benzotriazole;
(o) 5-trifluoromethyl-2-(2-hydroxy-3-α-cumyl-5-nonylphenyl)-2H-benzotriazole;
(p) 5-trifluoromethyl-2-[2-hydroxy-3-α-cumyl-5-(2-hydroxyethyl)phenyl]-2H-benzo triazole;
(q) 5-trifluoromethyl-2-[2-hydroxy-3-α-cumyl-5-(3-hydroxypropyl)phenyl]-2H-benzo triazole;
(r) 5-trifluoromethyl-2-(2-hydroxy-3,5-di-tert-amylphenyl)-2H-benzotriazole;
(s) 5-trifluoromethyl-2-(2-hydroxy-3,5-di-tert-butylphenyl)-2H-benzotriazole;
(t) 5-trifluoromethyl-2-(2-hydroxy-3-dodecyl-5-methylphenyl)-2H-benzotriazole;
(u) 5-trifluoromethyl-2-[2-hydroxy-3-tert-butyl-5-(3-hydroxypropyl)phenyl)-2H-benzotriazole;
(v) 5-trifluoromethyl-2-[2-hydroxy-3-tert-butyl-5-(2-hydroxyethyl)phenyl]-2H-benzo triazole;
(w) 5-trifluoromethyl-2-[2-hydroxy-5-(2-hydroxyethyl)phenyl]-2H-benzotriazole;
(x) 5-trifluoromethyl-2-(2-hydroxy-3,5-di-α-cumylphenyl)-2H-benzotriazole;
(y) 5-fluoro-2-(2-hydroxy-3,5-di-α-cumylphenyl)-2H-benzotriazole;
(z) 5-butylsulfonyl-2-(2-hydroxy-3,5-di-α-cumylphenyl)-2H-benzotriazole;
(aa) 5-butylsulfonyl-2-(2-hydroxy-3,5-di-tert-butylphenyl)-2H-benzotriazole;
(bb) 5-butylsulfonyl-2-(2-hydroxy-3,5-di-tert-octylphenyl)-2H-benzotriazole;
(cc) 5-phenylsulfonyl-2-(2-hydroxy-3,5-di-tert-butylphenyl)-2H-benzotriazole; or
(dd) 5-chloro-2-(2-hydroxy-3,5-di-α-cumylphenyl)-2H-benzotriazole.

Particularly preferred is a composition wherein the benzotriazole is
(a) 5-trifluoromethyl-2-(2-hydroxy-3-α-cumyl-5-tert-octylphenyl)-2H-benzotriazole;
(b) 5-trifluoromethyl-2-(2-hydroxy-5-tert-octylphenyl)-2H-benzotriazole;
(c) 5-trifluoromethyl-2-(2-hydroxy-3,5-di-tert-octylphenyl)-2H-benzotriazole;
(g) methyl 3-(5-trifluoromethyl-2H-benzotriazol-2-yl)-5-tert-butyl-4-hydroxy hydrocinnamate;
(j) 5-butylsulfonyl-2-(2-hydroxy-3-α-cumyl-5-tert-octylphenyl)-2H-benzotriazole;
(n) 5-trifluoromethyl-2-(2-hydroxy-3-α-cumyl-5-tert-butylphenyl)-2H-benzotriazole;
(s) 5-trifluoromethyl-2-(2-hydroxy-3,5-di-tert-butylphenyl)-2H-benzotriazole;
(x) 5-trifluoromethyl-2-(2-hydroxy-3,5-di-α-cumylphenyl)-2H-benzotriazole;
(aa) 5-butylsulfonyl-2-(2-hydroxy-3,5-di-tert-butylphenyl)-2H-benzotriazole; or
(cc) 5-phenylsulfonyl-2-(2-hydroxy-3,5-di-tert-butylphenyl)-2H-benzotriazole.

Preferably the amount of benzotriazole of component (b1) or (b2) is from 0.1 to 20%, more preferably from 1 to 10% and most preferably from 2 to 5% by weight based on the adhesive composition.

Preferably the relative amount of (b1) to (b2) by weight is from 75:25 to 25:75, more preferably 50:50.

Preferably the adhesive of component (a) is selected from the group consisting of the pressure sensitive adhesives, the rubber-based adhesives, the solvent or emulsion based adhesives, the hot melt adhesives and natural-product based adhesives.

Suitable resins are selected from the group consisting of the polyurethanes, polyacrylics, epoxys, phenolics, polyimides, poly(vinyl butyral), polycyanoacrylates, polyacrylates, ethylene/acrylic acid copolymers and their salts (ionomers), silicon polymers, poly(ethylene/vinyl acetate), atatic polypropylene, styrene-diene copolymers, polyamides, hydroxyl-terminated polybutadiene, polychloroprene, thermosets, urea-formaldehyde polymers, poly(vinyl acetate), carboxylated styrene/butadiene copolymers and poly(vinyl alcohol).

Preferably the adhesive composition is present in a laminated or multilayer construction.

Preferably the laminated or multilayer construction is selected from the group consisting of
(a) retroreflective sheets and signs and conformable marking sheets;
(b) solar control films of various construction;
(c) corrosion resistant silver mirrors and solar reflectors;
(d) reflective print labels;
(e) UV absorbing glasses and glass coatings;
(f) electrochromic devices;
(g) films/glazings;
(h) windscreens and intermediate layers; and
(i) optical films.

More preferably the laminated or multilayer construction is selected from the group consisting of
(a) retroreflective sheets and signs and conformable marking sheets;
(b) solar control films of various construction;
(e) UV absorbing glasses and glass coatings;
(g) films/glazings; and
(h) windscreens and intermediate layers.
Most preferably the laminated or multilayer construction is selected from the group consisting of
(b) a solar control films of various construction; and
(h) windscreens and intermediate layers.

Preference is given to a composition wherein the adhesive of component (a) is a resin selected from the group consisting of
(i) polyurethanes;
(ii) polyacrylics;
(iii) epoxys;
(iv) phenolics;
(v) polyimides;
(vi) poly(vinyl butyral);
(vii) polycyanoacrylates;
(viii) polyacrylates;
(ix) ethylene/acrylic acid copolymers and their salts (ionomers);
(x) silicon polymers;
(xi) poly(ethylene/vinyl acetate);
(xii) atatic polypropylene;
(xiii) styrene-diene copolymers;
(xiv) polyamides;
(xv) hydroxyl-terminated polybutadiene;
(xvi) polychloroprene;
(xvii) poly(vinyl acetate);
(xviii) carboxylated styrene/butadiene copolymers;
(xix) poly(vinyl alcohol); and
(xx) polyesters.

More preferably the adhesive is a resin selected from the group consisting of the polyurethanes, polyacrylics, epoxy resins, phenolics, polyimides, poly(vinyl butyral), poly(vinyl alcohol), ethylene/vinyl acetate copolymers, polyolefins, natural rubber, styrene/butadiene rubber, polyacrylates, thermosets, vinyl polymers, urea-formaldehyde polymers, styrene polymers and polycyanoacrylates.

Another preferred embodiment is wherein the adhesive of component (a) is a resin selection from the group consisting of poly(vinyl butyral), ethylene/vinyl acetate copolymers, polyacrylics, polyacrylates, natural rubber, polycyanoacrylates, poly(vinyl alcohol), styrene/butadiene rubber, phenolics, urea-formaldehyde polymers, epoxy resins, vinyl polymers, polyurethanes and styrene block copolymers.

Particularly preferred is a composition wherein the adhesive of component (a) is a resin selected from the group consisting of
poly(vinyl butyral), ethylene/vinyl acetate copolymers, polyacrylics, polyacrylates, natural rubber, polycyanoacrylates, poly(vinyl alcohol), styrene/butadiene rubber, phenolics, vinyl polymers, polyurethanes and styrene block copolymers.

Most preferred is a composition wherein the adhesive of component (a) is a polyacrylate.

The instant adhesive stabilized by a benzotriazole may also optionally contain from 0.01 to 10% by weight; preferably from 0.025 to 5% by weight, and most preferably from 0.1 to 3% by weight of additional coadditives such as antioxidants, other UV absorbers, hindered amines, phosphites or phosphonites, hydroxylamines, nitrones, benzofuran-2-ones, thiosynergists, polyamide stabilizers, metal stearates, nucleating agents, fillers, reinforcing agents, lubricants, emulsifiers, dyes, pigments, optical brighteners, flame retardants, antistatic agents, blowing agents and the like.

The stabilizers of the instant invention may readily be incorporated into the adhesive compositions by conventional techniques, at any convenient stage prior to the manufacture of shaped articles therefrom. For example, the stabilizer may be mixed with the polymer in dry powder form, or a suspension or emulsion of the stabilizer may be mixed with a solution, suspension, or emulsion of the polymer.

Examples of coadditives are given below.

### 1. Antioxidants

### 1.1. Alkylated monophenols, for example,

2,6-di-tert-butyl-4-methylphenol
2-tert-butyl-4,6-dimethylphenol
2,6-di-tert-butyl-4-ethylphenol
2,6-di-tert-butyl-4-n-butylphenol
2,6-di-tert-butyl-4-i-butylphenol
2,6-di-cyclopentyl-4-methylphenol
2-(α-methylcyclohexyl)-4,6-dimethylphenol
2,6-di-octadecyl-4-methylphenol
2,4,6-tri-cyclohexylphenol
2,6-di-tert-butyl-4-methoxymethylphenol

### 1.2. Alkylated hydroguinones, for example,

2,6-di-tert-butyl-4-methoxyphenol
2,5-di-tert-butyl-hydroquinone
2,5-di-tert-amyl-hydroquinone
2,6-diphenyl-4-octadecyloxyphenol

### 1.3. Hydroxylated thiodiphenyl ethers, for example,

2,2'-thio-bis-(6-tert-butyl-4-methylphenol)
2,2'-thio-bis-(4-octylphenol)
4,4'-thio-bis-(6-tert-butyl-3-methylphenol)
4,4'-thio-bis-(6-tert-butyl-2-methylphenol)

### 1.4. Alkylidene-bisphenols, for example,

2,2'-methylene-bis-(6-tert-butyl-4-methylphenol)
2,2'-methylene-bis-(6-tert-butyl-4-ethylphenol)
2,2'-methylene-bis-[4-methyl-6-(a-methylcyclohexyl)-phenol]
2,2'-methylene-bis-(4-methyl-6-cyclohexylphenol)
2,2'-methylene-bis-(6-nonyl-4-methylphenol)
2,2'-methylene-bis-[6-(α-methylbenzyl)-4-nonylphenol]
2,2'-methylene-bis-[6-(α,α-dimethylbenzyl)-4-nonylphenol]
2,2'-methylene-bis-(4,6-di-tert-butylphenol)
2,2'-ethylidene-bis-(4,6-di-tert-butylphenol)
2,2'-ethylidene-bis-(6-tert-butyl-4-isobutylphenol)
4,4'-methylene-bis-(2,6-di-tert-butylphenol)
4,4'-methylene-bis-(6-tert-butyl-2-methylphenol)
1,1-bis-(5-tert-butyl-4-hydroxy-2-methylphenyl)-butane
2,6-di-(3-tert-butyl-5-methyl-2-hydroxybenzyl)-4-methylphenol
1,1,3-tris-(5-tert-butyl-4-hydroxy-2-methylphenyl)-butane
1,1-bis-(5-tert-butyl-4-hydroxy-2-methylphenyl)-3-n-dodecylmercaptobutane ethyleneglycol bis-[3,3-bis-(3'-tert-butyl-4'-hydroxyphenyl)-butyrate]
di-(3-tert-butyl-4-hydroxy-5-methylphenyl)-dicyclopentadiene
di-[2-(3'-tert-butyl-2'-hydroxy-5'-methyl-benzyl)-6-tert-butyl-4-methylphenyl] terephthalate.

### 1.5. Benzyl compounds, for example,

1,3,5-tri-(3,5-di-tert-butyl-4-hydroxybenzyl)-2,4,6-trimethylbenzene
di-(3,5-di-tert-butyl-4-hydroxybenzyl) sulfide
3,5-di-tert-butyl-4-hydroxybenzyl-mercapto-acetic acid isooctyl ester
bis-(4-tert-butyl-3-hydroxy-2,6-dimethylbenzyl)dithiol terephthalate
1,3,5-tris-(3,5-di-tert-butyl-4-hydroxybenzyl) isocyanurate
1,3,5-tris-(4-tert-butyl-3-hydroxy-2,6-dimethylbenzyl) isocyanurate
3,5-di-tert-butyl-4-hydroxybenzyl-phosphoric acid dioctadecyl ester
3,5-di-tert-butyl-4-hydroxybenzyl-phosphoric acid monoethyl ester, calcium-salt

### 1.6. Acylaminophenols, for example,

4-hydroxy-lauric acid anilide
4-hydroxy-stearic acid anilide
2,4-bis-octylmercapto-6-(3,5-tert-butyl-4-hydroxyanilino)-s-triazine
octyl-N-(3,5-di-tert-butyl-4-hydroxyphenyl)-carbamate

### 1.7. Esters of b-(3,5-di-tert-butyl-4-hydroxyphenyl)-propionic acid with monohydric or polyhydric alcohols, for example,

| | |
|---|---|
| methanol | diethylene glycol |
| octadecanol | triethylene glycol |
| 1,6-hexanediol | pentaerythritol |
| neopentyl glycol | tris-hydroxyethyl isocyanurate |
| thiodiethylene glycol | di-hydroxyethyl oxalic acid diamide |
| triethanolamine | triisopropanolamine |

### 1.8. Esters of b-(5-tert-butyl-4-hydroxy-3-methylphenyl)-propionic acid with monohydric or polyhydric alcohols, for example,

| | |
|---|---|
| methanol | diethylene glycol |
| octadecanol | triethylene glycol |
| 1,6-hexanediol | pentaerythritol |
| neopentyl glycol | tris-hydroxyethyl isocyanurate |
| thiodiethylene glycol | di-hydroxyethyl oxalic acid diamide |
| triethanolamine | triisopropanolamine |

### 1.9. Amides of b-(3,5-di-tert-butyl-4-hydroxyphenyl)-propionic acid for example,

N,N'-di-(3,5-di-tert-butyl-4-hydroxyphenylpropionyl)-hexamethylenediamine
N,N'-di-(3,5-di-tert-butyl-4-hydroxyphenylpropionyl)-trimethylenediamine
N,N'-di-(3,5-di-tert-butyl-4-hydroxyphenylpropionyl)-hydrazine

### 1.10 Diarylamines, for example,

diphenylamine, N-phenyl-1-naphthylamine, N-(4-tert-octylphenyl)-1-naphthylamine, 4,4'-di-tert-octyl-diphenylamine, reaction product of N-phenylbenzylamine and 2,4,4-trimethylpentene, reaction product of diphenylamine and 2,4,4-trimethylpentene, reaction product of N-phenyl-1-naphthylamine and 2,4,4-trimethylpentene.

### 2. UV absorbers and light stabilizers

2.1. 2-(2'-Hydroxyphenyl)-benzotriazoles, for example, the 5'-methyl-, 3',5'-di-tert-butyl-, 5'-tert-butyl-, 5'-(1,1,3,3-tetramethylbutyl)-, 5-chloro-3',5'-di-tert-butyl-, 5-chloro-3'-tert-butyl-5'-methyl-, 3'-sec-butyl-5'-tert-butyl-, 4'-octoxy, 3',5'-di-tert-amyl-, 3',5'-bis-(α,α-dimethylbenzyl), 3'-tert-butyl-5'-(2-(omega-hydroxy-octa-(ethyleneoxy)carbonyl-ethyl)-, 3'-dodecyl-5'-methyl-, and 3'-tert-butyl-5'-(2-octyloxycarbonyl)ethyl-, and dodecylated-5'-methyl derivatives.

2.2. 2-Hydroxy-benzophenones, for example, the 4-hydroxy-, 4-methoxy-, 4-octoxy, 4-decyloxy-, 4-dodecyloxy-, 4-benzyloxy, 4,2',4'-trihydroxy- and 2'-hydroxy-4,4'-dimethoxy derivatives.

2.3. Esters of optionally substituted benzoic acids for example, phenyl salicylate, 4-tert-butylphenyl salicylate, octylphenyl salicylate, dibenzoylresorcinol, bis-(4-tert-butylbenzoyl)-resorcinol, benzoylresorcinol, 3,5-di-tert-butyl-4-hydroxybenzoic acid 2,4-di-tert-butylphenyl ester and 3,5-di-tert-butyl-4-hydroxybenzoic acid hexadecyl ester.

2.4. Acrylates, for example, α-cyano-b,b-diphenylacrylic acid ethyl ester or isooctyl ester, α-carbomethoxy-cinnamic acid methyl ester, α-cyano-β-methyl-p-methoxy-cinnamic acid methyl ester or butyl ester, α-carbomethoxy-p-methoxy-cinnamic acid methyl ester, N-(b-carbomethoxy-b-cyanovinyl)-2-methyl-indoline.

2.5. Nickel compounds, for example, nickel complexes of 2,2'-thio-bis-[4-(1,1,3,3-tetramethylbutyl)-phenol], such as the 1:1 or 1:2 complex, optionally with additional ligands such as n-butylamine, triethanolamine or N-cyclohexyl-diethanolamine, nickel dibutyldithiocarbamate, nickel salts of 4-hydroxy-3,5-di-tert-butylbenzylphosphonic acid monoalkyl esters, such as of the methyl, ethyl or butyl ester, nickel complexes of ketoximes such as of 2-hydroxy-4-methyl-phenyl undecyl ketoxime, nickel complexes of 1-phenyl-4-lauroyl-5-hydroxy-pyrazole, optionally with additional ligands.

2.6. Sterically hindered amines, for example bis-(2,2,6,6-tetramethylpiperidyl) sebacate, bis-(1,2,2,6,6-pentamethylpiperidyl) sebacate, n-butyl-3,5-di-tert.butyl-4-hydroxybenzyl malonic acid bis-(1,2,2,6,6-pentanemethylpiperidyl)ester, condensation product of 1-hydroxyethyl-2,2,6,6-tetramethyl-4-hydroxypiperidine and succinic acid, condensation product of N,N'-(2,2,6,6-tetramethylpiperidyl)-hexamethylenediamine and 4-tert-octylamino-2,6-dichloro-s-triazine, tris-(2,2,6,6-tetramethylpiperidyl)-nitrilotriacetate, tetrakis-(2,2,6,6-tetramethyl-4-piperidyl) 1,2,3,4-butanetetracarboxylate, 1,1'(1,2-ethanediyl)-bis-(3,3,5,5-tetramethylpiperazinone), bis(1-octyloxy-2,2,6,6-tetramethylpiperidin-4-yl) sebacate.

2.7. Oxalic acid diamides, for example, 4,4'-di-octyloxy-oxanilide, 2,2'-di-octyloxy-5,5'-di-tert-butyl-oxanilide, 2,2'-di-dodecyloxy-5,5'-di-tert-butyl-oxanilide, 2-ethoxy-2'-ethyl-oxanilide, N,N'-bis (3-dimethylaminopropyl)-oxalamide, 2-ethoxy-5-tert-butyl-2'-ethyloxanilide and its mixture with 2-ethoxy-2'-ethyl-5,4'-di-tert-butyloxanilide and mixtures of ortho- and paramethoxy- as well as of o- and p-ethoxy-disubstituted oxanilides.

2.8. Hydroxyphenyl-s-triazines, for example 2,6-bis-(2,4-dimethylphenyl)-4-(2-hydroxy-4-octyloxyphenyl)-s-triazine; 2,6-bis-(2,4-dimethylphenyl)-4-(2,4-dihydroxyphenyl)-s-triazine; 2,4-bis(2,4-dihydroxyphenyl)-6-(4-chlorophenyl)-s-triazine; 2,4-bis[2-hydroxy-4-(2-hydroxyethoxy)phenyl]-6-(4-chlorophenyl)-s-triazine; 2,4-bis[2-hydroxy-4-(2-hydroxy-4-(2-hydroxyethoxy)phenyl]-6-(2,4-dimethylphenyl)-s-triazine; 2,4-bis[2-hydroxy-4-(2-hydroxyethoxy)-phenyl]-6-(4-bromophenyl)-s-triazine; 2,4-bis[2-hydroxy-4-(2-acetoxyethoxy)phenyl]-6-(4-chlorophenyl)-s-triazine, 2,4-bis(2,4-dihydroxyphenyl)-6-(2,4-dimethylphenyl)-s-triazine.

3. Metal deactivators, for example, N,N'-diphenyloxalic acid diamide, N-salicylal-N'-salicyloylhydrazine, N,N'-bis-salicyloylhydrazine, N,N'-bis-(3,5-di-tert-butyl-4-hydroxyphenylpropionyl)-hydrazine, 3-salicyloyfamino-1,2,4-triazole, bis-benzylidene-oxalic acid dihydrazide.

4. Phosphites and phosphonites, for example, triphenyl phosphite, diphenylalkyl phosphites, phenyldialkyl phosphites, tri-(nonylphenyl) phosphite, trilauryl phosphite, trioctadecyl phosphite, di-stearyl-pentaerythritol diphosphite, tris-(2,4-di-tert-butylphenyl) phosphite, diisodecylpentaerythritol diphosphite, di-(2,4,6-tri-tert-butylphenyl)-pentaerythritol diphosphite, di-(2,4-di-tert-butyl-6-methylphenyl)-pentaerythritol diphosphite, di-(2,4-di-tert-butylphenyl)pentaerythritol diphosphite, tristearyl-sorbitol triphosphite, tetrakis-(2,4-di-tert-butylphenyl) 4,4'-diphenylylenediphosphonite.

5. Compounds which destroy peroxide, for example, esters of b-thiodipropionic acid, for example the lauryl, stearyl, myristyl or tridecyl esters, mercapto-benzimidazole or the zinc salt of 2-mercaptobenzimidazole, zinc dibutyl-dithiocarbamate, dioctadecyl disulfide, pentaerythritol tetrakis-(b-dodecylmercapto)-propionate.

6. Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

7. Nitrones, for example, N-benzyl-alpha-phenyl nitrone, N-ethyl-alpha-methyl nitrone, N-octyl-alpha-heptyl nitrone, N-lauryl-alpha-undecyl nitrone, N-tetradecyl-alpha-tridecyl nitrone, N-hexadecyl-alpha-pentadecyl nitrone, N-octadecyl-alpha-heptadecylnitrone, N-hexadecyl-alpha-heptadecyl nitrone, N-octadecyl-alpha-pentadecyl nitrone, N-heptadecyl-alpha-heptadecyl nitrone, N-octadecyl-alpha-hexadecyl nitrone, nitrone derived from N,N-dialkylhydroxylamine derived from hydrogenated tallow amine.

8. Polyamide stabilizers, for example copper salts in combination with iodides and/or phosphorus compounds and salts of divalent manganese.

9. Basic co-stabilizers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example Ca stearate, Zn stearate, Mg stearate, Na ricinoleate and K palmitate, antimony pyrocatecholate or zinc pyrocatecholate.

10. Nucleating agents, for example, 4-tert-butyl-benzoic acid, adipic acid, diphenylacetic acid.

11. Fillers and reinforcing agents, for example, calcium carbonate, silicates, glass fibers, asbestos, talc, kaolin, mica, barium sulfate, metal oxides and hydroxides, carbon black, graphite.

12. Other additives, for example, plasticizers, lubricants, emulsifiers, pigments, optical brighteners, flameproofing agents, anti-static agents, blowing agents and thiosynergists such as dilauryl thiodipropionate or distearyl thiodipropionate.

13. Benzofuranones and indolinones, for example those disclosed in US-A-4325863, US-A-4338244 or US-A-5175312, or 3-[4-(2-acetoxyethoxy)phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)-benzofuran-2-one, 3-(4-acetoxy-3,5-dimethylphenyl)-5,7-di-tert-butyl-benzofuran-2-one, 3-(3,5-dimethyl-4-pivaioyloxyphenyl)-5,7-di-tert-butyl-benzofuran-2-one.

The co-stabilizers, with the exception of the benzofuranones listed under 13, are added for example in concentrations of 0.01 to 10%, relative to the total weight of the material to be stabilized.

Further preferred compositions comprise, in addition to components (a) and (b) further additives, in particular phenolic antioxidants, light stabilizers or processing stabilizers.

Particularly preferred additives are phenolic antioxidants (item 1 of the list), sterically hindered amines (item 2.6 of the list), phosphites and phosphonites (item 4 of the list), UV absorbers (item 2 of the list) and peroxide-destroying compounds (item 5 of the list).

Additional additives (stabilizers) which are also particularly preferred are benzofuran-2-ones, such as described, for example, in US-A-4 325 863, US-A-4,338 244 or US-A-5175312.

The phenolic antioxidant of particular interest is selected from the group consisting of n-octadecyl 3,5-di-tert-butyl-4-hydroxyhydrocinnamate, neopentanetetrayl tetrakis(3,5-di-tert-butyl-4-hydroxyhydrocinammate), di-n-octadecyl 3,5-di-tert-butyl-4-hydroxybenzylphosphonate, 1,3,5-tris(3,5-di-tert-butyl-4-hydroxybenzyl)isocyanurate, thiodiethylene bis(3,5-di-tert-butyl-4-hydroxyhydrocinnamate), 1,3,5-trimethyl-2,4,6-tris(3,5-di-tert-butyl-4-hydroxybenzyl)benzene, 3,6-dioxaoctamethylene bis(3-methyl-5-tert-butyl-4-hydroxyhydrocinnamate), 2,6-di-tert-butyl-p-cresol, 2,2'-ethylidene-bis(4,6-di-tertbutylphenol), 1,3,5-tris(2,6-dimethyl-4-tert-butyl-3-hydroxybenzyl)isocyanurate, 1,1,3,-tris(2-methyl-4-hydroxy-5-tert-butylphenyl)butane, 1,3,5-tris[2-(3,5-di-tert-butyl-4-hydroxyhydrocinnamoyloxy)ethyl]isocyanur ate, 3,5-di-(3,5-di-tert-butyl-4-hydroxybenzyl)mesitol, hexamethylene bis(3,5-di-tert-butyl-4-hydroxyhydrocinnamate), 1-(3,5-di-tert-butyl-4-hydroxyanilino)-3,5-di(octylthio)-s-triazine, N,N'-hexamethylene-bis(3,5-di-tert-butyl-4-hydroxyhydrocinnamamide), calcium bis(ethyl 3,5-di-tert-butyl-4-hydroxybenzylphosphonate), ethylene bis[3,3-di(3-tert-butyl-4-hydroxyphenyl)butyrate], octyl 3,5-di-tert-butyl-4-hydroxybenzylmercaptoacetate, bis(3,5-di-tert-butyl-4-hydroxyhydrocinnamoyl)hydrazide, N,N'-bis[2-(3,5-di-tert-butyl-4-hydroxyhydrocinnamoyloxy)-eth yl]-oxamide, 2,4-bis(octylthiomethyl)-6-methylphenol, and 2,4-bis(octylthiomethyl)-6-tert-butylphenol.

A most preferred phenolic antioxidant is neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, 2,6-di-tert-butyl-p-cresol, 2,2'-ethylidene-bis(4,6-di-tertbutylphenol), 2,4-bis(octylthiomethyl)-6-methylphenol or 2,4-bis(octylthiomethyl)-6-tert-butylphenol.

The hindered amine compound of particular interest is selected from the group consisting of bis(2,2,6,6-tetramethylpiperidin-4-yl) sebacate,
bis(1,2,2,6,6-pentamethylpiperidin-4-yl) sebacate,
di(1,2,2,6,6-pentamethylpiperidin-4-yl) (3,5-di-tert-butyl-4-hydroxybenzyl)butylmalonate, 4-benzoyl-2,2,6,6-tetramethylpiperidine, 4-stearyloxy-2,2,6,6-tetramethylpiperidine, 3-n-octyl-7,7,9,9-tetramethyl-1,3,8-triaza-spiro[4.5]decane-2,4-dio ne,
tris(2,2,6,6-tetramethylpiperidin-4-yl) nitrilotriacetate,
1,2-bis(2,2,6,6-tetramethyl-3-oxopiperazin-4-yl)ethane, 2,2,4,4-tetramethyl-7-oxa-3,20-diaza-21-oxodispiro[5.1.11.2] heneicosane, polycondensation product of 2,4-dichloro-6-tert-octylamino-s-triazine and 4,4'-hexamethylenebis(amino-2,2,6,6-tetramethylpiperidine), polycondensation product of 1-(2-hydroxyethyl)-2,2,6,6-tetramethyl-4-hydroxypiperidine and succinic acid, polycondensation product of 4,4'-hexamethylenebis-(amino-2,2,6,6-tetramethylpiperidine) and 1,2-dibromoethane, tetrakis(2,2,6,6-tetramethylpiperidin-4-yl) 1,2,3,4-butanetetracarboxylate, tetrakis(1,2,2,6,6-pentamethylpiperidin-4-yl) 1,2,3,4-butanetetracarboxylate,
polycondensation product of 2,4-dichloro-6-morpholino-s-triazine and 4,4'-hexamethylenebis(amino-2,2,6,6-tetramethylpiperidine), N,N',N",N'"-tetrakis[(4,6-bis(butyl-1,2,2,6,6-pentamethylpiperidin-4-yl)-amino-s-triazin-2-yl]-1,10-diamino-4,7-diazadecane, mixed [2,2,6,6-tetramethylpiperidin-4-yl/b,b,b',b'-tetramethyl-3,9-(2,4,8 ,10-tetraoxaspiro[5.5]-undecane) diethyl] 1,2,3,4-butanetetracarboxylate, mixed [1,2,2,6,6-pentamethylpiperidin-4-yl/b,b,b',b'-tetramethyl-3,9-(2,4,8,10-tetraoxaspiro[5. 5]undecane)diethyl]1,2,3,4-butanetetracarboxylate, octamethylene bis(2,2,6,6-tetramethylpiperidin-4-carboxylate), 4,4'-ethylenebis(2,2,6,6-tetramethylpiperazin-3-one), N-2,2,6,6-tetramethylpiperidin-4-yl-n-dodecylsuccinimide, N-1,2,2,6,6-pentamethylpiperidin-4-yl-n-dodecylsuccinimide, N-1-acetyl-2,2,6,6-tetramethylpiperidin-4-yln-dodecylsuccinimide, 1-acetyl3-dodecyl-7,7,9,9-tetramethyl-1,3,8-triazaspiro[4.5]decane-2,4-dione, di-(1-octyloxy-2,2,6,6-tetramethylpiperidin-4-yl) sebacate, di-(1-cyclohexyfoxy-2,2,6,6-tetramethylpiperidin-4-yl) succinate, 1-octyloxy-2,2,6,6-tetramethyl-4-hydroxy-piperidine, poly-{[6-tert-octylamino-s-triazin-2,4-diyl][2-(1-cyclohexyloxy-2,2,6,6-tetramethylpiperidin-4-yl)imino-hexamethylene-[4-(1-cyclohexyloxy-2,2,6,6-tetramethylpiperidin-4-yl)imino], 2,4,6-tris[N-(1-cyclohexyloxy-2,2,6,6-tetramethylpiperidin-4-yl)-n-butylamino]-s-triazine, 2-(2-hydroxyethyl)amino-4,6-bis[N-(1-cyclohexyloxy-2,2,6,6-tetramethylpiperidin-4-yl)-n-butylamino]-s-triazine, 1,2-bis(3,3,5,5-tetramethylpiperazin-2-on-1-yl)ethane,
1,3,5-tris{N-cyclohexyl-N-[2-(3,3,5,5-tetramethylpiperazin-2-on-1-yl)ethyl]amino}-s-triazine,
1,3,5-tris{N-cyclohexyl-N-[2-(3,3,4,5,5-pentaamethylpiperazin-2-on-1-yl)ethyl]amino}-s-triazine, reaction of 2-4 equivalents of 2,4-bis[(1-cyclohexyloxy-2,2,6,6-tetramethylpiperidin-4-yl)butylamino]-6-chloro-s-triazine with 1 equivalent of N,N'-bis(3-aminopropyl)ethylenediamine, bis[1-(2-hydroxy-2-methylpropoxy)-2,2,6,6-tetramethylpiperidin-4-yl] sebacate, mixture of bis[1-(2-hydroxy-2-methylpropoxy)-2,2,6,6-tetramethylpiperidin-4-yl] glutarate and bis[1-(2-hydroxy-2-methylpropoxy)-2,2,6,6-tetramethylpiperidin-4-yl] adipate, 4-hydroxy-1-(2-hydroxy-2-methylpropoxy)-2,2,6,6-tetramethylpiperidine and 4-octadecyloxy-1-(2-hydroxy-2-methylpropoxy)-2,2,6,6-tetramethylpiperidine.

A most preferred hindered amine compound is bis(2,2,6,6-tetramethylpiperidin-4-yl) sebacate, bis(1,2,2,6,6-pentamethylpiperidin-4-yl) sebacate, di(1,2,2,6,6-pentamethylpiperidin-4-yl) (3,5-di-tert-butyl-4-hydroxybenzyl)butylmalonate, the polycondensation product of 1-(2-hydroxyethyl)-2,2,6,6-tetramethyl-4-hydroxypiperidine and succinic acid, the polycondensation product of 2,4-dichloro-6-tert-octylamino-s-triazine and 4,4'-hexamethylenebis(amino-2,2,6,6-tetramethylpiperidine), N,N',N",N"'-tetrakis[(4,6-bis(butyl-(1,2,2,6,6-pentamethylpiperidin-4-yl)amino)- s-triazine-2-yl]-1,10-diamino-4,7-diazadecane. di-(1-octyloxy-2,2,6,6-tetramethylpiperidin-4-yl) sebacate, di-(1-cyclohexyloxy-2,2,6,6-tetramethylpiperidin-4-yl) succinate, 1-octyloxy-2,2,6,6-tetramethyl-4-hydroxypiperidine, poly-{[6-tert-octylamino-s-triazin-2,4-diyl][2-(1-cyclohexyloxy-2,2,6,6-tetramethylpiperidin-4-yl)imino-hexamethylene-[4-(1-cyclohexyloxy-2,2,6,6-tetramethylpiperidin-4-yl)imino], 2,4,6-tris[N-(1-cyclohexyloxy-2,2,6,6-tetramethylpiperidin-4-yl)-n-butylamino]-s-triazine, 2-(2-hydroxyethyl)amino-4,6-bis[N-(1-cyclohexyloxy-2,2,6,6-tetramethylpiperidin-4-yl)-n-butylamino]-s-triazine, 1,2-bis(3,3,5,5-tetramethylpiperazin-2-on-1-yl)ethane, 1,3,5-tris{N-cyclohexyl-N-[2-(3,3,5,5-tetramethylpiperazin-2-on-1-yl)ethyl]amino}-s-triazine, 1,3,5-tris{N-cyclohexyl-N-[2-(3,3,4,5,5-pentaamethylpiperazin-2-on-1-yl)ethyl]amino}-s-triazine, reaction of 2-4 equivalents of 2,4-bis[(1-cyclohexyloxy-2,2,6,6-tetramethylpiperidin-4-yl)butylamino]-6-chloro-s-triazine with 1 equivalent of N,N'-bis(3-aminopropyl)ethylenediamine, bis[1-(2-hydroxy-2-methylpropoxy)-2,2,6,6-tetramethylpiperidin-4-yl] sebacate, mixture of bis[1-(2-hydroxy-2-methylpropoxy)-2,2,6,6-tetramethylpiperidin-4-yl] glutarate and bis[1-(2-hydroxy-2-methylpropoxy)-2,2,6,6-tetramethylpiperidin-4-yl] adipate, 4-hydroxy-1-(2-hydroxy-2-methylpropoxy)-2,2,6,6-tetramethylpiperidine or 4-octadecyloxy-1-(2-hydroxy-2-methylpropoxy)-2,2,6,6-tetramethylpiperidine.

The instant composition can additionally contain another UV absorber selected from the group consisting of the benzotriazoles, s-triazines, the oxanilides, the hydroxybenzophenones, benzoates and the α-cyanoacrylates.

The following optional components are often also present in adhesive formulations and are presented here for illustrative purposes only and are not meant to limit the total adhesive compositions in any way. These optional components include plasticizers, adhesion promoters, waxes, petroleum waxes, elastomers, tackifier resins, oils, resins, polymers, rosin, modified rosin or rosin derivatives, hydrocarbon resins, terpene resins, paraffin wax, microcrystalline wax, synthetic hard wax and/or polyethylene wax. The amounts of these coadditives are those normally used in adhesive formulations.

Although in the instant invention, the instant benzotriazoles are intended for use in the adhesive and the adhesive layers of the laminated or multilayer articles, it is clear that the same beneficial UV absorption protection would be afforded to the articles if said benzotriazoles are also incorporated into the other layers of the articles, e.g. polymeric films with any dye or pigment present therein, whether by direct incorporation, by coextrusion or by migration from the adhesive layer into said other layer(s).

These polymers are those selected from the group consisting of
(1) polyolefins;
(2) mixtures of polyolefins;
(3) copolymers of monoolefins and diolefins or other vinyl monomers;
(4) polystyrene, poly(p-methylstyrene) or poly(α-methylstyrene);
(5) copolymers of styrene or α-methylstyrene with dienes or acrylic derivative;
(6) graft copolymers of styrene or α-methylstyrene;
(7) halogen containing polymers;
(8) polymers derived from a,b-unsaturated acids and derivatives thereof;
(9) copolymers of monomers of (8) with each other or other unsaturated monomers;
(10) polymers derived from unsaturated alcohols and amines or the acyl derivatives or acetals thereof;
(11) polyacetals such as polyoxymethylene and those polyoxymethylenes which contain ethylene oxide as a comonomer, polyacetals modified with thermoplastic polyurethanes, acrylates or MBS;
(12) polyurethanes;
(13) polyamides and copolyamides from diamines and dicarboxylic acids and/or from aminocarboxylic acids or the corresponding lactams;
(14) polyureas or polyimides;
(15) polyesters derived from dicarboxylic acids and diols and/or from hydroxycarboxylic acids or the corresponding lactones, especially poly(ethylene terephthalate) (PET) and poly(ethylene 2,6-naphthalenedicarboxylate) (PEN);
(16) polycarbonates and polyester carbonates;
(17) polysulfones and polyether sulfones;
(18) crosslinked polymers derived from aldehydes on the one hand and phenols, ureas and melamines on the other hand;
(19) unsaturated polyester resins derived from copolyesters of saturated and unsaturated dicarboxylic acids with polyhydric alcohols and vinyl compounds as crosslinking agents;
(20) crosslinkable acrylic resins derived from substituted acrylates;
(21) blends of the aforementioned polymers;
(22) polysiloxanes;
(23) polyketimines in combination with unsaturated acrylic polyacetoacetate resins or with unsaturated acrylic resins;
(24) radiation curable compositions containing ethylenically unsaturated monomers or oligomers and a polyunsaturated aliphatic oligomer; and
(25) ionomers (copolymers of ethylene/acrylic acid and their salts).

Additionally, the instant adhesives particularly when the adhesive is poly(vinyl butyral) may be inserted between two (or more) layers of glass such as in an automobile windshield.

A further subject of the invention is a stabilized adhesive composition, suitable for use as an adhesive layer in a laminated article or multilayer construction, which comprises
(a) an adhesive; and
(b) a combination of
   (1) a highly photostable benzotriazole which is 2-(2-hydroxy-3,5-di-α-cumylphenyl)-2H-benzotriazole or a red-shifted benzotriazole which is 5-chloro-2-(2-hydroxy-3,5-di-tert-butylphenyl)-2H-benzotriazole or 5-chloro-2-(2-hydroxy-3-tert-butyl-5-methylphenyl)-2H-benzotriazole each of which has relatively low solubility in some adhesives; and
   (2) a solubilizing amount of a second benzotriazole having high solubility in said adhesives and selected from the group consisting of 2-(2-hydroxy-3,5-di-tert-butylphenyl)-2H-benzotriazole, 2-(2-hydroxy-3,5-di-tert-amylphenyl)-2H-benzotriazole, 2-(2-hydroxy-5-tert-octylphenyl)-2H-benzotriazole, 2-(2-hydroxy-3-sec-butyl-5- tert-butylphenyl)-2H-benzotriazole, 2-(2-hydroxy-3-α-cumyl-5-tert-octylphenyl)-2H-benzotriazole or 2-(2-hydroxy-3-α-cumyl-5-tert-butylphenyl)-2H-benzotriazole.

Preferably the benzotriazole mixture in component (b) exhibits enhanced durability and low loss of absorbance when exposed to actinic radiation as witnessed by an absorbance loss of less than 0.5 absorbance units after exposure for 893 hours or less than 0.8 absorbance units after exposure for 1338 hours in a Xenon Arc Weather-Ometer.

The definitions and preferences with respect to the adhesives apply also for the afore mentioned stabilized adhesive composition.

Yet another subject of the present invention is a compound of formula IIIc 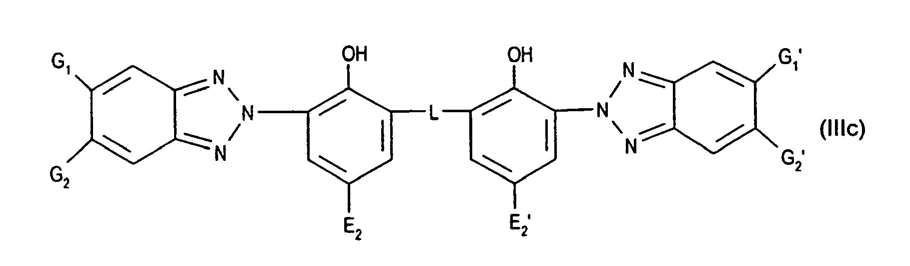 wherein
G₁ and G₁' are independently hydrogen or halogen;
G₂ is halogen, nitro, cyano, -COOG₃, -P(O)(C₆H₅)₂, -CO-G₃, -CO-NH-G₃, -CON(G₃)₂, -N(G₃)-CO-G₃, E₃S-, E₃SO- or E₃SO₂-;
G₂' is perfluoroalkyl of 1 to 12 carbon atoms;
G₃ is hydrogen, straight or branched chain alkyl of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 4 alkyl of 1 to 4 carbon atoms;
E₂ and E₂' are independently straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by one to three alkyl of 1 to 4 carbon atoms; or E₂ and E₂' are independently said alkyl of 1 to 24 carbon atoms or said alkenyl of 2 to 18 carbon atoms substituted by one or more -OH, -OCOE₁₁, -OE₄, -NCO, -NH₂, -NHCOE₁₁, -NHE₄ or - N(E₄)₂, or mixtures thereof, where E₄ is straight or branched chain alkyl of 1 to 24 carbon atoms; or said alkyl or said alkenyl interrupted by one or more -O-, -NH- or -NE₄- groups or mixtures thereof and which can be unsubstituted or substituted by one or more -OH, -OE₄ or -NH₂ groups or mixtures thereof; or E₂ and E₂' are independently -(CH₂)ₘ-CO-E₅; or E₂ and E₂' are independently a group of the formula

-(CH₂)ₘ-CO-X-(Z)ₚ-Y-E₁₅

wherein
E₅ is -OE₆ or -NE₇E₈, or
E₅ is -PO(OE₁₂)₂, -OSi(E₁₁)₃ or -OCO-E₁₁,
or straight or branched chain C₁-C₂₄alkyl which is interrupted by -O-, -S- or -NE₁₁ and which can be unsubstituted or substituted by -OH or -OCO-E₁₁, C₅-C₁₂ cycloalkyl which is unsubstituted or substituted by -OH, straight chain or branched C₂-C₁₈alkenyl which is unsubstituted or substituted by -OH, C₇-C₁₅aralkyl, -CH₂-CHOH-E₁₃ or glycidyl,
E₆ is hydrogen, straight or branched chain C₁-C₂₄alkyl which is unsubstituted or substituted by one or more OH, OE₄ or NH₂ groups, or -OE₆ is -(OCH₂CH₂)_{w}OH or - (OCH₂CH₂)_{w}OE₂₁where w is 1 to 12 and E₂₁ is alkyl of 1 to 12 carbon atoms,
E₇ and E₈ are independently hydrogen, alkyl of 1 to 18 carbon atoms, straight or branched chain C₃-C₁₈alkyl which is interrupted by -O-, -S- or -NE₁₁-, C₅-C₁₂cycloalkyl, C₆₋C₁₄aryl or C₁-C₃hydroxylalkyl, or E₇ and E₈ together with the N atom are a pyrrolidine, piperidine, piperazine or morpholine ring,
X is -O or -N(E₁₆)-,
Y is -O or -N(E₁₇)-,
Z is C₂-C₁₂-alkylene, C₄-C₁₂-alkylene interrupted by one to three nitrogen atoms, oxygen atoms or a mixture thereof, or is C₃-C₁₂-alkylene, butenylene, butynylene, cyclohexylene or phenylene, each substituted by a hydroxyl group,
m is zero, 1 or 2,
p is 1, or p is also zero when X and Y are -N(E₁₆)- and -N(E₁₇)-, respectively,
E₁₅ is a group -CO-C(E₁₈)=C(H)E₁₉ or, when Y is -N(E₁₇)-, forms together with E₁₇ a group -CO-CH=CH-CO-, wherein E₁₈ is hydrogen or methyl, and E₁₉ is hydrogen, methyl or - CO-X-E₂₀, wherein E₂₀ is hydrogen or C₁-C₁₈-alkyl;
E₁₆ and E₁₇ independently of one another are hydrogen, C₁-C₁₈-alkyl, C₃-C₁₂-alkyl interrupted by 1 to 3 oxygen atoms, or is cyclohexyl or C₇-C₁₅aralkyl, and E₁₆ together with E₁₇ in the case where Z is ethylene, also forms ethylene,
E₁₁ is hydrogen, straight or branched chain C₁-C₁₈alkyl, C₅-C₁₂cycloalkyl, straight or branched chain C₂-C₁₈alkenyl, C₆-C₁₄aryl or C₇-C₁₅aralkyl;
E₁₂ is straight or branched chain C₁-C₁₈alkyl, straight or branched chain C₃₋C₁₈alkenyl, C₅-C₁₀cycloalkyl, C₆-C₁₆aryl or C₇-C₁₅aralkyl;
E₁₃ is hydrogen, straight chain or branched C₁-C₁₈alkyl which is substituted by - PO(OE₁₂)₂, phenyl which is unsubstituted or substituted by OH, C₇-C₁₅aralkyl or -CH₂OE₁₂;
E₃ is alkyl of 1 to 20 carbon atoms, hydroxyalkyl of 2 to 20 carbon atoms, alkyl substituted by alkoxycarbonyl of 2 to 9 carbon atoms, alkenyl of 3 to 18 carbon atoms, cycloalkyl of 5 to 12 carbon atoms, phenylalkyl of 7 to 15 carbon atoms, aryl of 6 to 10 carbon atoms or said aryl substituted by one or two alkyl of 1 to 4 carbon atoms or 1,1,2,2-tetrahydroperfluoroalkyl where the perfluoroalkyl moiety is of 6 to 16 carbon atoms; and
L is alkylene of 1 to 12 carbon atoms, alkylidene of 2 to 12 carbon atoms, benzylidene, p-xylylene, α,α,α',α'-tetramethyl-m-xylylene or cycloalkylidene.
These compounds are novel and clearly distinct from the prior art because they are asymmetrically subsituted by a perfluoroalkyl moiety in one ring, and the other ring is substituted by a different electron withdrawing moiety.

Preferred is a compound of formula IIIc wherein
G₁ and G₁' are each hydrogen,
G₂ is chloro, phenylsulfonyl or phenylthio,
G₂' is CF₃,
E₂ and E₂' are independently straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 3 alkyl of 1 to 4 carbon atoms; and
L is alkylene of 1 to 12 carbon atoms, alkylidene of 2 to 12 carbon atoms, benzylidene, p-xylylene, α,α,α',α'-tetramethyl-m-xylylene or cycloalkylidene.

More preferred is a compound of formula IIIc wherein
G₁ and G₁' are each hydrogen,
G₂ is chloro, phenylsulfonyl or phenylthio,
G₂' is CF₃,
E₂ and E₂' are independently straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 3 alkyl of 1 to 4 carbon atoms; and
L is methylene.

Most preferred are the following compounds
(a) methylene-2-[4-tert-butyl-6-(5-phenylsulfonyl-2H-benzotriazol-2-yl)phenol]-2'-[4-tert-octyl-6-(5-trifluoromethyl-2H-benzotriazol-2-yl)phenol];
(b) methylene-2-[4-tert-butyl-6-(5-chloro-2H-benzotriazol-2-yl)phenol]-2'-[4-tert-octyl-6-(5-trifluoromethyl-2H-benzotriazol-2-yl)phenol]; or
(c) methylene-2-[4-tert-butyl-6-(5-phenylthio-2H-benzotriazol-2-yl)phenol]-2'-[4-tert-octyl-6-(5-trifluoromethyl-2H-benzotriazol-2-yl)phenol].

The compounds of formula IIIc are also very useful as stabilizers in an adhesive composition.

Consequently a further subject of the invention is a stabilized adhesive composition, suitable for use as an adhesive layer in a laminated article or multilayer construction, which comprises
(a) an adhesive; and
(b) a highly soluble, red-shifted, photostable benzotriazole of formula IIIc.

The definitions and preferences with respect to the adhesives apply also for the afore mentioned stabilized adhesive composition. The compounds of formula IIIc are particularly suitable for this application since they combine a red shifted absorption with a very good solubility.

Yet another subject of the invention is a composition stabilized against thermal, oxidative or light-induced degradation which comprises,
(a) an organic material subject to thermal, oxidative or light-induced degradation, and
(b) an effective stabilizing amount of a compound of formula IIIc.

Preferably the organic material is a natural, semi-synthetic, synthetic, thermoplastic or crosslinked polymer.

More preferably, the polymer is a polyolefin or polycarbonate, especially polyethylene or polypropylene; most especially polypropylene; or the polymer is a styrenic, ABS, a nylon, a polyester such as poly(ethylene terephthalate) or poly(butylene terephthalate), a polyurethane, an acrylate, a rubber modified styrenic, poly(vinyl chloride), poly(vinyl butyral), polyacetal (polyoxymethylene), poly(ethylene naphthalenedicarboxylate), or other blends or copolymers such as poly(ethylene/1,4-cyclohexylenedimethylene terephthalate) PETG or an ionomer.

Particularly preferred is a composition wherein the polymer is a polyester.

Preferably the polyester is poly(ethylene terephthalate), poly(butylene terephthalate) or poly(ethylene naphthalenedicarboxylate), or copolymer poly(ethylene/1,4-cyclohexylenedimethylene terephthalate) PETG.

A further preferred polymer is a copolymer of ethylene/acrylic acid or an alkali metal, alkaline earth metal or transition metal salt thereof (an ionomer).

Also preferred is a composition wherein the polymer is is a polyolefin or polycarbonate.

In particular the polyolefin is polyethylene or polypropylene, most preferably polypropylene.

The composition stabilized against thermal, oxidative or light-induced degradation may additionally contain an effective stabilizing amount of at least one other UV absorber selected from the group consisting the benzotriazoles, the s-triazines, hydroxybenzophenones, the α-cyanoacrylates, the oxanilides and benzoates.

Preferred are the 2-hydroxyphenyl-2H-benzotriazoles which are selected from the group consisting of
2-(2-hydroxy-5-methylphenyl)-2H-benzotriazole;
2-(2-hydroxy-3,5-di-tert-butylphenyl)-2H-benzotriazole;
2-(2-hydroxy-5-tert-butylphenyl)-2H-benzotriazole;
2-(2-hydroxy-5-tert-octylphenyl)-2H-benzotriazole;
5-chloro-2-(2-hydroxy-3,5-di-tert-butylphenyl)-2H-benzotriazole;
5-chloro-2-(2-hydroxy-3-tert-butyl-5-methylphenyl)-2H-benzotriazole;
2-(2-hydroxy-3-sec-butyl-5-tert-butylphenyl)-2H-benzotriazole;
2-(2-hydroxy-4-octyloxyphenyl)-2H-benzotriazole;
2-(2-hydroxy-3-dodecyl-5-methylphenyl)-2H-benzotriazole;
2-(2-hydroxy-3,5-di-tert-amylphenyl)-2H-benzotriazole;
2-[2-hydroxy-3,5-di(α,α-dimethylbenzyl)phenyl]-2H-benzotriazole;
2-[2-hydroxy-3-(α,α-dimethylbenzyl)-5-tert-octylphenyl]-2H-benzotriazole;
2-{2-hydroxy-3-tert-butyl-5-[2-(omega-hydroxy-octa(ethyleneoxy)carbonyl)ethyl]-phenyl}-2H-benzotriazole; and
2-{2-hydroxy-3-tert-butyl-5-[2-(octyloxy)carbonyl)ethyl]phenyl}-2H-benzotriazole.

In particular the other benzotriazole is
2-(2-hydroxy-3,5-di-tert-amylphenyl)-2H-benzotriazole;
2-[2-hydroxy-3,5-di(α,α-dimethylbenzyl)phenyl]-2H-benzotriazole;
2-[2-hydroxy-3-(α,α-dimethylbenzyl)-5-tert-octylphenyl]-2H-benzotriazole;
2-{2-hydroxy-3-tert-butyl-5-[2-(omega-hydroxy-octa(ethyleneoxy)carbonyl)ethyl]-phenyl}-2H-benzotriazole;
5-chloro-2-(2-hydroxy-3,5-di-tert-butylphenyl)-2H-benzotriazole;
5-chloro-2-(2-hydroxy-3-tert-butyl-5-methylphenyl)-2H-benzotriazole;
2-(2-hydroxy-5-tert-octylphenyl)-2H-benzotriazole; or
2-{2-hydroxy-3-tert-butyl-5-[2-(octyloxy)carbonyl)ethyl]phenyl}-2H-benzotriazole.

The composition stabilized against thermal, oxidative or light-induced degradation may also contain an effective stabilizing amount of a hindered amine.

In another preferred embodiment of the instant invention, the organic material is a resin selected from the group consisting of a thermoset acrylic melamine resin, an acrylic urethane resin, an epoxy carboxy resin, a silane modified acrylic melamine, an acrylic resin with carbamate pendant groups crosslinked with melamine or an acrylic polyol resin crosslinked with melamine containing carbamate groups.

Most preferably, the resin is a thermoset acrylic melamine resin or an acrylic urethane resin.

In yet another preferred embodiment of the invention, the organic material is a recording material.

The recording materials according to the invention are suitable for pressure-sensitive copying systems, photocopying systems using microcapsules, heat-sensitive copying systems, photographic materials and ink jet printing.

The recording materials according to the invention are distinguished by an unexpected improvement in quality, especially with regard to the fastness to light.

The recording materials according to the invention have the construction known for the particular use. They consist of a customary carrier, for example, paper or plastic film, which has been coated with one or more layers. Depending on the type of material, these layers contain the appropriate necessary components, in the case of photographic materials, for example, silver halide emulsions, dye couplers, dyes and the like. Material particularly suitable for ink jet printing has a layer particularly absorptive for ink on a customary carrier. Uncoated paper can also be employed for ink jet printing. In this case the paper acts at the same time as the carrier material and as the ink-absorbent layer. Suitable material for ink jet printing is, for example, described in United States Patent No. 5,073,448 which is incorporated herein by reference.

The recording material can also be transparent as, for example, in the case of projection films.

The compounds of formula IIIc can be incorporated into the carder material as early as the production of the latter, in the production of paper, for example, being added to the paper pulp. A second method of application is to spray the carder material with an aqueous solution of compounds of formula IIIc or to add the compounds to the coating composition.

Coating compositions intended for transparent recording materials suitable for projection cannot contain any particles which scatter light, such as pigments and fillers.

The dye-binding coating composition can contain a number of other additives, for example, antioxidants, light stabilizers (including also UV absorbers which do not fall under the scope of the UV absorbers of this invention), viscosity improvers, fluorescent brighteners, biocides and/or antistatic agents.

The coating composition is usually prepared as follows: the water-soluble components, for example, the binder, are dissolved in water and stirred together; the solid components, for example, fillers and other additives already described, are dispersed in this aqueous medium; and disperison is advantageously carried out by means of devices, for example, ultrasonic systems, turbine stirrers, homogenizers, colloid mills, bead mills, sand mills, highspeed stirrers and the like. The compounds of formula IIIc can be easily incorporated into the coating composition.

The recording material according to this invention preferably contains 1 to 5000 mg/m², in particular 50-1200 mg/m², of a compound of formula IIIc.

As already mentioned, the recording materials according to the invention embrace a wide field. The compounds of formula IIIc can, for example, be employed in pressure-sensitive copying systems. They can be introduced either into the paper in order to protect the micro-encapsulated dye precursors there from light, or into the binder of the developer layer in order to protect the dyes formed there.

Photocopying systems using light-sensitive microcapsules which are developed by means of pressure are described in United States Patent Nos. 4,416,966; 4,483,912; 4,352,200; 4,535,050; 4,535,463; 4,551,407; 4,562,137 and 4,608,330; and also in EP-A 139,479; EP-A 162,664; EP-A 164,931; EP-A 237,024; EP-A 237,025 and EP-A 260,129. In all these systems, the compounds can be put into the dye-receiving layer. The compounds can, however, also be put into the donor layer in order to protect the color formers from light. Photographic materials which can be stabilized are photographic dyes and layers containing such dyes or precursors thereof, for example, photographic paper and films. Suitable materials are, for example, described in United States Patent No. 5,364,749 which is incorporated herein by reference. The compounds of formula IIIc act here as a UV filter against electrostatic flashes. In color photographic materials, couplers and dyes are also protected against photochemical decomposition.

The instant compounds of formula IIIc can be used for all types of color photographic materials. For example, they can be employed for color paper, color reversal paper, direct-positive color material, color negative film, color positive film, color reversal film and the like. They are preferably used inter alia for photographic color material which contains a reversal substrate or form positives.

Color-photographic recording materials usually contain, on a support, a blue-sensitive and/or a green-sensitive and/or a red-sensitive silver halide emulsion layer and, if desired, a protection layer, with the instant compounds being, preferably, either in the green-sensitive or the red-sensitive layer or in a layer between the green-sensitive and the red-sensitive layer or in a layer on top of the silver halide emulsion layers.

The compounds of formula IIIc can also be employed in recording materials based on the principles of photopolymerization, photoplasticization or the rupture of microcapsules, or in cases where heat-sensitive and light-sensitive diazonium salts, leuko dyes having an oxidizing agent or dye lactones having Lewis acids are used.

Furthermore, the instant compounds can be employed in recording materials for dye diffusion transfer printing, thermal wax transfer printing and non-matrix printing and for use with electrostatic, electrographic, electrophoretic, magnetographic and laser-electrophotographic printers and pen-plotters. Of the above, recording materials for dye diffusion transfer printing are preferred, for example, as described in EP-A 507,734.

The instant compounds of formula IIIc can also be employed in inks, preferably for ink jet printing, for example, as described in United States Patent No. 5,098,477 which is incorporated herein by reference.

The compounds exhibit superior hydrolytic stability, handling and storage stability as well as good resistance to extractability when present in a stabilized composition.

The instant benzotriazoles are made by conventional methods for preparing such compounds. The usual procedure involves the diazotization of a substituted o-nitroaniline followed by coupling the resultant diazonium salt with a substituted phenol and reduction of the azobenzene intermediate to the corresponding desired benzotriazole. The starting materials for these benzotriazoles are largely items of commerce or can be prepared by normal methods of organic synthesis.

The following examples illustrate the instant invention.

### Examples A: Use of Benzotriazoles

### Example A1

### UV Absorption Spectra

Various instant benzotriazoles substituted on the phenyl ring with a 3-α-cumyl moiety and a 5-tert-octyl group and have a maximum absorbance value and the given wavelength as seen below. The UV spectra are measured in ethyl acetate solution at approximately 20 mg/L concentration.

| Compound* | λ max (nm) | absorbance at 375 (nm) |
|---|---|---|
| A | 345 | 0.28 |
| B | 352 | 0.40 |
| C | 348 | 0.33 |
| D | 362 | 0.50 |
| E | 358 | 0.42 |
| F | 357 | 0.59 |
| G | 354 | 0.41 |

| | | |
|---|---|---|
| *A is 2-(2-hydroxy-3-α-cumyl-5-tert-octylphenyl)-2H-benzotriazole. | | |
| B is 5-chloro-2-(2-hydroxy-3-α-cumyl-5-tert-octylphenyl)-2H-benzotriazole. | | |
| C is 5-trifluoromethyl-2-(2-hydroxy-3-α-cumyl-5-tert-octylphenyl)-2H-benzotriazole. | | |
| D is 5-phenylsulfonyl-2-(2-hydroxy-3-α-cumyl-5-tert-octylphenyl)-2H-benzotriazole. | | |
| E is 5-methoxycarbonyl-2-(2-hydroxy-3-α-cumyl-5-tert-octylphenyl)-2H-benzotriazole. | | |
| F is 5-butylsulfonyl-2-(2-hydroxy-3,5-di-tert-butylphenyl)-2H-benzotriazole. | | |
| G is methyl 3-(5-trifluoromethyl-2H-benzotriazol-2-yl)-5-tert-butyl-4-hydroxyhydrocinnamate. | | |

### Example A2

### UV Absorption Spectra

The maximum absorbance value and the given wavelength of various blends of benzotriazoles are determined as seen below. The UV spectra are measured in ethyl acetate solution at approximately 20 mg/L concentration.

| Mixture of Compounds* | λ max (nm) | absorbance at 375 (nm) |
|---|---|---|
| B | 349 | 0.39 |
| C | 352 | 0.46 |

| | | |
|---|---|---|
| B is 1:3 mixture by weight of 2-(2-hydroxy-3,5-di-α-cumylphenyl)-2H-benzotriazole (TINUVIN® 900, Ciba) and 5-trifluoromethyl-2-(2-hydroxy-3-α-cumyl-5-tert-octylphenyl)-2H-benzotriazole. | | |
| C is 1:3 mixture by weight of 5-chloro-2-(2-hydroxy-3,5-di-tert-butylphenyl)-2H-benzotriazole (TINUVIN® 327, Ciba) and 5-trifluoromethyl-2-(2-hydroxy-3-α-cumyl-5-tert-octylphenyl)-2H-benzotriazole. | | |

### Example A3

### Benzotriazole Solubility in Adhesive

To measure this solubility a number of structurally different benzotriazoles are added to a typical adhesive GELVA® 263 (Solutia) which is a 44.5% solution of a polyacrylate in a mixture of ethyl acetate and hexane. The polyacrylate is a copolymer of methyl methacrylate, 2-ethylhexyl methacrylate and glycidyl methacrylate.

The test benzotriazole is dissolved in 5 mL of ethyl acetate, toluene or a mixture of ethyl acetate and toluene. To the solution is added 5 g of GELVA® 263 and 2-3 mL of the resulting solution is placed into individual watch glasses. Solubility is then evaluated based upon observed crystallization once the solvent has evaporated. Observations start after several hours and then continue over a period of several weeks.

The solubility values given in the table below are approximate maximum concentrations where no sign of subsequent crystallization is evident. Solubilities are reported in weight of total benzotriazole added to GELVA® 263 as is. From these data it clear that the instant benzotriazoles are considerably more soluble in adhesives (in this case GELVA® 263) than many benzotriazoles of the prior art. The use of many benzotriazoles in adhesives has been limited in the past by the limited solubility and compatibility of some benzotriazole compounds. By using the instant benzotriazoles, the use levels can be increased substantially to add greatly increased stabilization protection which is further augmented by the photostability and the red-shiftedness of the instant benzotriazoles.

| Compound* | Trade Name or Class | Solubility without Crystallization (%) |
|---|---|---|
| A | 5-ethylsulfonyl | < 1 |
| B | TINUVIN 900 | 2.0 |
| C | TINUVIN 327 | 2.0 |
| D | 5-butylsulfonyl | 4.0 |
| E | 5-CF₃ | 4.0 |
| F | 5,5'-CF₃ | 4.0 |
| G | 5-butylsulfonyl | 8.0 |
| H | 5-CF₃ | 8.0 |
| I | 5-CF₃ | 8.0 |
| J | 5-methoxycarbonyl-methylsulfinyl | 8.0 |
| K | 5-phenylsulfonyl | 11.3 |
| L | 5-phenylsulfonyl | 11.3 |
| M | 5-CF₃ | 22.6 |
| N | 5-CF₃ | 22.6 |
| O | 5-CF₃ | 22.6 |
| P | TINUVIN® 928 | 22.6 |
| Q | 5-chloro | 22.6 |

| | | |
|---|---|---|
| *A is 5-ethylsulfonyl-2-(2-hydroxy-5-methylphenyl)-2H-benzotriazole. | | |
| B is 2-(2-hydroxy-3,5-di-α-cumylphenyl)-2H-benzotriazole. | | |
| C is 5-chloro-2-(2-hydroxy-3,5-di-tert-butylphenyl)-2H-benzotriazole. | | |
| D is 5-butylsulfonyl-2-(2-hydroxy-3,5-di-tert-butylphenyl)-2H-benzotriazole. | | |
| E is 5-trifluoromethyl-2-(2-hydroxy-3,5-di-α-cumylphenyl)-2H-benzotriazole. | | |
| F is 2,2'-methylene-bis[6-(5-trifluoromethyl-2H-benzotriazol-2-yl)-4-tert-octylphenol]. | | |
| G is 5-butylsulfonyl-2-(2-hydroxy-3-α-cumyl-5-tert-octylphenyl)-2H-benzotriazole; | | |
| H is 5-trifluoromethyl-2-(2-hydroxy-5-tert-octylphenyl)-2H-benzotriazole; | | |
| I is methyl 3-(5-trifluoromethyl-2H-benzotriazol-2-yl)-5-tert-butyl-4-hydroxyhydrocinnamate. | | |
| J is 5-methoxycarbonylmethylsulfinyl-2-(2-hydroxy-3,5-di-tert-butylphenyl)-2H-benzotriazole. | | |
| K is methyl 3-(5-phenylsulfonyl-2H-benzotriazol-2-yl)-5-tert-butyl-4-hydroxyhydrocinnamate. | | |
| L is 5-phenylsulfonyl-2-(2-hydroxy-3,5-di-tert-butylphenyl)-2H-benzotriazole. | | |
| M is 5-trifluoromethyl-2-(2-hydroxy-3-a-cumyl-5-tert-octylphenyl)-2H-benzotriazole. | | |
| N is 5-trifluoromethyl-2-(2-hydroxy-3,5-di-tert-octylphenyl)-2H-benzotriazole. | | |
| O is 5-trifluoromethyl-2-(2-hydroxy-3-α-cumyl-5-tert-butylphenyl)-2H-benzotriazole. | | |
| P is 2-(2-hydroxy-3-α-cumyl-5-tert-octylphenyl)-2H-benzotriazole. | | |
| Q is 5-chloro-2-(2-hydroxy-3-α-cumyl-5-tert-butylphenyl-2H-benzotriazole. | | |

### Example A4

### Solubility in Adhesive of Benzotriazole Blends

Following the procedure of Example 3, the solubility in GELVA® 263 (Solutia) of various mixtures of benzotriazoles is determined. The results are seen in the table below.

| Mixture of Compounds* | Solubility without Crystallization (%) |
|---|---|
| A | 22.6 |
| B | 22.6 |
| C | 22.6 |
| D | 22.6 |

| | |
|---|---|
| *A is 3:1 mixture by weight of 2-(2-hydroxy-3-α-cumyl-5-tert-octylphenyl)-2H-benzotriazole (TINUVIN® 928, Ciba) and 5-trifluoromethyl-2-(2-hydroxy-3-α-cumyl-5-tert-octylphenyl)-2H-benzotriazole. | |
| B is 1:3 mixture by weight of 2-(2-hydroxy-3,5-di-α-cumylphenyl)-2H-benzotriazole (TINUVIN® 900, Ciba) and 5-trifluoromethyl-2-(2-hydroxy-3-α-cumyl-5-tert-octylphenyl)-2H-benzotriazole. | |
| C is 1:3 mixture by weight of 5-chloro-2-(2-hydroxy-3,5-di-tert-butylphenyl)-2H-benzotriazole (TINUVIN® 327, Ciba) and 5-trifluoromethyl-2-(2-hydroxy-3-α-cumyl-5-tert-octylphenyl)-2H-benzotriazole. | |
| D is 3:1 mixture by weight of 2-(2-hydroxy-3-α-cumyl-5-tert-octylphenyl)-2H-benzotriazole (TINUVIN® 928, Ciba) and 5-chloro-2-(2-hydroxy-3,5-di-tert-butylphenyl)-2H-benzotriazole (TINUVIN® 327, Ciba). | |

### Example A5

### Weathering Experiments

To ascertain the effect of durability and loss rate of various benzotriazole test compounds, the following test is carried out on adhesive compositions in selected articles.

GELVA® 263 (Solutia) adhesive is described in Example 3. A biaxially oriented poly(ethylene terephthalate) (PET) film is obtained from United States Plastics.

The GELVA® 263 is reduced 50% by dilution with ethyl acetate to a final resin solids content of 23%. The test compound is dissolved in the GELVA® 263 solution and samples are prepared in duplicate. The formulations seen in the table below are based on total coating solids. Approximately 8 micron coatings are applied to 1.5 inch glass discs for each formulation using a Headway Research Inc. Photo Resist Spinner (Model EC101DT) operating at 5000 rpm for 10 seconds. All formulations receive the same 80°C x 3 minute bake in a Hereaus model LUT 6050F oven operating at 3 air changes/minute.

Since the adhesive remains tacky even after baking a direct thickness measurement is not possible. Indirect film thickness is determined by creating an adhesive sandwich between to layers of PET film and comparing its thickness versus two PET sheets without adhesive using magnetic induction methodology.

The spin coating conditions are thus obtained. Further, since the spin coating conditions are not changed for applying the adhesive onto the glass, very little if any thickness variations are expected. After curing it in an oven, a layer of PET (ca 2 mils) is placed over the adhesive and pressed down.

Absorbance spectra are collected using a Perkin Elmer Lambda 19 Spectrophotometer running UVWINLAB software. Absorbance data are collected from 400-300 nm every half nanometer at a speed of 240 nm/minute and a slit width of 2 nm.

Weathering is done at a controlled irradiance at 6500 W. The cycle is as follows: 3.8 hours straight irradiance with no water spray, followed by one hour darkness. In the light cycle, the black panel temperature is controlled at 89°C. The chamber (dry bulb) temperature is 62°C in the light cycle. The relative humidity in the light cycle is in the range of 50-55% and in the dark cycle 95%. The chamber (dry bulb) temperature is 38°C in the dark cycle.

The test samples are placed in a Xenon Arc Weather-O-meter with the glass facing the Xenon lamp to emulate articles such as solar films. UV spectra are obtained at about 250 hour intervals. UV spectra are obtained at 500 hours and the samples are rotated to insure that all samples receive similar weathering conditions.

To follow the loss of the UV absorber from the adhesive composition, UV spectra measured initially and after weathering. The UV spectrophotometer measure absorbance linearly up to 5.5 absorbance units using a reference beam attenuation technique.

It is assumed that the degradation products for the UV absorber do not contribute to the UV spectrum. This is tested by following the ratio of absorbance of the band at 300 nm and the band at about 340 nm. The ratio does not change upon weathering the sample. This suggests that the UV spectrum of the weathered films correspond to the amount of UV absorber remaining in the film with very little if any contribution to the spectrum by the photodegradants.

The results after 893 hours exposure are given in the table below.

| Compound(%)* | Initial Absorbance | Final Absorbance | Absorbance Loss |
|---|---|---|---|
| I (8%) | 2.998 | 2.048 | 0.950 |
| II(10%) | 2.810 | 2.013 | 0.797 |
| III (5%) | 1.561 | 1.241 | 0.320 |
| IV(10%) | 2.181 | 1.904 | 0.277 |
| IV (10%) + V (0.5%) | 2.088 | 1.974 | 0.114 |

| | | | |
|---|---|---|---|
| *% is the weight amount in formulation. | | | |
| I is 2,2'-dihydroxy-4-methoxybenzophenone. | | | |
| II is octyl 3-(2H-benzotriazol-2-yl)-5-tert-butyl-4-hydroxyhydrocinnamate. | | | |
| III is 2-(2-hydroxy-3-α-cumyl-5-tert-octylphenyl)-2H-benzotriazole. | | | |
| IV is 5-trifluoromethyl-2-(2-hydroxy-3-α-cumyl-5-tert-octylphenyl)-2H-benzotriazole. | | | |
| V is bis(1-octyloxy-2,2,6,6-tetramethylpiperidin-4-yl) sebacate. | | | |

These data clearly show that the instant benzotriazole is especially durable in adhesives as measured by the low loss rate of absorbance values after exposure to actinic radiation. The instant benzotriazoles such as 2-(2-hydroxy-3-α-cumyl-5-tert-octylphenyl)-2H-benzotriazole even though not red-shifted as well as the red-shifted benzotriazoles are far superior to the benzophenones in adhesive compositions. Furthermore, the combination of the benzotriazoles with a hindered amine stabilizer offers quite superior performance. In summary, the instant benzotriazoles combine both great photostability and unexpectedly high solubility in adhesive systems.

### Example A6

### Weathering Experiments

In an experiment similar to Example 5, GELVA® 263 (Solutia) adhesive described in Example 3, which contains 8% by weight of a test compound, is placed between a sheet of glass and a biaxially oriented film of poly(ethylene terephthalate) (PET) described in Example 4. The structure is then exposed to weathering for 947 hours as described in Example 4.

The results are seen in the table below. Each test sample also contains 0.5% of the hindered amine bis(1-octyloxy-2,2,6,6-tetramethylpiperidin-4-yl) sebacate.

| Compound(%)* | Initial Absorbance | Final Absorbance | Absorbance Loss |
|---|---|---|---|
| I(8%) | 2.88 | 2.12 | 0.76 |
| II(8%) | 1.73 | 1.55 | 0.18 |
| III(8%) | 1.46 | 1.45 | 0.01 |
| IV(8%) | 1.96 | 1.59 | 0.37 |

| | | | |
|---|---|---|---|
| *% is the weight amount in formulation. | | | |
| I is 2,2'-dihydroxy-4-methoxybenzophenone. | | | |
| II is methyl 3-(5-trifluoromethyl-2H-benzotriazol-2-yl)-5-tert-butyl-4-hydroxyhydrocinnamate. | | | |
| III is 5-trifluoromethyl-2-(2-hydroxy-3-α-cumyl-5-tert-octylphenyl)-2H-benzotriazole. | | | |
| IV is 2-(2-hydroxy-3-α-cumyl-5-tert-octylphenyl)-2H-benzotriazole. | | | |

These data clearly show that the instant benzotriazoles substituted at the 5-position of the benzo ring with an electron withdrawing moiety or an α-cumyl moiety in the ortho position of phenyl ring are especially durable in adhesives as measured by the low loss rate of absorbance values after exposure to actinic radiation. Additionally, it is seen that the red-shifted benzotriazoles are far superior to the benzophenones in adhesive compositions. Furthermore, the combination of the red-shifted benzotriazoles with a hindered amine stabilizer offers quite superior performance. In summary, the instant red-shifted benzotriazoles combine both great photostability and unexpectedly high solubility in adhesive systems.

### Example A7

### Windshield Interlayer Assembly

When an adhesive composition containing a benzotriazole UV absorber is placed between two sheets of glass, the assembly resembles a typical windshield. In this confined environment, there is no chance that the benzotriazole stabilizer can escape by volatility since the glass sheets provide a impervious container for the adhesive interlayer. The photostability and durability of the soluble benzotriazole stabilizer is now paramount. Benzotriazole UV absorbers whose structures causes them to be volatile and which precludes their use in other types of applications can be used in such windshield interlayer assemblies with impunity to achieve long lasting and stable windshield structures.

A windshield or windscreen prototype structure is exposed to weathering according to the procedure described in Example 5. The GELVA® 263 (Solutia) adhesive is placed between two sheets of glass and additionally contains 8% by weight of selected test UV absorbers. The structure is then exposed to weathering for 1338 hours as described in Example 5.

The results are seen in the table below. Each test sample contains only a UV absorber and no hindered amine coadditive.

| Compound(%)* | Initial Absorbance | Final Absorbance | Absorbance Loss |
|---|---|---|---|
| I (8%) | 2.69 | 0.85 | 1.84 |
| II(8%) | 2.24 | 1.54 | 0.70 |
| III(8%) | 1.81 | 1.02 | 0.79 |
| IV(8%) | | | 0.35 |

| | | | |
|---|---|---|---|
| *% is the weight amount in formulation. | | | |
| I is 2,2'-dihydroxy-4-methoxybenzophenone. | | | |
| II is 5-trifluoromethyl-2-(2-hydroxy-5-tert-octylphenyl)-2H-benzotriazole. | | | |
| III is methyl 3-(5-trifluoromethyl-2H-benzotriazol-2-yl)-5-tert-butyl-4-hydroxyhydrocinnamate. | | | |
| IV is 2-(2-hydroxy-3-α-cumyl-5-tert-octylphenyl)-2H-benzotriazole. | | | |

These data clearly show that the instant benzotriazoles substituted at the 5-position of the benzo ring with an electron withdrawing moiety or an α-cumyl moiety in the ortho position of phenyl ring are especially durable in adhesives as measured by the low loss rate of absorbance values after exposure to actinic radiation. Additionally, it is seen that the red-shifted benzotriazoles are far superior to the benzophenones in adhesive compositions. In summary, the instant red-shifted benzotriazoles combine both great photostability and unexpectedly high solubility in adhesive systems.

### Example A8

A windshield or windscreen prototype structure as described in Example 7 is exposed to weathering according to the procedure described in Example. The GELVA® 263 (Solutia) adhesive is placed between two sheets of glass and additionally contains 8% by weight of selected test UV absorbers. The structure is then exposed to weathering for 1338 hours as described in Example 5.

The results are seen in the table below. Each test sample also contains 0.5% of the hindered amine bis(1-octyloxy-2,2,6,6-tetramethylpiperidin-4-yl) sebacate.

| Compound(%)* | Initial Absorbance | Final Absorbance | Absorbance Loss |
|---|---|---|---|
| I (8%) | 3.69 | 2.89 | 0.80 |
| II(8%) | 2.06 | 1.85 | 0.21 |
| III(8%) | 1.45 | 1.21 | 0.24 |
| IV (8%) | 1.84 | 1.61 | 0.23 |
| V (8%) | 1.34 | 1.02 | 0.32 |

| | | | |
|---|---|---|---|
| *% is the weight amount in formulation. | | | |
| I is 2,2'-dihydroxy-4-methoxybenzophenone. | | | |
| II is 5-trifluoromethyl-2-(2-hydroxy-5-tert-octylphenyl)-2H-benzotriazole. | | | |
| III is 5-trifluoromethyl-2-(2-hydroxy-3-a-cumyl-5-tert-octylphenyl)-2H-benzotriazole. | | | |
| IV is methyl 3-(5-trifluoromethyl-2H-benzotriazol-2-yl)-5-tert-butyl-4-hydroxyhydrocinnamate. | | | |
| V is 5-n-butylsulfonyl-2-(2-hydroxy-3-α-cumyl-5-tert-octylphenyl)-2H-benzotriazole. | | | |

These data clearly show that the instant benzotriazoles substituted at the 5-position of the benzo ring with an electron withdrawing moiety are especially durable in adhesives as measured by the low loss rate of absorbance values after exposure to actinic radiation. Additionally, it is seen that the red-shifted benzotriazoles are far superior to the benzophenones in adhesive compositions. Furthermore, the combination of the red-shifted benzotriazoles with a hindered amine stabilizer offers quite superior performance. In summary, the instant red-shifted benzotriazoles combine both great photostability and unexpectedly high solubility in adhesive systems.

### Example A9

The instant benzotriazole UV absorbers can be used in film and rigid plastic protective overlaminates for printed matter and photographs providing excellent photostability.

### Example A10

The instant benzotriazole UV absorbers can be used in backlit displays to provide excellent long term stabilization.

### Example 11

The instant benzotriazole UV absorbers can be used in semi-transparent and opaque window displays, signs and decals wherein a film or rigid plastic graphic is laminated to window glass to provide excellent long term stabilization.

### Example A12

The instant benzotriazole UV absorbers can be used in clear/tinted anti-graffiti films used over class, metal or plastic substrates to provide excellent long term stabilization.

### Example A13

The instant benzotriazoleUV absorbers can be used in clear anti-lacerative or "security" films used over or between layers of glass or polycarbonate to provide long term stabilization.

### Example A14

The instant benzotriazole UV absorbers can be used in decorative and protective films and decals for painted surfaces such as on automobiles, buses, equipment and other exterior products to provide long term stabilization.

### Examples B: Preparation and Use of Novel Benzotriazoles of Formula IIIc.

### Example B1

### 5-Trifluoromethyl-2-(2-hydroxy-3-(di-n-butylaminomethyl-5-tert-octylphenyl)-2H-benzotriazole

5-Trifluoromethyl-2-(2-hydroxy-5-tert-octylphenyl)-2H-benzotriazole (40.9 g, 0.104 mol), paraformaldehyde (3.65 g, 0.116 mol) and di-n-butylamine (28.2 g, 0.216 mol) are charged to a pressure reactor at ambient temperature. The reactor is sealed and the temperature is raied to 160°C. The reaction mass is held at 160°C for four hours and then discharged. The reactor is rinsed with toluene. The toluene, amine and water are stripped by rotary evaporation. This crude Mannich product is chromatographed on silica gel.using a heptane/ethyl acetate gradient as eluent to remove a trace of unreacted starting benzotriazole intermiediate. The title compound is obtained as a yellow oil in 93% yield after chormatography.
Analysis:
¹Hnmr (CDCl₃): δ 0.79 (s, 9H); 0.88 (t, 6H); 1.32 (m, 4H); 1.40 (s, 6H); 1.52 (m, 4H); 1.75 (s, 2H); 2.55 (t, 4H); 3.90 (s, 2H); 7.18 (d, 1 H); 7.60 (dd, 1 H); 7.68 (d, 1 H); 8.13 (dd, 1 H); 8.35 (d, 1H).
Mass spectrometry: m/z 533 (M + H).

### Example B2

### Methylene-2-[4-tert-butyl-6-(5-phenylsulfonyl-2H-benzotriazol-2-yl)phenol]-2'-[4-tert-octyl-6-(5-trifluoromethyl-2H-benzotriazol-2-yl)phenol]

5-Phenylsulfonyl-2-(2-hydroxy-5-tert-butylphenyl)-2H-benzotriazole (6.8 g, 0.017 mol), sodium methoxide (0.99 g, 0.017 mol) and xylenes (20 g, 0.187 mol) are added to a reaction flask with is then heated to 160°C. The compound prepared in Example B1 (8.93 g, 0.0167 mol) dissolved in 8 g of xylenes is dripped into the reaction mass over a one-hour period. At the end of the addition, the reaction mass is heated to 205°C while distilling off xylene, methanol and di-n-butylamine. After one hour at 205°C, the reaction mass is subjected to a 26" Hg vacuum for three hours, After the vacuum is released, the reaction mass is cooled to 100°C and 50 g of xylenes are added. The solution is then washed with 25 g of 10% aqueous hydrochloric acid. After distilling off the solvent 15.5 g of crude product is obtained. This is chromatographed over silica gel using 15% ethyl acetate in heptane as eluent. The title compound is obtained as a solid in a yield of 6.6 g melting at 95-100°C.
Analysis:
¹Hnmr (CDCl₃): δ 0.72 (s, 9H); 1.35 (s, 9H); 1.42 (s, 6H); 1.76 (s, 2H); 4.31 (s, 2H); 7.44 (d, 2H); 7.55 (t, 2H); 7.61 (t, 1 H); 7.68 (dd, 1 H); 7.91 (dd, 1 H); 8.03 (d, 2H); 8.04 (d, 1 H); 8.08 (d, 1 H); 8.31 (d, 1 H); 8.32 (d, 2H);, 8.73 (d, 1 H); 11.14 (s, 1 H); 11.23 (s, 1H).
¹⁹Fnmr (CDCl₃): -68.9 ppm.
Mass spectrometry: m/z 811 (M + H).

### Example B3

### Methylene-2-[4-tert-butyl-6-(5-chloro-2H-benzotriazol-2-yl)phenol]-2'-[4-tert-octyl-6-(5-trifluoromethyl-2H-benzotriazol-2-yl)phenol]

Using the procedure of Example B2 with 4.5 g of 5-chloro-2-(2-hydroxy-5-tert-butylphenyl)-2H-benzotriazole instead of the 5-phenylsulfonyl-2-(2-hydroxy-5-tert-butylphenyl)-2H-benzotriazole and keeping the same molar ratios of the reactants the same, 8.67 g of the title compound is obtained having a melting point of 32-44°C.
Analysis:
¹Hnmr (CDCl₃): δ 0.73 (s, 9H); 1.36 (s, 9H); 1.42 (s, 6H); 1.76 (s, 2H); 4.31 (s, 2H); 7.40 (d, 1 H); 7.43 (d, 1 H); 7.44 (dd, 1 H); 7.68 (dd, 1H); 7.89 (d, 1 H); 7.94 (d, 1 H); 8.08 (d, 1 H); 8.29 (d, 1 H); 8.32 (d, 2H); 11.23 (s, 1 H); 11.29 (s, 1H).
¹⁹Fnmr (CDCl₃): -68.9 ppm.
Mass spectrometry: m/z 705 (M + H).

### Example B4

### Methylene-2-[4-tert-butyl-6-(5-phenylthio-2H-benzotriazol-2-yl)phenol]-2'-[4-tert-octyl-6-(5-trifluoromethyl-2H-benzotriazol-2-yl)phenol]

Using the procedure of Example B2 with 5.67 g of 5-phenylthio-2-(2-hydroxy-5-tert-butylphenyl)-2H-benzotriazole instead of the 5-phenylsulfonyl-2-(2-hydroxy-5-tert-butylphenyl)-2H-benzotriazole and keeping the same molar ratios of the reactants the same, 5.97 g of the title compound is obtained having a melting point of 49-65°C.
Analysis:
¹Hnmr (CDCl₃): δ 0.72 (s, 9H); 1.34 (s, 9H); 1.41 (s, 6H); 1.75 (s, 2H); 4.30 (s, 2H); 7.34-7.52 (m, 3H); 7.37 (d, 1 H); 7.39 (dd, 1 H); 7.43 (d, 1 H); 7.50 (d, 2H); 7.68 (d, 1 H); 7.73 (d, 1 H); 7.84 (d, 1H); 8.08 (d, 1H); 8.26 (d, 1 H); 8.31 (d, 1 H); 8.32 (d, 1 H); 11.20 (s, 1 H); 11.36 (s, 1 H).
¹⁹Fnmr (CDCl₃): -68.9 ppm.
Mass spectrometry: m/z 779 (M + H).

### Example B5

### 2,2'-Methylene-bis[6-(5-phenytsulfonyl-2H-benzotriazol-2-yl)-4-tert-butylphenol]

5-Phenylsulfonyl-2-(2-hydroxy-5-tert-butylphenyl)-2H-benzotriazole (15 g, 0.037 mol), paraformaldehyde (0.63 g, 0.019 mol) and di-n-butylamine (5.0 g, 0.386 mol) are charged to a reactor which is then sealed. The temperature is increased to 110°C at which time sodium methoxide (0.33 g, 0.0069 mol) is added. The reaction mixture is then heated to 205°C and held there for three hours, The reaction mass is then cooled to 110°C and 100 mL of xylenes are added. The reaction mass is neutralized with 10% aqueous hydrochloric acid and the organic phase is twice washed with water. The xylene phase is filtered through a plug of silica gel and is then distilled. The crude Mannich product is recrystallized twice from heptane to yield 8.3 g of the title compound having a melting point of 224-234°C.
Analysis:
¹Hnmr (CDCl₃): δ 1.40 (s, 18H); 4.30 (s, 2H); 7.50 (d, 2H); 7.55 (t, 4H); 7.61 (t, 4H); 7.91 (dd, 2H); 8.04 (m, 6H); 8.30 (d, 2H); 8.73 (d, 2H); 11.12 (s, 2H).
Mass spectrometry: m/z 827 (M + H).

### Example B6

### Bisbenzotriazole Solubility in Adhesive

To measure the solubility of the instant bisbenzotriazole UV absorber in an adhesive composition, the compound is added to a typical adhesive GELVA® 263 (Solutia) which is a 44.5% solution of a polyacrylate in a mixture of ethyl acetate and hexane. The polyacrylate is a copolymer of methyl methacrylate, 2-ethylhexyl methacrylate and glycidyl methacrylate.

The test compound is dissolved in 5 mL of ethyl acetate, toluene or a mixture of ethyl acetate and toluene. To the solution is added 5 g of GELVA® 263. 2-3 mL of the resulting solution is place into individual watch glasses. Solubility is then evaluated based upon observed crystallization once the solvent has evaporated. Observations start after several hours and then continue over a period of several weeks.

The solubility values given in the table below are approximate maximum concentrations where no sign of subsequent crystallization is evident. Solubilities are reported in weight of total bisbenzotriazole added to GELVA® 263 as is. From these data, it is clear that some of the instant bisbenzotriazoles are considerably more soluble in adhesives, in this case GELVA® 263, than some bisbenzotriazoles of the prior art. The use of many UV absorbers in adhesive compositions has been limited in the past by the limited solubility and compatibility of some UV absorber compounds.

By using the selected instant bisbenzotriazoles, the use levels for the UV absorber can be raised substantially to add greatly to increased stabilization protection afforded by the instant compound. This is further augmented by the excellent photostability and red-shifted nature of the instant bisbenzotriazoles.

| Solubility without | |
|---|---|
| Trade Name or Class | Crystallization (%) |
| bisbenzotriazole | 0.0 |
| TINUVIN® 900 | 2.0 |
| TINUVIN® 327 | 2.0 |
| bisbenzotriazole | 2.0 |
| bisbenzotriazole | 4.0 |
| bisbenzotriazole | 11.0 |
| bisbenzotriazole | 22.0 |
| bisbenzotriazole | 22.0 |

| | |
|---|---|
| *A is comparative symmetrical bisbenzotriazole compound of Example 5, generically disclosed in German 1,670,951. | |
| B is 2-(2-hydroxy-3,5-di-α-cumylphenyl)-2H-benzotriazole. | |
| C is 5-chloro-2-(2-hydroxy-3,5-di-tert-butylphenyl)-2H-benzotriazole. | |
| D is methylene-2-[4-tert-octyl-6-(2H-benzotriazol-2-yl)phenol]-2'-[4-tert-octyl-6-(5-trifluoro-methyl-2H-benzotriazol-2-yl)phenol]. | |
| E is 2,2'-methylene-bis[6-(5-trifluoromethyl-2H-benzotriazol-2-yl)-4-tert-octylphenol]. | |
| F is instant asymmetrical bisbenzotriazole compound of Example 3. | |
| G is instant asymmetrical bisbenzotriazole compound of Example 2. | |
| H is instant asymmetrical bisbenzotriazole compound of Example 4. | |

### Example B7

### Methylene-2-[4-(2-methoxycarbonylethyl)-6-(5-chloro-2H-benzotriazol-2-yl)phenol]-2'-[4-tert-octyl-6-(5-trifluoromethyl-2H-benzotriazol-2-yl)phenol]

Following the general synthetic procedures outlined in Examples B1 and B2, or disclosed in EP 924,203 A1, the title compound is prepared.

### Examples B8-B30

Following the general synthetic procedures outlined in Examples 1 and 2, the following compounds of formula I are prepared.

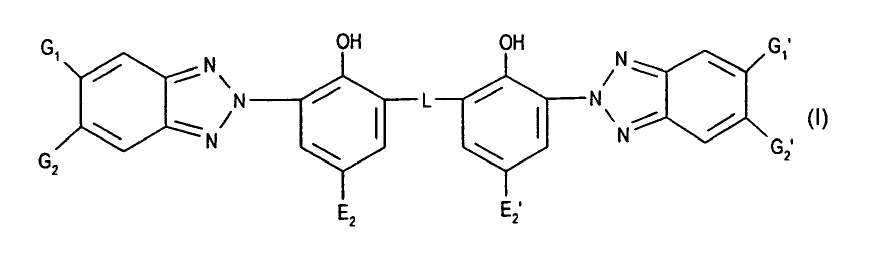

| Ex* | G₂ | E₂ | E₂' | L | G₃ or E₃ |
|---|---|---|---|---|---|
| 8 | F | CH₃ | t-Bu | -CH₂- | - |
| 9 | F | t-Oc | t-Oc | -CH₂- | - |
| 10 | Cl | Do | CH₃ | m-Xy | - |
| 11 | Cl | t-Bu | t-Bu | -CH₂- | - |
| 12 | PO(Ph)₂ | Do | Do | -CH₂- | - |
| 13 | COOG₃ | Cu | Bu | p-Xy | CH₃ |
| 14 | COOG₃ | CH₃ | CH₃ | -CH₂- | Octad |
| 15 | COOG₃ | t-Oc | CH₃ | -CH₂- | Benz |
| 16 | CONHG₃ | C₂₄H₄₉ | Bu | -CH₂- | Bu |
| 17 | CON(G₃)₂ | Do | Hept | -CH₂- | Al |
| 18 | CN | t-Oc | t-Bu | -CH₂- | - |
| 19 | CN | Cu | Do | -CH₂- | - |
| 20 | E₃SO | CH₃ | Cu | -CH₂- | Bu |
| 21 | E₃S | CH₃ | t-Bu | -CH₂- | Do |
| 22 | E₃SO₂ | MeOCOEt | t-Bu | -CH₂- | Ph |
| 23 | E₃SO₂ | MeOCOEt | MeOCOEt | -CH₂- | Oc |
| 24 | E₃SO₂ | t-Bu | t-Bu | -CH₂- | HOEt |
| 25 | CI | AIOCOEt | CH₃ | -CH₂- | - |
| 26 | CI | OcOCOEt | Oc | -CH₂- | - |
| 27 | CI | AIOCOEt | AIOCOEt | -CH₂- | - |
| 28 | CI | MeAcOEt | CH₃ | -CH₂- | - |
| 29 | CI | Do | MeAcOEt | -CH₂- | - |
| 30 | CI | HOPr | HOPr | -CH₂- | - |

| | | | | | |
|---|---|---|---|---|---|
| *G₁ is always hydrogen except in Example 9 where it is F and in Examples 10-11 where it is Cl. | | | | | |
| G₁' is always hydrogen except in Example 11 where it is CI. | | | | | |
| G₂' is always CF₃ except in Example 10 where it is C₈F₁₇ and in Example 11 where it is C₂F₅. | | | | | |
| Al is allyl, AIOCOEt is CH₂=CH-CH₂OCOCH₂CH₂, Benz is benzyl, Bu is butyl, t-Bu is tert-butyl, Cu is α-cumyl, Do is dodecyl, Hept is heptyl, HOEt is HOCH₂CH₂, HOPr is HOCH₂CH₂CH₂, MeAcOEt is CH₂=C(CH₃)COOCH₂CH₂, MeOCOEt is CH₃OCOCH₂CH₂, Oc is octyl, t-Oc is tert-octyl, OcOCOEt is C₈H₁₇OCOCH₂CH₂, Octad is octadecyl, Ph is phenyl, m-Xy is α,α,α',α'-tetramethyl-m-xylylene and p-Xy is α,α,α',α'-tetramethyl-p-xylylene. | | | | | |

### Example 31

### Polycarbonate

The durability of the instant benzotriazoles in thermoplastic substrates is determined by incorporating various test compounds into solvent cast films of polycarbonate resins. The free standing films are mounted into cardboard holders, secured in metal frames and exposed in an Atlas C165 Xenon-arc Weather-Ometer under dry conditions according to ASTM G26 for 1100 and 2200 hour exposure. Loss of UV absorber is determined by monitoring the loss of diagnostic UV absorption as described earlier. Performance is measured by a change in color or the physical integrity of the film.

Polycarbonate flake (LEXAN® 145, General Electric) is dissolved in methylene chloride at room temperature along with between 1 and 3% by weight of test benzotriazole, based on the polycarbonate. Films are cast using a calibrated drawdown bar to prepare 1 mil thick film after drying.

There is an increase in durability obtained with a benzotriazole substituted on the 5-position of the benzo ring with a trifluoromethyl moiety.

### Example 32

### Pigmented Polyacetal

The following example shows an improvement in color protection of a pigmented polyacetal formulation for a bisbenzotriazole substituted on the 5-position of the benzo ring with a trifluoromethyl moiety.

The test additives are dry blended with polyacetal pellets (DELRIN® 500P NC010, DuPont) using a Turbula mixer. The dry blend is extruded and pelletized using a twin screw extruder at a melt temperature of about 410°F (210°C). The pellets are molded into test plaques (2" x 2" x 0.060") using an injection molder operated at 410-420°F (204-216°C). The plaques are exposed in a Xenon-arc Weather-Ometer according to automotive test procedure SAE J1885. Exposure is measured in terms of the total irradiation, measured in kilojoules per square meter (kJ/m²). Color change in the exposed samples is determined by measuring the color of the exposed samples compared to the unexposed samples as color difference (ΔE) according to ASTM D2244.

### Example 33

### Poly(butylene terephthalate)

The following example illustrates the superior performance of a bisbenzotriazole substituted on the 5-position of the benzo ring with a trifluoromethyl group in protecting poly(butylene terephthalate) as measured by gloss retention.

The test additives are dry blended with poly(butylene terephthalate) pellets (VALOX® 315-1001, General Electric) using a Turbula mixer. The dry blends are extruded and pelletized using a twin screw extruder at 465-490°C. The pellets are molded into test plaques (2" x 2" x 0.060") using an injection molder operated at 475-515°F (246-268°C). The plaques are exposed in a Xenon arc Weather-Ometer according to ASTM G26 test method A. Gloss is measure at 60° on the unexposed and exposed samples using a glossmeter according to ASTM D523. Gloss retention % = (gloss exposed sample/gloss of unexposed sample) x 100.

### Example 34

### Polystyrene

Polystyrene films (crystalline polystyrene obtained from Chevron, free of zinc stearate and mineral oil) are solvent case from solutions in methylene chloride. These films are exposed to UV light as described in Example 31. The samples contain no hindered amine stabilizer and are monitored for color change after 1000 hours exposure, for loss of UV absorber and for physical integrity (cracking or catastrophic film failure).

### Example 35

### Poly(methyl methacrylate)

The durability of the instant benzotriazoles in thermoplastic substrates is determined by incorporating various test compounds into solvent cast films of a poly(methyl methacrylate) resin. The free standing films are mounted into cardboard holders, secured in metal frames and exposed in an Atlas C165 Xenon-arc Weather-Ometer under dry conditions according to ASTM G26 for 1100 and 2200 hour exposure. Loss of UV absorber is determined by monitoring the loss of diagnostic UV absorption as described earlier. Performance is measured by a change in color or the physical integrity of the film, or in loss of absorbance of the UV absorber at λmax.

Poly(methyl methacrylate), medium molecular weight, Aldrich, is dissolved in methylene chloride at room temperature along with between 1 and 3% by weight of test benzotriazole, based on the PMMA resin. Films are cast using a calibrated drawdown bar to prepare 1 mil thick film after drying.

There is an increase in durability obtained with a bisbenzotriazole substituted on the 5-position of the benzo ring with a trifluoromethyl moiety.

### Example 36

### Polyurethane

An acrylic polyol (RK 4037, DuPont) which is 75% solids in methyl amyl ketone is used in these experiments. The molecular weight is 7000-9000 and the OH number is 145. To 595 g of the acrylic polyol are added 26.2 g of butyl acetate, 5.8 g of ethyl acetate and 0.4 g of 50% strength FC 439 (flow control aid, 3M). Bis(1-octylocy-2,2,6,6-tetramethylpiperidin-4-yl) sebacate (0.75 g TINUVIN® 123, Ciba), 1% by weight based on resin solids, is added to the mixture. To 2.43 g of the above mixture is added 0.9 g of DESMODUR® N-3390 (Bayer), an aliphatic polyisocyanate, 90% solids. The UV absorber is incorporated into the acrylic polyol component. The polyurethane formed is applied as a coating onto a quartz disc by spin coating at 1000 rpm for two seconds. The wet coating is cured at 260°F (127°C) for 30 minutes.

UV spectra are collected using a λ-9 spectrophotometer from Perkin Elmer every half nm at 120 nm/min using a slit width of 2 nm.

Loss rates are measured from a 1.4 mil coating. The absorbance of the long wavelength UV absorbance band is around 2.3 before weathering. Weathering is done according to SAE J-1960 (exterior automotive weathering conditions): 0.55 watts/sq. in. at 340 nm using inner and outer borosilicate filters, 40' straight irradiance with no water spray; 20' light plus front spray; 60' light and 60' dark plus rear spray (condensation). Black panel temperature in light cycle is 70±2°C and relative humidity of 50-55% in light cycle and 100% in dark cycle. The loss of long wavelength absorbance band is followed after approximately every 200 hours.

This test shows that the instant bisbenzotriazoles are especially durable in polyurethane films as judged by low loss rates.

### Example 37

### Poly(vinyl chloride)

Poly(vinyl chloride) (PVC) films of GEON® 27 (Geon Co.) are solvent cast as described in Example 31 in warm tetrahydrofuran (THF) and then exposed in an Atlas C165 Weather-Ometer as described in Example 31.

This test shows that the instant bisbenzotriazoles are especially durable in PVC films as judged by low loss rates.

### Example 38

### Coating Composition

A high solids thermoset acrylic clear coat is prepared by mixing an experimental acrylic polyol resin and hexamethoxymethylmelamine (Resimene® 747, Monsanto) at a solids ratio of 60/40. The dodecylbenzene sulfonic acid catalyst (Nacure® 5225; King Industries) is added at 0.70% by weight. A flow aid Modaflow® (Monsanto) is added at 0.25% by weight to form a model acrylic melamine resin system.

The model clear coat is reduced with xylene to a viscosity of 26-27 second using a Zahn #2 cup and applied via a conventional air spray at 50 psi (3.5 Kg/cm²) over a 1" x 3" (2.54 cm x 7.62 cm) quartz slide. Cure is achieved by baking the slide for 30 minutes at 260°F (127°C). The clear coat is stabilized with 1% by weight of a hindered amine light stabilizer, bis-(1-octyloxy-2,2,6,6-tetramethylpiperidin-4-yl) sebacate, (TINUVIN® 123, Ciba). The various test benzotriazole UV absorbers are incorporated at the 5 mmol % by weight in the clear coat. The film thickness on the quartz slides range from 1.15 to 1.41 mils (0.029 to 0.036 mm).

The films on the quartz slides are weathered according to the following conditions in Xenon Arc Weather-Ometer with a controlled irradiance at 6500 W, using inner quartz and outer borosilicate S-type filter. The irradiation cycle is as follows: 40 minutes of straight irradiation with no water spray, followed by 20 minutes of light plus front spray, followed by 60 minutes of light irradiation and finally by 60 minutes dart plus rear spray (condensation). The setting is at 0.55 W/M² at 340 nm, 1.98 kJ/hour. In the light cycle the black panel temperature is controlled at 70±2°C. The relative humidity in the light cycle is in the range of 50-55% and in the dark cycle 100%. The absorbance of the long wavelength UV band as a function of Xenon arc weathering hours are recorded.

To follow the loss of UV absorbers from the clear coats, UV spectra are measured initially and after weathering at regular time intervals. The UV spectrophotometer measures absorbance linearly up to 5.5 absorbance units using a reference beam attenuation technique.

It is assumed that the degradation products from the UV absorber do not contribute to the UV spectrum. This is tested by following the ratio of absorbance of the band at about 300 nm and the band at about 340 nm. The ratio does not change upon weathering the sample, This suggests that the UV spectrum of the weathered films correspond to the amount of UV absorber remaining in the film with very little if any contribution to the spectrum by photo degradants.

Representative bisbenzotriazole test compounds are incorporated into a high solid thermoset acrylic melamine resin at concentrations between 1.93 and 3% by weight to give equal molar concentrations of the test benzotriazole in equal film thickness and sufficient to give a starting absorbance of approximately 2.0 absorbance units. The test samples are exposed for 2000 hours.

The test shows that the instant bisbenzotriazoles are especially durable in automotive coatings as judged by low loss rates.

## Claims

1. A stabilized adhesive composition, suitable for use as an adhesive layer in a laminated article or multilayer construction, which comprises
(a) an adhesive; and
(b1) a highly soluble, red-shifted, photostable benzotriazole of formula I, II or III 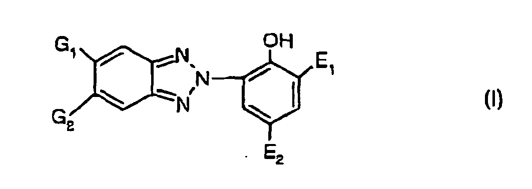 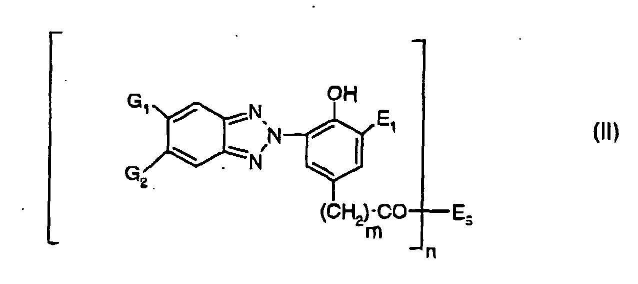 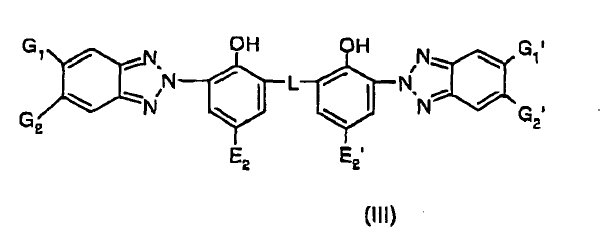
or (b2) a highly soluble and photostable benzotriazole which is 2-(2-hydroxy-3-α-cumyl-5-tert-octylphenyl)-2H-benzotriazole or 2-(2-hydroxy-3-α-cumyl-5-tert-butylphenyl)-2H-benzotriazole; or
a combination of the compounds according to (b1) and (b2);
wherein in formula (I)
G₁ is hydrogen,
G₂ is cyano, chloro, fluoro, CF₃-, -CO-G₃, E₃SO- or E₃SO₂-,
G₃ is straight or branched chain alkyl of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 4 alkyl of 1 to 4 carbon atoms,
E₁ is phenylalkyl of 7 to 15 carbon atoms, phenyl, or said phenyl or said phenylalkyl substituted on the phenyl ring by 1 to 4 alkyl of 1 to 4 carbon atoms,
E₂ is straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 3 alkyl of 1 to 4 carbon atoms; or E₂ is said alkyl of 1 to 24 carbon atoms or said alkenyl of 2 to 18 carbon atoms substituted by one or more -OH, -OE₄, -NCO, -NH₂, -NHCOE₁₁, - NHE₄ or -N(E₄)₂, or mixtures thereof, where E₄ is straight or branched chain alkyl of 1 to 24 carbon atoms; or said alkyl or said alkenyl interrupted by one or more -O-, -NH- or -NE₄₋groups or mixtures thereof and which can be unsubstituted or substituted by one or more - OH, -OE₄ or -NH₂ groups or mixtures thereof:
E₁₁ is as defined below:
E₃ is alkyl of 1 to 20 carbon atoms, hydroxyalkyl of 2 to 20 carbon atoms, alkenyl of 3 to 18 carbon atoms, cycloalkyl of 5 to 12 carbon atoms, phenylalkyl of 7 to 15 carbon atoms, aryl of 6 to 10 carbon atoms or said aryl substituted by one or two alkyl of 1 to 4 carbon atoms or 1,1,2,2-tetrahydroperfluoroalkyl where the perfluoroalkyl moiety is of 6 to 16 carbon atoms; or
is a compound of formula I wherein,
G₁ is hydrogen,
G₂ is chloro, fluoro, CF₃-, E₃SO- or E₃SO₂-,
E₁ is hydrogen or straight or branched alkyl of 1 to 24 carbon atoms,
E₂ is as defined above, and
E₃ is straight or branched chain alkyl of 1 to 7 carbon atoms,
wherein in formula (II) and (III)
G₁ and G₁' are independently hydrogen or halogen,
G₂ and G₂ are independently halogen, nitro, cyano, perfluoroalkyl of 1 to 12 carbon atoms, -COOG₃, -P(O)(C₆H₅)₂, -CO-G₃, -CO-NH-G₈, -CO-N(G₃)₂, -N(G₃)-CO-G₃, E₃SO- or E₃SO₂-; or G₂' is also hydrogen,
G₃ is hydrogen, straight or branched chain alkyl of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 4 alkyl of 1 to 4 carbon atoms,
G₆ is perfluoroalkyl of 1 to 12 carbon atoms,
G₇ is hydrogen or perfluoroalkyl of 1 to 12 carbon atoms,
E₁ is hydrogen, straight or branched chain alkyl of 1 to 24 carbon atoms, straight or branched chain alkenyl of 2 to 24 carbon atoms, cycloalkyl of 5 to 12 carbon atoms, phenylalkyl of 7 to 15 carbon atoms, phenyl, or said phenyl or said phenylalkyl substituted on the phenyl ring by 1 to 4 alkyl of 1 to 4 carbon atoms; or E₁ is alkyl of 1 to 24 carbon atoms substituted by one or two hydroxy groups,
E₂ and E₂' are independently straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by one to three alkyl of 1 to 4 carbon atoms; or E₂ and E₂' are independently said alkyl of 1 to 24 carbon atoms or said alkenyl of 2 to 18 carbon atoms substituted by one or more -OH, -OCOE₁₁, -OE₄, -NCO, -NH₂, -NHCOE₁₁, -NHE₄ or -N(E₄)₂, or mixtures thereof, where E₄ is straight or branched chain alkyl of 1 to 24 carbon atoms; or said alkyl or said alkenyl interrupted by one or more -O-, -NH- or -NE₄- groups or mixtures thereof and which can be unsubstituted or substituted by one or more -OH, -OE₄ or -NH₂ groups or mixtures thereof;
n is 1 or 2,
when n is 1, E₅ is OE₆ or NE₇E₈, or
E₆ is -PO(OE₁₂)₂, -OSi(E₁₁)₃ or -OCO-E₁₁, or straight or branched chain C₁-C₂₄alkyl which is interrupted by -O-, -S- or -NE₁₁ and which can be unsubstituted or substituted by -OH or -OCO-E₁₁, C₅-C₁₂ cycloalkyl which is unsubstituted or substituted by -OH, straight chain or branched C₂-C₁₈alkenyl which is unsubstituted or substituted by -OH, C₇-C₁₆aralkyl, -CH₂-CHOH-E₁₃ or glycidyl,
E₆ is hydrogen, straight or branched chain C₁-C₂₄alkyl which is unsubstituted or substituted by one or more OH, OE₄ or NH₂ groups, or -OE₈ is -(OCH₂CH₂)_{w}OH or -(OCH₂CH₂)_{w}OE₂₁ where w is 1 to 12 and E₂₁ is alkyl of 1 to 12 carbon atoms,
E₇ and E₈ are independently hydrogen, alkyl of 1 to 18 carbon atoms, straight or branched chain C₈-C₁₈alkyl which is interrupted by -O-, -S- or -NE₁₁-, C₅-C₁₂cycloalkyl, C₆₋C₁₄aryl or C₁-C₃hydroxylalkyl, or E₇ and E₈ together with the N atom are a pyrrolidine, piperidine, piperazine or morpholine ring,
E₅ is -X-(Z)ₚ-Y-E₁₅
wherein
X is -O- or -N(E₁₆)-,
Y is -O- or -N(E₁₇)-,
Z is C₂-C₁₂-alkylene, C₄-C₁₂-alkylene interrupted by one to three nitrogen atoms, oxygen atoms or a mixture thereof, or is C₃-C₁₂-alkylene, butenylene, butynylene, cyclohexylene or phenylene, each substituted by a hydroxyl group,
m is zero, 1 or 2,
p is 1, or p is also zero when X and Y are -N(E₁₆)- and -N(E₁₇)-, respectively,
E₁₆ is a group -CO-C(E₁₈)=C(H)E₁₉ or, when Y is -N(E₁₇)-, forms together with E₁₇ a group -CO-CH=CH-CO-, wherein E₁₈ is hydrogen or methyl, and E₁₉ is hydrogen, methyl or - CO-X-E₂₀, wherein E₂₀ is hydrogen, C₁-C₁₂-alkyl or a group of the formula 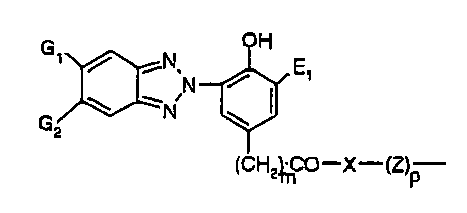 wherein the symbols E₁, G₂, X, Z, m and p have the meanings defined above, and E₁₆ and E₁₇ independently of one another are hydrogen, C₁-C₁₂-alkyl, C₃-C₁₂-alkyl interrupted by 1 to 3 oxygen atoms, or is cyclohexyl or C₇-C₁₅aralkyl, and E₁₆ together with E₁₇ in the case where Z is ethylene, also forms ethylene,
when n is 2, E₅ is one of divalent radicals -O-E₈-O- or -N(E₁₁)-E₁₀-N(E₁₁)-,
E₉ is C₂-C₈alkylone, C₄-C₈lkenylene, C₄alkynylene, cyclohexylene, straight or branched chain C₄-C₁₀alkylene which is interrupted by -O- or by -CH₂-CHOH-CH₂-O-E₁₄-O-CH₂-CHOH-CH₂-,
E,o being straight or branched chain C₂-C₁₂alkylene which may be interrupted by -O-, cyclohexylene, or 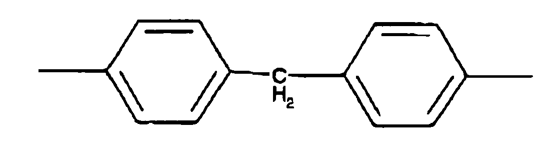 or 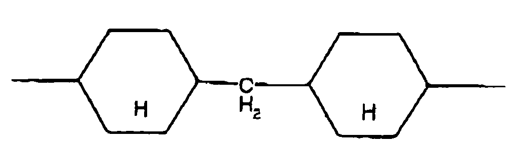 or E₁₀ and E₁₁ with the two nitrogen atoms form a piperazine ring,
E₁₄ is straight or branched chain C₂-C₈alkylene, straight or branched chain C₄₋C₁₀alkylene which is interrupted by -O-, cycloalkylene, arylene or 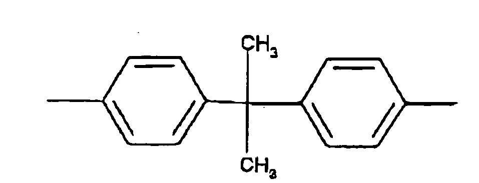 or 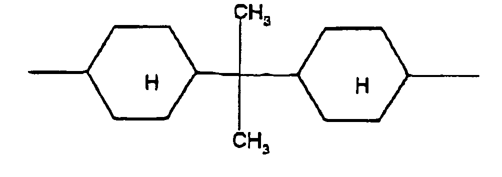 where E₇ and E₈ are independently hydrogen, alkyl of 1 to 18 carbon atoms or E₇ and E₈ together are alkylene of 4 to 6 carbon atoms, 3-oxapentamethylene, 3-iminopentamethylene or 3-methyliminopentamethylene,
E₁₁ is hydrogen, straight or branched chain C₁-C₁₆alkyl, C₆-C₁₂cycloalkyl, straight or branched chain C₂-C₁₈alkenyl, C₆-C₁₄aryl or C₇-C₁₅aralkyl,
E₁₂ is straight or branched chain C₁-C₁₈alkyl, straight or branched chain C₃₋C₁₈alkenyl, C₆-C₁₀cycloalkyl, C₈-C₁₆aryl or C₇-C₁₅aralkyl,
E₁₃ is H, straight chain or branched C₁-C₁₆alkyl which is substituted by -PO(OE₁₂)₂, phenyl which is unsubstituted or substituted by OH, C₇-C₁₅aralkyl or -CH₂OE₁₂,
E₃ is alkyl of 1 to 20 carbon atoms, hydroxyalkyl of 2 to 20 carbon atoms, alkyl substituted by alkoxycarbonyl of 2 to 9 carbon atoms, alkenyl of 3 to 18 carbon atoms, cycloalkyl of 5 to 12 carbon atoms, phenylalkyl of 7 to 15 carbon atoms, aryl of 6 to 10 carbon atoms or said aryl substituted by one or two alkyl of 1 to 4 carbon atoms or 1,1,2,2-tetrahydroperfluoroalkyl where the perfluoroalkyl moiety is of 6 to 16 carbon atoms, and
L is alkylene of 1 to 12 carbon atoms, alkylidene of 2 to 12 carbon atoms, benzylidene, p-xylylene, a,a,a',a'-tetramethyl-m-xylylene or cycloalkylidene.

2. A composition according to claim 1, wherein the benzotriazole (b1) of formula I, II or III and the benzotriazoles (b2) exhibit enhanced durability and low loss of absorbance when exposed to actinic radiation as witnessed by an absorbance loss of less than 0.5 absorbance units after exposure for 893 hours or less than 0.8 absorbance units after exposure for 1338 hours in a Xenon Arc Weather-Ometer.

3. A composition according to claim 1 wherein the benzotriazole compound is a compound of formula IIA 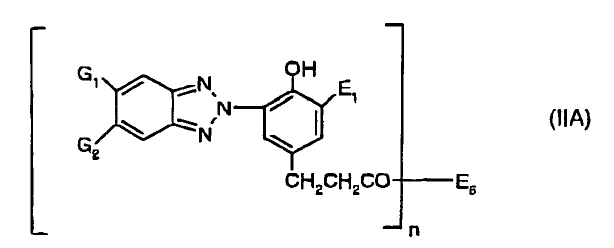 wherein
G₁ is hydrogen,
G₂ is is CF₃- or fluoro,
E₁ is hydrogen, straight or branched alkyl of 1 to 24 carbon atoms or phenylalkyl of 7 to 15 carbon atoms,
E₆ is -OE₆ or -NE₇E₈, or
E₅ is -X-(Z)ₚ-Y-E₁₅
wherein
X is -O- or -N(E₁₆)-,
Y is -O- or -N(E₁₇)-,
Z is C₂-C₁₂-alkylene, C₄-C₁₂-alkylene interrupted by one to three nitrogen atoms, oxygen atoms or a mixture thereof, or is C₃-C₁₂-alkylene, butenylene, butynylene, cyclohexylene or phenylene, each substituted by a hydroxyl group,
m is 0, 1, 2 or 3,
p is 1, or p is also zero when X and Y are -N(E₁₆)- and -N(E₁₇)-, respectively,
E₁₅ is a group -CO-C(E₁₈)=C(H)E₁₉ or, when Y is -N(E₁₇)-, forms together with E₁₇ a group -CO-CH=CH-CO-, wherein E₁₈ is hydrogen or methyl, and E₁₉ is hydrogen, methyl or - CO-X-E₂₀, wherein E₂₀ is hydrogen, C₁-C₁₂-alkyl or a group of the formula.

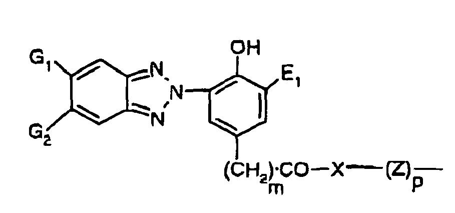

4. A composition according to claim 1 wherein the benzotriazole is a compound of formula IIIA 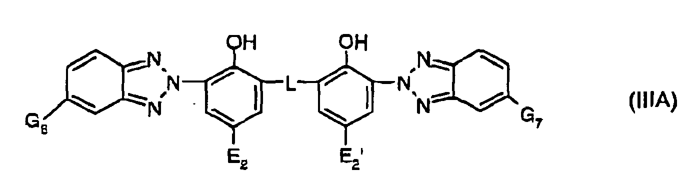 wherein
G₆ is CF₃,
G₇ is hydrogen or CF₃,
E₂ and E₂' are independently straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 3 alkyl of 1 to 4 carbon atoms; and
L is alkylene of 1 to 12 carbon atoms, alkylidene of 2 to 12 carbon atoms, benzylidene, p-xylylene, a,a,a',a'-tetramethyl-m-xylylene or cycloalkylidene.

5. A composition according to claim 1 wherein the benzotriazole is a compound of formula I 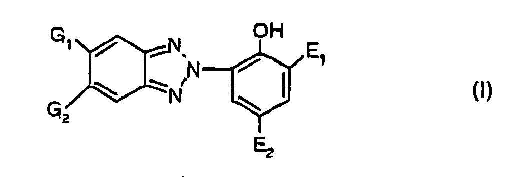 wherein
G₁ is hydrogen,
G₂ is CF₃-,
E₁ is phenylalkyl of 7 to 15 carbon atoms, phenyl, or said phenyl or said phenylalkyl substituted on the phenyl ring by 1 to 4 alkyl of 1 to 4 carbon atoms,
E₂ is straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 3 alkyl of 1 to 4 carbon atoms; or E₂ is said alkyl of 1 to 24 carbon atoms or said alkenyl of 2 to 18 carbon atoms substituted by one or more -OH, -NH₂ or -NHCOE₁₁, or mixtures thereof, or said alkyl or said alkenyl interrupted by one or more -O- and which can be unsubstituted or substituted by one or more -OH; or
is a compound of formula I
wherein,
G₁ is hydrogen,
G₂ is CF₃-,
E₁ is hydrogen, straight or branched alkyl of 1 to 24 carbon atoms or phenylalkyl of 7 to 15 carbon atoms, and
E₂ is as defined above.

6. A composition according to claim 1 wherein the benzotriazole is a compound of formula IIA 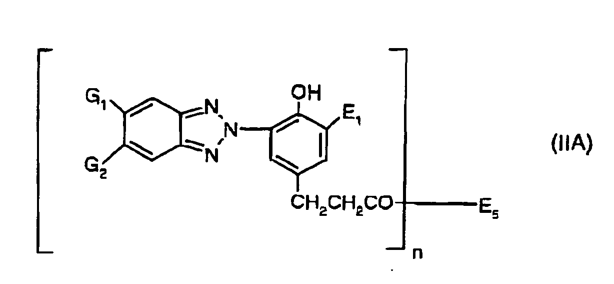 wherein
G₁ is hydrogen,
G₂ is CF₃-,
E₁ is hydrogen, straight or branched alkyl of 1 to 24 carbon atoms or phenylalkyl of 7 to 15 carbon atoms,
E₅ is -OE₆ or -NE₇E₈ where
E₆ is hydrogen, straight or branched chain C₁-C₂₄alkyl which is unsubstituted or substituted by one or more OH groups, or -OE₆ is -(OCH₂CH₂)_{w}OH or - (OCH₂CH₂)_{w}OE₂₁where w is 1 to 12 and E₂₁ is alkyl of 1 to 12 carbon atoms, and
E₇ and E₈ are independently hydrogen, alkyl of 1 to 18 carbon atoms, straight or branched chain C₃-C₁₈alkyl which is interrupted by -O-, -S- or -NE₁₁-, C₆-C₁₂cycloalkyl, C₆₋C₁₄aryl or C₁-C₃hydroxylalkyl, or E₇ and E₈ together with the N atom are a pyrrolidine, piperidine, piperazine or morpholine ring.

7. A composition according to claim 1 wherein the benzotriazole is a compound of formula IIIA 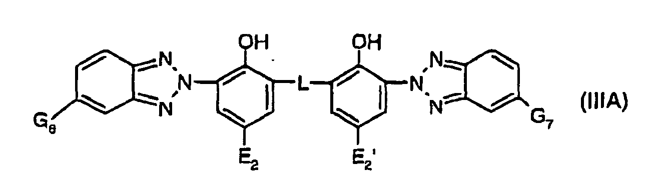 wherein
G₈ is CF₃,
G₇ is hydrogen or OF₃,
E₂ and E₂' are independently straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 3 alkyl of 1 to 4 carbon atoms; and
L is methylene.

8. A composition according to claim 1 wherein the benzotriazole is
(a) 5-trifluoromethyl-2-(2-hydroxy-3-α-cumyl-5-tert-octylphenyl)-2H-benzotriazole;
(b) 5-trifluoromethyl-2-(2-hydroxy-5-tert-octylphenyl)-2H-benzotriazole;
(c) 5-trifluoromethyl-2-(2-hydroxy-3,5-di-tert-octylphenyl)-2H-benzotriazole;
(d) 2,2'-methylene-bis[6-(5-trifluoromethyl-2H-benzotriazol-2-yl)-4-tert-octylphenol];
(e) methylene-2-[4-tert-octyl-6-(2H-benzotriazol-2-yl)phenol]2'-[4-tert-octyl-6-(5-trifluoromethyl-2H-benzotriazol-2-yl)phenol];
(f) 3-(5-trifluoromethyl-2H-benzotriazol-2-yl)-5-tert-butyl-4-hydroxyhydrocinnamic acid;
(g) methyl 3-(5-trifluoromethyl-2H-benzotriazol-2-yl)-5-tert-butyl-4-hydroxyhydrocinnamate;
(h) isooctyl 3-(5-trifluoromethyl-2H-benzotriazol-2-yl)-5-tert-butyl-4-hydroxyhydrocinnamate;
(i) 5-trifluoromethyl-2-[2-hydroxy-5-(3-hydroxypropyl)phenyl]-2H-benzotriazole;
(j) 5-butylsulfonyl-2-(2-hydroxy-3-α-cumyl-5-tert-octylphenyl)-2H-benzotriazole;
(k) 5-octylsulfonyl-2-(2-hydroxy-3,5-di-α-cumylphenyl)-2H-benzotriazole;
(l) 5-dodecylsulfonyl-2-(2-hydroxy-3,5-di-tert-butylphenyl)-2H-benzotriazole;
(m) 5-octylsulfonyl-2-(2-hydroxy-3,5-di-tert-octylphenyl)-2H-banzotriazole;
(n) 5-trifluoromethyl-2-(2-hydroxy-3-α-cumyl-5-tert-butylphenyl)-2H-benzotriazole;
(o) 5-trifiuoromethyl-2-(2-hydroxy-3-α-cumyl-5-nonylphenyl)-2H-benzotriazole;
(p) 5-trifluoromethyl-2-[2-hydroxy-3-α-cumyl-5-(2-hydroxyethyl)phenyl]-2H-benzo triazole;
(q) 5-trifluoromethyl-2-[2-hydroxy-3-α-cumyl-5-(3-hydroxypropyl)phenyl]-2H-benzotriazole;
(r) 5-trifluoromethyl-2-(2-hydroxy-3,5-di-tert-amylphenyl)-2H-benzotriazole;
(s) 5-trifluoromethyl-2-(2-hydroxy-3,5-di-tert-butylphenyl)-2H-benzotriazole;
(t) 5-trifluoromethyl-2-(2-hydroxy-3-dodecyl-5-methylphenyl)-2H-benzotriazole;
(u) 5-trifluoromethyl-2-[2-hydroxy-3-tert-butyl-5-(3-hydroxypropyl)phenyl)-2H-benzotriazole;
(v) 5-trifluoromethyl-2-[2-hydroxy-3-tert-butyl-5-(2-hydroxyethyl)phenyl]-2H-benzo triazole;
(w) 5-trifluoromethyl-2-[2-hydroxy-5-(2-hydroxyelhy)phenyl]-2H-benzotriazole;
(x) 5-trifluoromethyl-2-(2-hydroxy-3,5-di-α-cumylphenyl)-2H-benzotriazole;
(y) 5-fluoro-2-(2-hydroxy-3,5-di-α-cumylphenyl)-2H-benzotriazole;
(z) 5-butylsutfonyl-2-(2-hydroxy-3,5-di-α-cumylphenyl)-2H-benzotriazole;
(aa) 5-butylsulfonyl-2-(2-hydroxy-3,5-di-tert-butylphenyl)-2H-benzotriazole;
(bb) 5-butylsulfonyl-2-(2-hydroxy-3,5-di-tert-octylphenyl)-2H-benzotriazole;
(cc) 5-phenylsulfonyl-2-(2-hydroxy-3,5-di-tert-butylphenyl)-2H-benzotriazole; or
(dd) 5-chloro-2-(2-hydroxy-3,5-di-α-cumylphenyl)-2H-benzotriazole,

9. A composition according to claim 1 wherein the amount of benzotriazole of component (b1) or (b2) is 0.1 to 20% by weight based on the adhesive composition.

10. A composition according to claim 1 wherein the relative amount of (b1) to (b2) by weight is from 75:25 to 25:75.

11. A composition according to claim 1 wherein the adhesive of component (a) is selected from the group consisting of the pressure sensitive adhesives, the rubber-based adhesives, the solvent or emulsion based adhesives, the hot melt adhesives and natural-product based adhesives.

12. A composition according to claim 1 wherein the adhesive composition is present in a laminated or multilayer construction.

13. A composition according to claim 12 wherein the laminated or multilayer construction is selected from the group consisting of
(a) retroreflective sheets and signs and conformable marking sheets;
(b) solar control films of various construction;
(c) corrosion resistant silver mirrors and solar reflectors;
(d) reflective print labels;
(e) UV absorbing glasses and glass coatings;
(f) electrochromic devices;
(g) films/glazings;
(h) windscreens and intermediate layers; and
(i) optical films,

14. A composition according to claim 1 wherein the adhesive of component (a) is a resin selected from the group consisting of
(i) polyurethanes;
(ii) polyacrylics;
(iii) epoxys;
(iv) phenolics;
(v) polyimides:
(vi) poly(vinyl butyral);
(vii) polycyanoacrylates;
(viii) polyacrylates;
(ix) ethylene/acrylic acid copolymers and their salts (ionomers);
(x) silicon polymers;
(xi) poly(ethylene/vinyl acetate);
(xii) atatic polypropylene;
(xiii) styrene-diene copolymers;
(xiv) polyamides;
(xv) hydroxyl-terminated polybutadiene;
(xvi) polychloroprene;
(xvii) poly(vinyl acetate);
(xviii) carboxylated styrene/butadiene copolymers;
(xix) poly(vinyl alcohol); and
(xx) polyesters.

15. A composition according to claim 14 wherein the adhesive of component (a) is a resin selected from the group consisting of
poly(vinyl butyral), ethylene/vinyl acetate copolymers, polyacrylics, polyacrylates, natural rubber, polycyanoacrylates, poly(vinyl alcohol), styrene/butadiene rubber, phenolics, vinyl polymers, polyurethanes and styrene block copolymers.

16. A stabilized adhesive composition, suitable for use as an adhesive layer in a laminated article or multilayer construction, which comprises
(a) an adhesive; and
(b) a combination of
(1) a highly photostable benzotriazole which is 2-(2-hydroxy-3,5-di-α-cumylphenyl)-2H-benzotriazole or a red-shifted benzotriazole which is 5-chloro-2-(2-hydroxy-3,5-di-tert-butylphenyl)-2H-benzotriazole or 5-chloro-2-(2-hydroxy-3-tert-butyl-5-methylphenyl)-2H-benzotriazole each of which has relatively low solubility in some adhesives; and
(2) a solubilizing amount of a second benzotriazole having high solubility in said adhesives and selected from the group consisting of 2-(2-hydroxy-3,5-di-tert-butylphenyl)-2H-benzotriazole, 2-(2-hydroxy-3,5-di-tert-amylphenyl)-2H-benzotriazole, 2-(2-hydroxy-5-tert-octylphenyl)-2H-benzotriazole, 2-(2-hydroxy-3-sec-butyl-5- tert-butylphenyl)-2H-banzotriazole, 2-(2-hydroxy-3-α-cumyl-5-tert-octylphenyl)-2H-benzotriazole or 2-(2-hydroxy-3-α-cumyl-5-tert-butylphenyl)-2H-benzotriazole;

17. A composition according to claim 16 wherein the benzotriazole mixture in component (b) exhibits enhanced durability and low loss of absorbance when exposed to actinic radiation as witnessed by an absorbance loss of less than 0.5 absorbance units after exposure for 893 hours or less than 0.8 absorbance units after exposure for 1338 hours in a Xenon Arc Weather-Ometer.

18. A compound of formula IIIc 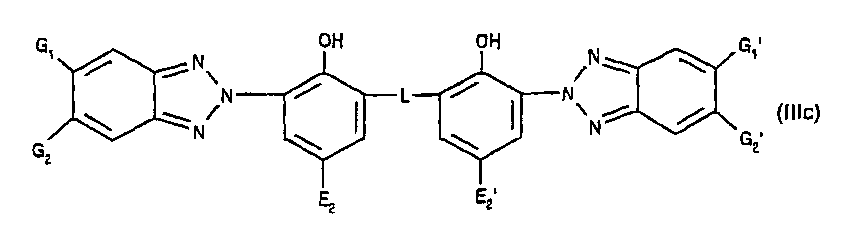 wherein
G₁ and G₁' are independently hydrogen or halogen:
G₂ is halogen, nitro, cyano, -COOG₃, -P(O)(C₆H₅)₂, -CO-G₃, -CO-NH-G₃, -CON(G₃)₂, -N(G₃)-CO-G₃, E₃S-, E₃SO- or E₃SO₂-;
G₂' is perfluoroalkyl of 1 to 12 carbon atoms;
G₃ is hydrogen, straight or branched chain alkyl of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 4 alkyl of 1 to 4 carbon atoms;
E₂ and E₂' are independently straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by one to three alkyl of 1 to 4 carbon atoms; or E₂ and E₂' are independently said alkyl of 1 to 24 carbon atoms or said alkenyl of 2 to 18 carbon atoms substituted by one or more -OH, -OCOE₁₁, -OE₄, -NCO, -NH₂, -NHCOE₁₁, -NHE₄ or -N(E₄)₂, or mixtures thereof, where E₄ is straight or branched chain alkyl of 1 to 24 carbon atoms; or said alkyl or said alkenyl interrupted by one or more -O-, -NH- or -NE₄- groups or mixtures thereof and which can be unsubstituted or substituted by one or more -OH, -OE₄ or -NH₂ groups or mixtures thereof; or E₂ and E₂' are independently -(CH₂)ₘ-CO-E₅; or E₂ and E₂' are independently a group of the formula
-(CH₂)ₘ-CO-X-(Z)ₚ-Y-E₁₆
wherein
E₆ is -OE₈ or -NE₇E₈, or
E₅ is -PO(OE₁₂)₂, -OSi(E₁₁)₃ or -OCO-E₁₁,
or straight or branched chain C₁-C₂₄alkyl which is interrupted by -O-, -S- or -NE₁₁ and which can be unsubstituted or substituted by -OH or -OCO-E₁₁, C₅-C₁₂ cycloalkyl which is unsubstituted or substituted by -OH, straight chain or branched C₂-C₁₈alkenyl which is unsubstituted or substituted by -OH, C₇-C₁₅aralkyl, -CH₂-CHOH-E₁₃ or glycidyl,
E₆ is hydrogen, straight or branched chain C₁-C₂₄alkyl which is unsubstituted or substituted by one or more OH, OE₄ or NH₂ groups, or -OE₆ is -(OCH₂CH₂)_{w}OH or - (OCH₂CH₂)_{w}OE₂₁ where w is 1 to 12 and E₂₁ is alkyl of 1 to 12 carbon atoms,
E₇ and E₈ are independently hydrogen, alkyl of 1 to 18 carbon atoms, straight or branched chain C₃-C₁₈alkyl which is interrupted by -O-, -S- or -NE₁₁-, C₅-C₁₂cycloalkyl, C₈₋C₁₄aryl or C₁-C₃hydroxylalkyl, or E₇ and E₈ together with the N atom are a pyrrolidine, piperidine, piperazine or morpholine ring,
X is -O- or -N(E₁₆)-,
Y is -O- or -N(E₁₇)-,
Z is C₂-C₁₂-alkylene, C₄-C₁₂-alkylene interrupted by one to three nitrogen atoms, oxygen atoms or a mixture thereof, or is C₃-C₁₂-alkylene, butenylene, butynylene, cyclohexylene or phenylene, each substituted by a hydroxyl group,
m is zero, 1 or 2.
p is 1, or p is also zero when X and Y are -N(E₁₆)- and -N(E₁₇)-, respectively,
E₁₆ is a group -CO-C(E₁₈)=C(H)E₁₉ or, when Y is -N(E₁₇)-, forms together with E₁₇ a group -CO-CH=CH-CO-, wherein E₁₈ is hydrogen or methyl, and E₁₉ is hydrogen, methyl or - CO-X-E₂₀, wherein E₂₀ is hydrogen or C₁-C₁₈-alkyl;
E₁₆ and E₁₇ independently of one another are hydrogen, C₁-C₁₈-alkyl, C₃-C₁₂-alkyl interrupted by 1 to 3 oxygen atoms, or is cyclohexyl or C₇-C₁₅aralkyl, and E₁₈ together with E₁₇ in the case where Z is ethylene, also forms ethylene,
E₁₁ is hydrogen, straight or branched chain C₁-C₁₈alkyl, C₅-C₁₂cycloalkyl, straight or branched chain C₂-C₁₈alkenyl, C₈-C₁₄aryl or C₇-C₁₅aralkyl;
E₁₂ is straight or branched chain C₁-C₁₆alkyl, straight or branched chain C₃₋C₁₈alkenyl, C₆-C₁₀cycloalkyl, C₆-C₁₈aryl or C₇-C₁₅aralkyl;
E₁₃ is hydrogen, straight chain or branched C₁-C₁₈alkyl which is substituted by - PO(OE₁₂)₂, phenyl which is unsubstituted or substituted by OH, C₇-C₁₆aralkyl or -CH₂OE₁₂;
E₉ is alkyl of 1 to 20 carbon atoms, hydroxyalkyl of 2 to 20 carbon atoms, alkyl substituted by alkoxycarbonyl of 2 to 9 carbon atoms, alkenyl of 3 to 18 carbon atoms, cycloalkyl of 5 to 12 carbon atoms, phenylalkyl of 7 to 15 carbon atoms, aryl of 6 to 10 carbon atoms or said aryl substituted by one or two alkyl of 1 to 4 carbon atoms or 1,1,2,2-tetrahydroperfluoroalkyl where the perfluoroalkyl moiety is of 6 to 16 carbon atoms; and
L is alkylene of 1 to 12 carbon atoms, alkylidene of 2 to 12 carbon atoms, benzylidene, p-xylylene, α,α,α',α'-tetramethyl-m-xylylene or cycloalkylidene.

19. A compound of formula IIIc according to claim 18 wherein
G₁ and G₁' are each hydrogen,
G₂ is chloro, phenylsulfonyl or phenylthio,
G₂' is CF₃,
E₂ and E₂' are independently straight or branched alkyl chain of 1 to 24 carbon atoms, straight or branched chain alkenyl of 2 to 18 carbon atoms, cycloalkyl of 5 to 12 carbon atoms, phenylalkyl of 7 to 15 carbon atoms, phenyl, or said phenyl or said phenylalkyl substituted on the phenyl ring by 1 to 3 alkyl of 1 to 4 carbon atoms; and
L is methylene.

20. A composition stabilized against thermal, oxidative or light-induced degradation which comprises,
(a) an organic material subject to thermal, oxidative or light-induced degradation, and
(b) a compound of formula IIIc according to claim 19.

21. A composition according to claim 20 wherein the organic material is a natural, semi-synthetic, synthetic, thermoplastic or crosslinked polymer.

## Patentansprüche

1. Stabilisierte Klebstoffzusammensetzung, die zur Verwendung als eine Klebstoffschicht in einem laminierten Gegenstand oder Mehrschichtaufbau geeignet ist, die umfasst
(a) einen Klebstoff; und
(b1) ein stark lösliches, rot verschobenes, lichtbeständiges Benzotriazol der Formel I, II oder III 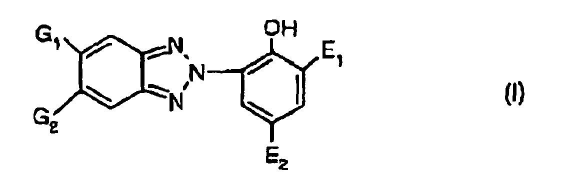 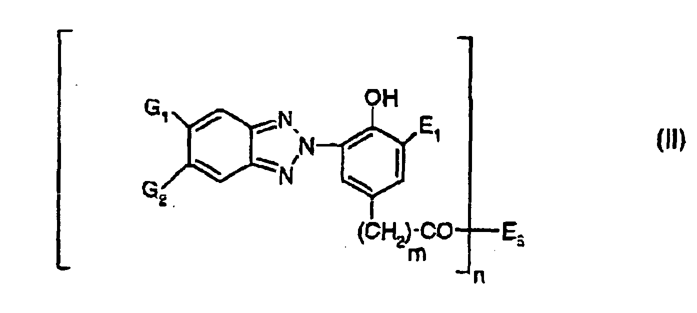 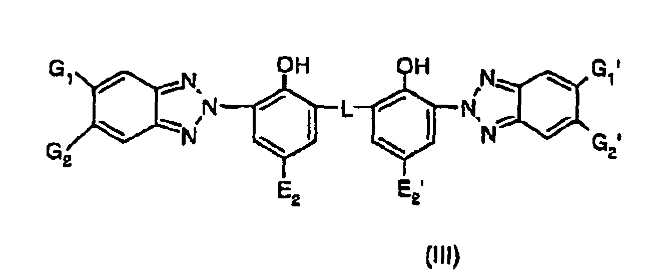 oder
(b2) ein stark lösliches und lichtbeständiges Benzotriazol, das 2-(2-Hydroxy-3-α-cumyl-5-tert-octylphenyl)-2H-benzotriazol oder 2-(2-Hydroxy-3-α-cumyl-5-tert-butylphenyl)-2H-benzotriazol darstellt; oder
eine Kombination von den Verbindungen nach (b1) und (b2);
wobei in Formel (I)
G₁ Wasserstoff darstellt,
G₂ Cyano, Chlor, Fluor, CF₃-, -CO-G₃, E₃SO- oder E₃SO₂₋darstellt,
G₃ gerad- oder verzweigtkettiges Alkyl mit 1 bis 24 Kohlenstoffatomen, gerad- oder verzweigtkettiges Alkenyl mit 2 bis 18 Kohlenstoffatomen, Cycloalkyl mit 5 bis 12 Kohlenstoffatomen, Phenylalkyl mit 7 bis 15 Kohlenstoffatomen, Phenyl, oder das Phenyl oder das Phenylalkyl, substituiert an dem Phenylring mit 1 bis 4 Alkyl mit 1 bis 4 Kohlenstoffatomen, darstellt,
E₁ Phenylalkyl mit 7 bis 15 Kohlenstoffatomen, Phenyl, oder das Phenyl oder das Phenylalkyl, substituiert an dem Phenylring mit 1 bis 4 Alkyl mit 1 bis 4 Kohlenstoffatomen, darstellt,
E₂ gerad- oder verzweigtkettiges Alkyl mit 1 bis 24 Kohlenstoffatomen, gerad- oder verzweigtkettiges Alkenyl mit 2 bis 18 Kohlenstoffatomen, Cycloalkyl mit 5 bis 12 Kohlenstoffatomen, Phenylalkyl mit 7 bis 15 Kohlenstoffatomen, Phenyl, oder das Phenyl oder das Phenylalkyl, substituiert an dem Phenylring mit 1 bis 3 Alkyl mit 1 bis 4 Kohlenstoffatomen, darstellt; oder E₂ das Alkyl mit 1 bis 24 Kohlenstoffatomen oder das Alkenyl mit 2 bis 18 Kohlenstoffatomen, substituiert mit einem oder mehreren -OH, -OE₄, -NCO, -NH₂, -NHCOE₁₁, -NHE₄ oder -N(E₄)₂ oder Gemischen davon, worin E₄ gerad- oder verzweigtkettiges Alkyl mit 1 bis 24 Kohlenstoffatomen darstellt; oder das Alkyl oder das Alkenyl, unterbrochen durch eine oder mehrere -O-, -NH- oder -NE₄-Gruppen oder Gemische davon, und das unsubstituiert oder mit einer oder mehreren -OH, -OE₄ oder -NH₂-Gruppen oder Gemischen davon substituiert sein kann, darstellt;
E₁₁ wie nachstehend definiert ist;
E₃ Alkyl mit 1 bis 20 Kohlenstoffatomen, Hydroxyalkyl mit 2 bis 20 Kohlenstoffatomen, Alkenyl mit 3 bis 18 Kohlenstoffatomen, Cycloalkyl mit 5 bis 12 Kohlenstoffatomen, Phenylalkyl mit 7 bis 15 Kohlenstoffatomen, Aryl mit 6 bis 10 Kohlenstoffatomen, oder das Aryl, substituiert mit einem oder zwei Alkyl, mit 1 bis 4 Kohlenstoffatomen, oder 1,1,2,2-Tetrahydroperfluoralkyl, wobei die Perfluoralkyleinheit 6 bis 16 Kohlenstoffatome aufweist, darstellt; oder
eine Verbindung der Formel I darstellt, worin
G₁ Wasserstoff darstellt,
G₂ Chlor, Fluor, CF₃-, E₃SO- oder E₃SO₂- darstellt,
E₁ Wasserstoff oder gerades oder verzweigtes Alkyl mit 1 bis 24 Kohlenstoffatomen darstellt,
E₂ wie vorstehend definiert ist, und
E₃ gerad- oder verzweigtkettiges Alkyl mit 1 bis 7 Kohlenstoffatomen darstellt,
worin in Formel (II) und (III)
G₁ und G₁' unabhängig Wasserstoff oder Halogen darstellen,
G₂ und G₂' unabhängig Halogen, Nitro, Cyano, Perfluoralkyl mit 1 bis 12 Kohlenstoffatomen, -COOG₃, -P(O)(C₆H₅)₂, -CO-G₃, -CO-NH-G₃, -CO-N(G₃)₂, -N(G₃)-CO-G₃, E₃SO- oder E₃SO₂- darstellen; oder G₂' auch Wasserstoff darstellt,
G₃ Wasserstoff, gerad- oder verzweigtkettiges Alkyl mit 1 bis 24 Kohlenstoffatomen, gerad- oder verzweigtkettiges Alkenyl mit 2 bis 18 Kohlenstoffatomen, Cycloalkyl mit 5 bis 12 Kohlenstoffatomen, Phenylalkyl mit 7 bis 15 Kohlenstoffatomen, Phenyl, oder das Phenyl oder das Phenylalkyl, substituiert an dem Phenylring mit 1 bis 4 Alkyl mit 1 bis 4 Kohlenstoffatomen, darstellt,
G₆ Perfluoralkyl mit 1 bis 12 Kohlenstoffatomen darstellt,
G₇ Wasserstoff oder Perfluoralkyl mit 1 bis 12 Kohlenstoffatomen darstellt,
E₁ Wasserstoff, gerad- oder verzweigtkettiges Alkyl mit 1 bis 24 Kohlenstoffatomen, gerad- oder verzweigtkettiges Alkenyl mit 2 bis 24 Kohlenstoffatomen, Cycloalkyl mit 5 bis 12 Kohlenstoffatomen, Phenylalkyl mit 7 bis 15 Kohlenstoffatomen, Phenyl, oder das Phenyl oder das Phenylalkyl, substituiert an dem Phenylring mit 1 bis 4 Alkyl mit 1 bis 4 Kohlenstoffatomen, darstellt; oder E₁ Alkyl mit 1 bis 24 Kohlenstoffatomen, substituiert mit einer oder zwei Hydroxygruppen, darstellt,
E₂ und E₂' unabhängig gerad- oder verzweigtkettiges Alkyl mit 1 bis 24 Kohlenstoffatomen, gerad- oder verzweigtkettiges Alkenyl mit 2 bis 18 Kohlenstoffatomen, Cycloalkyl mit 5 bis 12 Kohlenstoffatomen, Phenylalkyl mit 7 bis 15 Kohlenstoffatomen, Phenyl, oder das Phenyl oder das Phenylalkyl, substituiert an dem Phenylring mit einem bis drei Alkyl mit 1 bis 4 Kohlenstoffatomen, darstellen; oder E₂ und E₂' unabhängig das Alkyl mit 1 bis 24 Kohlenstoffatomen, oder das Alkenyl mit 2 bis 18 Kohlenstoffatomen, substituiert mit einem oder mehreren -OH, -OCOE₁₁, -OE₄, -NCO, -NH₂, -NHCOE₁₁, -NHE₄ oder -N(E₄)₂, oder Gemischen davon, worin E₄ gerad- oder verzweigtkettiges Alkyl mit 1 bis 24 Kohlenstoffatomen darstellt; oder das Alkyl oder das Alkenyl, unterbrochen durch eine oder mehrere -O-, -NH- oder -NE₄-Gruppen oder Gemische davon, und das unsubstituiert oder mit einer oder mehreren -OH-, -OE₄- oder -NH₂-Gruppen oder Gemischen davon, substituiert sein kann, darstellen;
n 1 oder 2 ist,
wenn n 1 ist, E₅ OE₆ oder NE₇E₈ darstellt, oder
E₅ -PO(OE₁₂)₂, -OSi(E₁₁)₃ oder -OCO-E₁₁, oder gerad- oder verzweigtkettiges C₁-C₂₄-Alkyl, das unterbrochen ist durch -O-, -S- oder -NE₁₁, und das unsubstituiert oder mit -OH oder -OCO-E₁₁ substituiert sein kann, C₅-C₁₂-Cycloalkyl, das unsubstituiert oder mit -OH substituiert ist, geradkettiges oder verzweigtes C₂-C₁₈-Alkenyl, das unsubstituiert oder mit -OH, C₇₋C₁₅-Aralkyl, -CH₂-CHOH-E₁₃ oder Glycidyl substituiert ist, darstellt,
E₆ Wasserstoff, gerad- oder verzweigtkettiges C₁-C₂₄₋Alkyl, das unsubstituiert oder mit einer oder mehreren OH-, OE₄- oder NH₂-Gruppen substituiert ist, darstellt, oder -OE₆ -(OCH₂CH₂)_{w}OH oder -(OCH₂CH₂)_{w}OE₂₁ darstellt, worin w 1 bis 12 ist und E₂₁ Alkyl mit 1 bis 12 Kohlenstoffatomen darstellt,
E₇ und E₈ unabhängig Wasserstoff, Alkyl mit 1 bis 18 Kohlenstoffatomen, gerad- oder verzweigtkettiges C₃-C₁₈-Alkyl, das durch -O-, -S- oder -NE₁₁- unterbrochen ist, C₅-C₁₂-Cycloalkyl, C₆-C₁₄-Aryl oder C₁-C₃-Hydroxyalkyl darstellen, oder E₇ und E₈, zusammen mit dem N-Atom, einen Pyrrolidin-, Piperidin-, Piperazin- oder Morpholinring darstellen,
E₅ -X-(Z)ₚ-Y-E₁₅ darstellt,
worin
X -O- oder -N(E₁₆)- darstellt,
Y -O- oder -N(E₁₇)- darstellt,
Z C₂-C₁₂-Alkylen, C₄-C₁₂-Alkylen, unterbrochen durch ein bis drei Stickstoffatome, Sauerstoffatome oder ein Gemisch davon, darstellt, oder C₃-C₁₂-Alkylen, Butenylen, Butinylen, Cyclohexylen oder Phenylen, jeweils substituiert mit einer Hydroxylgruppe, darstellt,
m null, 1 oder 2 ist,
p 1 ist, oder p auch null ist, wenn X und Y -N(E₁₆)-bzw. -N(E₁₇)- darstellen,
E₁₅ eine Gruppe -CO-C(E₁₈)=C(H)E₁₉ darstellt, oder, wenn Y -N(E₁₇)- darstellt, zusammen mit E₁₇, eine Gruppe -CO-CH=CH-CO- bildet, worin E₁₈ Wasserstoff oder Methyl darstellt, und E₁₉ Wasserstoff, Methyl oder -CO-X-E₂₀ darstellt, worin E₂₀ Wasserstoff, C₁-C₁₂-Alkyl oder eine Gruppe der Formel 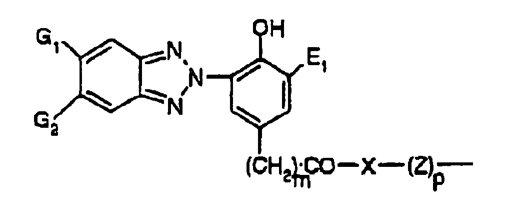 darstellt, worin die Symbole E₁, G₂, X, Z, m und p die vorstehend definierten Bedeutungen aufweisen, und E₁₆ und E₁₇ unabhängig voneinander Wasserstoff, C₁-C₁₂-Alkyl, C₃-C₁₂-Alkyl, unterbrochen durch 1 bis 3 Sauerstoffatome, darstellt, oder Cyclohexyl oder C₇-C₁₅-Aralkyl darstellen, und E₁₆, zusammen mit E₁₇, im Fall, wenn Z Ethylen darstellt, ebenfalls Ethylen bildet,
wenn n 2 ist, E₅ einen von zweiwertigen Resten -O-E₉-O- oder -N(E₁₁)-E₁₀-N(E₁₁)- darstellt,
E₉ C₂-C₈-Alkylen, C₄-C₈-Alkenylen, C₄-Alkinylen, Cyclohexylen, gerad- oder verzweigtkettiges C₄-C₁₀-Alkylen, das durch -O- oder durch -CH₂-CHOH-CH₂-O-E₁₄-O-CH₂-CHOH-CH₂- unterbrochen ist, darstellt,
E₁₀ gerad- oder verzweigtkettiges C₂-C₁₂-Alkylen darstellt, das durch -O-, Cyclohexylen oder 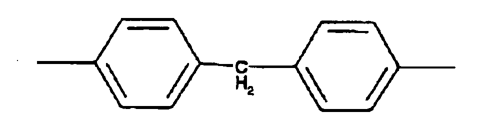 oder 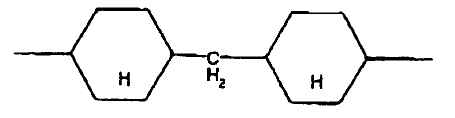 unterbrochen sein kann,
oder E₁₀ und E₁₁ mit den zwei Stickstoffatomen einen Piperazinring bilden,
E₁₄ gerad- oder verzweigtkettiges C₂-C₈-Alkylen, gerad- oder verzweigtkettiges C₄-C₁₀-Alkylen, das durch -O-, Cycloalkylen, Arylen oder 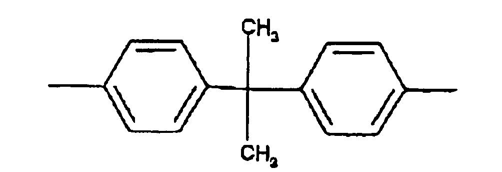 oder 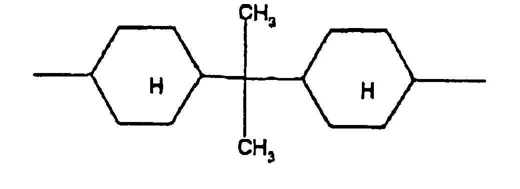 unterbrochen ist, darstellt,
worin E₇ und E₈ unabhängig Wasserstoff, Alkyl mit 1 bis 18 Kohlenstoffatomen darstellen, oder E₇ und E₈ zusammen Alkylen mit 4 bis 6 Kohlenstoffatomen, 3-Oxapentamethylen, 3-Iminopentamethylen oder 3-Methyliminopentamethylen darstellen,
E₁₁ Wasserstoff, gerad- oder verzweigtkettiges C₁-C₁₈₋Alkyl, C₅-C₁₂-Cycloalkyl, gerad- oder verzweigtkettiges C₂-C₁₈₋Alkenyl, C₆-C₁₄-Aryl oder C₇-C₁₅-Aralkyl darstellt,
E₁₂ gerad- oder verzweigtkettiges C₁-C₁₈-Alkyl, gerad- oder verzweigtkettiges C₃-C₁₈-Alkenyl, C₅-C₁₀-Cycloalkyl, C₆-C₁₆₋Aryl oder C₇-C₁₅-Aralkyl darstellt,
E₁₃ H, geradkettiges oder verzweigtes C₁-C₁₈-Alkyl, das mit -PO(OE₁₂)₂ substituiert ist, Phenyl, das unsubstituiert oder mit OH, C₇-C₁₅-Aralkyl oder -CH₂OE₁₂ substituiert ist, darstellt,
E₃ Alkyl mit 1 bis 20 Kohlenstoffatomen, Hydroxyalkyl mit 2 bis 20 Kohlenstoffatomen, Alkyl, substituiert mit Alkoxycarbonyl mit 2 bis 9 Kohlenstoffatomen, Alkenyl mit 3 bis 18 Kohlenstoffatomen, Cycloalkyl mit 5 bis 12 Kohlenstoffatomen, Phenylalkyl mit 7 bis 15 Kohlenstoffatomen, Aryl mit 6 bis 10 Kohlenstoffatomen, oder das Aryl, substituiert mit einem oder zwei Alkyl mit 1 bis 4 Kohlenstoffatomen, oder 1,1,2,2-Tetrahydroperfluoralkyl, worin die Perfluoralkyleinheit 6 bis 16 Kohlenstoffatome aufweist, darstellt, und
L Alkylen mit 1 bis 12 Kohlenstoffatomen, Alkyliden mit 2 bis 12 Kohlenstoffatomen, Benzyliden, p-Xylylen, α,α,α',α'-Tetramethyl-m-xylylen oder Cycloalkyliden darstellt.

2. Zusammensetzung nach Anspruch 1, worin das Benzotriazol (b1) der Formel I, II oder III und die Benzotriazole (b2) erhöhte Dauerhaftigkeit und wenig Verlust an Absorption zeigen, wenn aktinischer Strahlung ausgesetzt, wie durch einen Absorptionsverlust von weniger als 0,5 Absorptionseinheiten nach Aussetzen für 893 Stunden, oder weniger als 0,8 Absorptionseinheiten nach Aussetzen für 1338 Stunden in einem Xenon-Bogen-Weather-Ometer, bestätigt.

3. Zusammensetzung nach Anspruch 1, worin die Benzotriazolverbindung eine Verbindung der Formel IIA darstellt, 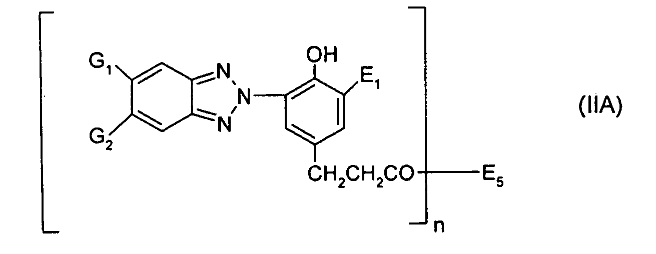 worin
G₁ Wasserstoff darstellt,
G₂ CF₃- oder Fluor darstellt,
E₁ Wasserstoff, gerades oder verzweigtes Alkyl mit 1 bis 24 Kohlenstoffatomen oder Phenylalkyl mit 7 bis 15 Kohlenstoffatomen darstellt,
E₅ -OE₆ oder -NE₇E₈ darstellt, oder
E₅ -X-(Z)ₚ-Y-E₁₅ darstellt,
worin
X -O- oder -N(E₁₆)- darstellt,
Y -O- oder -N(E₁₇)- darstellt,
Z C₂-C₁₂-Alkylen, C₄-C₁₂-Alkylen, unterbrochen durch ein bis drei Stickstoffatome, Sauerstoffatome oder ein Gemisch davon, darstellt, oder C₃-C₁₂-Alkylen, Butenylen, Butinylen, Cyclohexylen oder Phenylen, jeweils substituiert mit einer Hydroxylgruppe, darstellt,
m 0, 1, 2 oder 3 ist,
p 1 ist, oder p ebenfalls null ist, wenn X und Y -N(E₁₆)- bzw. -N(E₁₇)- darstellen,
E₁₅ eine Gruppe -CO-C(E₁₈)=C(H)E₁₉ darstellt, oder, wenn Y -N(E₁₇) - darstellt, zusammen mit E₁₇, eine Gruppe -CO-CH=CH-CO- bildet, worin E₁₈ Wasserstoff oder Methyl darstellt, und E₁₉ Wasserstoff, Methyl oder -CO-X-E₂₀ darstellt, worin E₂₀ Wasserstoff, C₁-C₁₂-Alkyl oder eine Gruppe der Formel 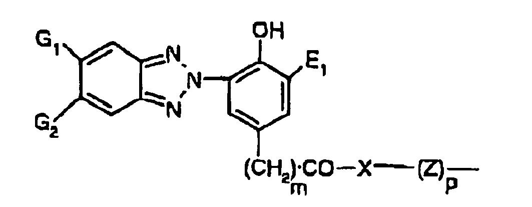 darstellt.

4. Zusammensetzung nach Anspruch 1, worin das Benzotriazol eine Verbindung der Formel IIIA 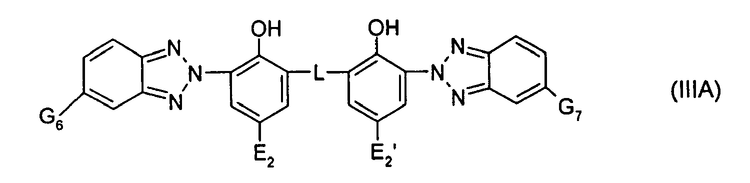 darstellt,
worin
G₆ CF₃ darstellt,
G₇ Wasserstoff oder CF₃ darstellt,
E₂ und E₂' unabhängig gerad- oder verzweigtkettiges Alkyl mit 1 bis 24 Kohlenstoffatomen, gerad- oder verzweigtkettiges Alkenyl mit 2 bis 18 Kohlenstoffatomen, Cycloalkyl mit 5 bis 12 Kohlenstoffatomen, Phenylalkyl mit 7 bis 15 Kohlenstoffatomen, Phenyl, oder das Phenyl oder das Phenylalkyl, substituiert an dem Phenylring mit 1 bis 3 Alkyl mit 1 bis 4 Kohlenstoffatomen, darstellen; und
L Alkylen mit 1 bis 12 Kohlenstoffatomen, Alkyliden mit 2 bis 12 Kohlenstoffatomen, Benzyliden, p-Xylylen, α,α,α',α'-Tetramethyl-m-xylylen oder Cycloalkyliden darstellt.

5. Zusammensetzung nach Anspruch 1, worin das Benzotriazol eine Verbindung der Formel I 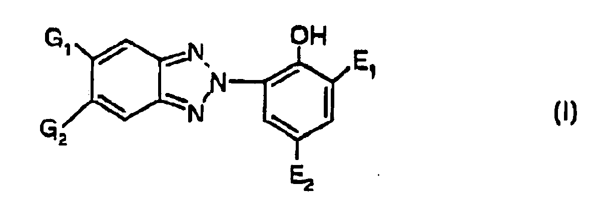 darstellt,
worin
G₁ Wasserstoff darstellt,
G₂ CF₃- darstellt,
E₁ Phenylalkyl mit 7 bis 15 Kohlenstoffatomen, Phenyl, oder das Phenyl oder das Phenylalkyl, substituiert an dem Phenylring mit 1 bis 4 Alkyl mit 1 bis 4 Kohlenstoffatomen, darstellt,
E₂ gerad- oder verzweigtkettiges Alkyl mit 1 bis 24 Kohlenstoffatomen, gerad- oder verzweigtkettiges Alkenyl mit 2 bis 18 Kohlenstoffatomen, Cycloalkyl mit 5 bis 12 Kohlenstoffatomen, Phenylalkyl mit 7 bis 15 Kohlenstoffatomen, Phenyl, oder das Phenyl oder das Phenylalkyl, substituiert an dem Phenylring mit 1 bis 3 Alkyl mit 1 bis 4 Kohlenstoffatomen, darstellt; oder E₂ das Alkyl mit 1 bis 24 Kohlenstoffatomen, oder das Alkenyl mit 2 bis 18 Kohlenstoffatomen, substituiert mit einem oder mehreren -OH, -NH₂ oder -NHCOE₁₁ oder Gemischen davon, oder das Alkyl oder das Alkenyl, unterbrochen durch ein oder mehrere -O-, darstellt, und das unsubstituiert oder mit einem oder mehreren -OH substituiert sein kann; oder
eine Verbindung der Formel I darstellt,
worin
G₁ Wasserstoff darstellt,
G₂ CF₃- darstellt,
E₁ Wasserstoff, gerades oder verzweigtes Alkyl mit 1 bis 24 Kohlenstoffatomen oder Phenylalkyl mit 7 bis 15 Kohlenstoffatomen darstellt, und
E₂ wie vorstehend definiert ist.

6. Zusammensetzung nach Anspruch 1, worin das Benzotriazol eine Verbindung der Formel IIA 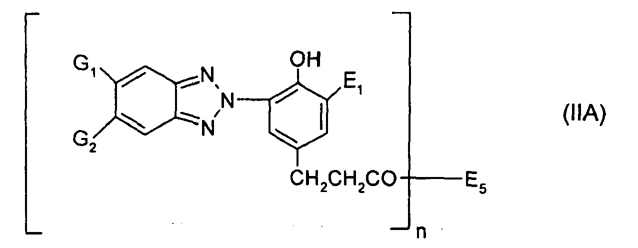 darstellt,
worin
G₁ Wasserstoff darstellt,
G₂ CF₃- darstellt,
E₁ Wasserstoff, gerades oder verzweigtes Alkyl mit 1 bis 24 Kohlenstoffatomen oder Phenylalkyl mit 7 bis 15 Kohlenstoffatomen darstellt,
E₅ -OE₆ oder -NE₇E₈ darstellt, worin
E₆ Wasserstoff, gerad- oder verzweigtkettiges C₁-C₂₄₋Alkyl, das unsubstituiert oder mit einer oder mehreren Gruppen OH substituiert ist, darstellt, oder -OE₆ -(OCH₂CH₂)_{w}OH oder -(OCH₂CH₂)_{w}OE₂₁ darstellt, worin w 1 bis 12 ist und E₂₁ Alkyl mit 1 bis 12 Kohlenstoffatomen darstellt, und
E₇ und E₈ unabhängig Wasserstoff, Alkyl mit 1 bis 18 Kohlenstoffatomen, gerad- oder verzweigtkettiges C₃-C₁₈-Alkyl, das durch -O-, -S- oder -NE₁₁- unterbrochen ist, C₅-C₁₂-Cycloalkyl, C₆-C₁₄-Aryl oder C₁-C₃-Hydroxylalkyl darstellen, oder E₇ und E₈ zusammen mit dem N-Atom einen Pyrrolidin-, Piperidin-, Piperazin- oder Morpholinring darstellen.

7. Zusammensetzung nach Anspruch 1, worin das Benzotriazol eine Verbindung der Formel IIIA 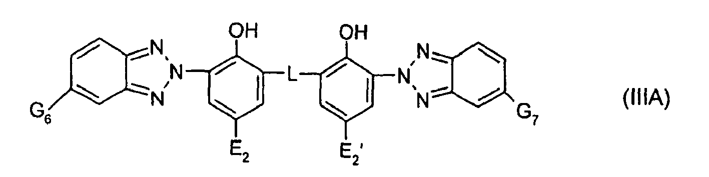 darstellt,
worin
G₆ CF₃ darstellt,
G₇ Wasserstoff oder CF₃ darstellt,
E₂ und E₂' unabhängig gerad- oder verzweigtkettiges Alkyl mit 1 bis 24 Kohlenstoffatomen, gerad- oder verzweigtkettiges Alkenyl mit 2 bis 18 Kohlenstoffatomen, Cycloalkyl mit 5 bis 12 Kohlenstoffatomen, Phenylalkyl mit 7 bis 15 Kohlenstoffatomen, Phenyl, oder das Phenyl oder das Phenylalkyl, substituiert an dem Phenylring mit 1 bis 3 Alkyl mit 1 bis 4 Kohlenstoffatomen, darstellen; und
L Methylen darstellt.

8. Zusammensetzung nach Anspruch 1, worin das Benzotriazol bedeutet
(a) 5-Trifluormethyl-2-(2-hydroxy-3-α-cumyl-5-tert-octylphenyl)-2H-benzotriazol;
(b) 5-Trifluormethyl-2-(2-hydroxy-5-tert-octylphenyl)-2H-benzotriazol;
(c) 5-Trifluormethyl-2-(2-hydroxy-3,5-di-tert-octylphenyl)-2H-benzotriazol;
(d) 2,2'-Methylen-bis[6-(5-trifluormethyl-2H-benzotriazol-2-yl)-4-tert-octylphenol];
(e) Methylen-2-[4-tert-octyl-6-(2H-benzotriazol-2-yl)phenol]2'-[4-tert-octyl-6-(5-trifluormethyl-2H-benzotriazol-2-yl)phenol];
(f) 3-(5-Trifluormethyl-2H-benzotriazol-2-yl)-5-tert-butyl-4-hydroxyhydrozimtsäure;
(g) 3-(5-Trifluormethyl-2H-benzotriazol-2-yl)-5-tert-butyl-4-hydroxyhydrozimtsäuremethylester;
(h) 3-(5-Trifluormethyl-2H-benzotriazol-2-yl)-5-tert-butyl-4-hydroxyhydrozimtsäureisooctylester;
(i) 5-Trifluormethyl-2-[2-hydroxy-5-(3-hydroxypropyl)phenyl]-2H-benzotriazol;
(j) 5-Butylsulfonyl-2-(2-hydroxy-3-α-cumyl-5-tert-octylphenyl)-2H-benzotriazol;
(k) 5-Octylsulfonyl-2-(2-hydroxy-3,5-di-α-cumylphenyl)-2H-benzotriazol;
(1) 5-Dodecylsulfonyl-2-(2-hydroxy-3,5-di-tert-butylphenyl)-2H-benzotriazol;
(m) 5-Octylsulfonyl-2-(2-hydroxy-3,5-di-tert-octylphenyl)-2H-benzotriazol;
(n) 5-Trifluormethyl-2-(2-hydroxy-3-α-cumyl-5-tert-butylphenyl)-2H-benzotriazol;
(o) 5-Trifluormethyl-2-(2-hydroxy-3-α-cumyl-5-nonylphenyl)-2H-benzotriazol;
(p) 5-Trifluormethyl-2-[2-hydroxy-3-a-cumyl-5-(2-hydroxyethyl)phenyl]-2H-benzotriazol;
(q) 5-Trifluormethyl-2-[2-hydroxy-3-α-cumyl-5-(3-hydroxypropyl)phenyl]-2H-benzotriazol;
(r) 5-Trifluormethyl-2-(2-hydroxy-3,5-di-tert-amylphenyl)-2H-benzotriazol;
(s) 5-Trifluormethyl-2-(2-hydroxy-3,5-di-tert-butylphenyl)-2H-benzotriazol;
(t) 5-Trifluormethyl-2-(2-hydroxy-3-dodecyl-5-methylphenyl)-2H-benzotriazol;
(u) 5-Trifluormethyl-2-[2-hydroxy-3-tert-butyl-5-(3-hydroxypropyl)phenyl)-2H-benzotriazol;
(v) 5-Trifluormethyl-2-[2-hydroxy-3-tert-butyl-5-(2-hydroxyethyl)phenyl]-2H-benzotriazol;
(w) 5-Trifluormethyl-2-[2-hydroxy-5-(2-hydroxyethyl)phenyl]-2H-benzotriazol;
(x) 5-Trifluormethyl-2-(2-hydroxy-3,5-di-α-cumylphenyl)-2H-benzotriazol;
(y) 5-Fluor-2-(2-hydroxy-3,5-di-α-cumylphenyl)-2H-benzotriazol;
(z) 5-Butylsulfonyl-2-(2-hydroxy-3,5-di-α-cumylphenyl)-2H-benzotriazol;
(aa) 5-Butylsulfonyl-2-(2-hydroxy-3,5-di-tert-butylphenyl)-2H-benzotriazol;
(bb) 5-Butylsulfonyl-2-(2-hydroxy-3,5-di-tert-octylphenyl)-2H-benzotriazol;
(cc) 5-Phenylsulfonyl-2-(2-hydroxy-3,5-di-tert-butylphenyl)-2H-benzotriazol; oder
(dd) 5-Chlor-2-(2-hydroxy-3,5-di-α-cumylphenyl)-2H-benzotriazol.

9. Zusammensetzung nach Anspruch 1, worin die Menge an Benzotriazol von Komponente (b1) oder (b2) 0,1 bis 20 Gewichtsprozent, bezogen auf die Klebstoffzusammensetzung, ist.

10. Zusammensetzung nach Anspruch 1, worin die relative Menge an (b1) zu (b2), auf das Gewicht, 75:25 bis 25:75 ist.

11. Zusammensetzung nach Anspruch 1, worin der Klebstoff von Komponente (a) aus der Gruppe, bestehend aus den Haftklebstoffen, den auf Kautschuk basierenden Klebstoffen, den auf Lösungsmittel oder Emulsion basierenden Klebstoffen, den Heißschmelzklebstoffen und auf Naturprodukt basierenden Klebstoffen, ausgewählt ist.

12. Zusammensetzung nach Anspruch 1, worin die Klebstoffzusammensetzung in einem laminierten oder Mehrschichtaufbau vorliegt.

13. Zusammensetzung nach Anspruch 12, worin der laminierte oder Mehrschichtaufbau ausgewählt ist aus der Gruppe, bestehend aus
(a) rückstrahlenden Folien und Schildern und sich anpassende Markierungsfolien;
(b) Sonnenschutzfolien von verschiedenem Aufbau;
(c) korrosionsbeständigen Silberspiegeln und Solarreflektoren;
(d) reflektierenden Drucketiketten;
(e) UV-absorbierenden Gläsern und Glasbeschichtungen;
(f) elektrochromen Vorrichtungen;
(g) Folien/Verglasungen;
(h) Windschutzscheiben und Zwischenschichten und
(i) optischen Filmen.

14. Zusammensetzung nach Anspruch 1, worin der Klebstoff von Komponente (a) ein Harz darstellt, ausgewählt aus der Gruppe, bestehend aus
(i) Polyurethanen;
(ii) polyacrylischen Stoffen;
(iii) Epoxiden;
(iv) phenolischen Stoffen;
(v) Polyimiden;
(vi) Poly(vinylbutyral);
(vii) Polycyanacrylaten;
(viii) Polyacrylaten;
(ix) Ethylen/Acrylsäure-Copolymeren und deren Salzen (Ionomeren);
(x) Siliziumpolymeren;
(xi) Poly(ethylen/Vinylacetat);
(xii) ataktischem Polypropylen;
(xiii) Styrol-Dien-Copolymeren;
(xiv) Polyamiden;
(xv) Hydroxyl-beendetem Polybutadien;
(xvi) Polychloropren;
(xvii) Poly(vinylacetaten);
(xviii) carboxylierten Styrol/Butadien-Copolymeren;
(xix) Poly(vinylalkohol) und
(xx) Polyestern.

15. Zusammensetzung nach Anspruch 14, worin der Klebstoff von Komponente (a) ein Harz darstellt, ausgewählt aus der Gruppe, bestehend aus
Poly(vinylbutyral), Ethylen/Vinylacetat-Copolymeren, polyacrylischen Stoffen, Polyacrylaten, natürlichem Kautschuk, Polycyanoacrylaten, Poly(vinylalkohol), Styrol/Butadien-Kautschuk, phenolischen Stoffen, Vinylpolymeren, Polyurethanen und Styrol-Blockcopolymeren.

16. Stabilisierte Klebstoffzusammensetzung, die zur Verwendung als eine Klebstoffschicht in einem laminierten Gegenstand oder Mehrschichtaufbau geeignet ist, umfassend
(a) einen Klebstoff und
(b) eine Kombination von
(1) einem sehr lichtbeständigen Benzotriazol, das 2-(2-Hydroxy-3,5-di-α-cumylphenyl)-2H-benzotriazol darstellt, oder ein rotverschobenes Benzotriazol, das 5-Chlor-2-(2-hydroxy-3,5-di-tert-butylphenyl)-2H-benzotriazol oder 5-Chlor-2-(2-hydroxy-3-tert-butyl-5-methylphenyl)-2H-benzotriazol darstellt, wobei jedes davon eine relativ niedrige Löslichkeit in einigen Klebstoffen aufweist; und
(2) einer solubilisierenden Menge eines zweiten Benzotriazols mit hoher Löslichkeit in den Klebstoffen und ausgewählt aus der Gruppe, bestehend aus 2-(2-Hydroxy-3,5-di-tert-butylphenyl)-2H-benzotriazol, 2-(2-Hydroxy-3,5-di-tert-amylphenyl)-2H-benzotriazol, 2-(2-Hydroxy-5-tert-octylphenyl)-2H-benzotriazol, 2-(2-Hydroxy-3-sec-butyl-5-tert-butylphenyl)-2H-benzotriazol, 2-(2-Hydroxy-3-α-cumyl-5-tert-octylphenyl)-2H-benzotriazol oder 2-(2-Hydroxy-3-α-cumyl-5-tert-butylphenyl)-2H-benzotriazol.

17. Zusammensetzung nach Anspruch 16, worin das Benzotriazolgemisch in Komponente (b) erhöhte Dauerhaftigkeit und weniger Verlust an Absorption zeigt, wenn aktinischer Strahlung ausgesetzt, wie durch einen Absorptionsverlust von weniger als 0,5 Absorptionseinheiten nach Aussetzen für 893 Stunden, oder weniger als 0,8 Absorptionseinheiten nach Aussetzen für 1338 Stunden in einem Xenon-Bogen-Weather-Ometer, bestätigt.

18. Verbindung der Formel IIIc 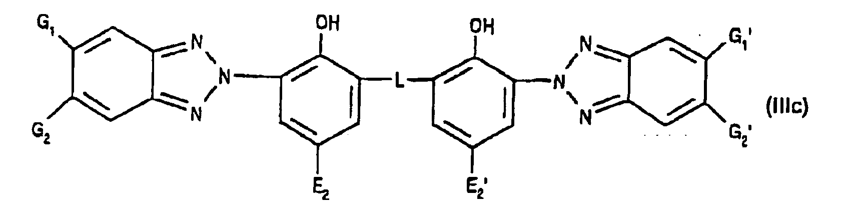 worin
G₁ und G₁' unabhängig Wasserstoff oder Halogen darstellen,
G₂ Halogen, Nitro, Cyano, -COOG₃, -P(O)(C₆H₅)₂, -CO-G₃, -CO-NH-G₃, -CO-N(G₃)₂, -N(G₃)-CO-G₃, E₃S-, E₃SO- oder E₃SO₂- darstellt;
G₂' Perfluoralkyl mit 1 bis 12 Kohlenstoffatomen darstellt;
G₃ Wasserstoff, gerad- oder verzweigtkettiges Alkyl mit 1 bis 24 Kohlenstoffatomen, gerad- oder verzweigtkettiges Alkenyl mit 2 bis 18 Kohlenstoffatomen, Cycloalkyl mit 5 bis 12 Kohlenstoffatomen, Phenylalkyl mit 7 bis 15 Kohlenstoffatomen, Phenyl, oder das Phenyl oder das Phenylalkyl, substituiert an dem Phenylring mit 1 bis 4 Alkyl mit 1 bis 4 Kohlenstoffatomen, darstellt;
E₂ und E₂' unabhängig gerad- oder verzweigtkettiges Alkyl mit 1 bis 24 Kohlenstoffatomen, gerad- oder verzweigtkettiges Alkenyl mit 2 bis 18 Kohlenstoffatomen, Cycloalkyl mit 5 bis 12 Kohlenstoffatomen, Phenylalkyl mit 7 bis 15 Kohlenstoffatomen, Phenyl, oder das Phenyl oder das Phenylalkyl, substituiert an dem Phenylring mit einem bis drei Alkyl mit 1 bis 4 Kohlenstoffatomen, darstellen; oder E₂ und E₂' unabhängig das Alkyl mit 1 bis 24 Kohlenstoffatomen oder das Alkenyl mit 2 bis 18 Kohlenstoffatomen, substituiert mit einem oder mehreren von -OH, -OCOE₁₁, -OE₄, -NCO, -NH₂, -NHCOE₁₁, -NHE₄ oder -N(E₄)₂ oder Gemische davon, worin E₄ gerad- oder verzweigtkettiges Alkyl mit 1 bis 24 Kohlenstoffatomen, oder das Alkyl oder das Alkenyl, unterbrochen durch eine oder mehrere -O-, -NH- oder -NE₄-Gruppen oder Gemischen davon, darstellt, und das unsubstituiert oder mit einer oder mehreren -OH-, -OE₄- oder -NH₂-Gruppen oder Gemischen davon substituiert sein kann, darstellen; oder E₂ und E₂' unabhängig -(CH₂)ₘ-CO-E₅ darstellen; oder E₂ und E₂' unabhängig eine Gruppe der Formel
-(CH₂)ₘ-CO-X-(Z)ₚ-Y-E₁₅
darstellen,
worin
E₅-OE₆ oder -NE₇E₈ darstellt oder
E₅ -PO(OE₁₂)₂, -OSi(E₁₁)₃ oder -OCO-E₁₁, oder gerad- oder verzweigtkettiges C₁-C₂₄-Alkyl, das durch -O-, -S- oder -NE₁₁ unterbrochen ist, und das unsubstituiert oder mit -OH oder -OCO-E₁₁ substituiert sein kann, C₅-C₁₂-Cycloalkyl, das unsubstituiert oder mit -OH substituiert ist, geradkettiges oder verzweigtes C₂-C₁₈-Alkenyl, das unsubstituiert oder mit -OH, C₇₋C₁₅-Aralkyl, -CH₂-CHOH-E₁₃ oder Glycidyl substituiert ist, darstellt,
E₆ Wasserstoff, gerad- oder verzweigtkettiges C₁-C₂₄₋Alkyl, das unsubstituiert oder mit einer oder mehreren OH-, OE₄- oder NH₂-Gruppen substituiert ist, darstellt, oder -OE₆ -(OCH₂CH₂)_{w}OH oder -(OCH₂CH₂)_{w}OE₂₁ darstellt, worin w 1 bis 12 ist und E₂₁ Alkyl mit 1 bis 12 Kohlenstoffatomen darstellt,
E₇ und E₈ unabhängig Wasserstoff, Alkyl mit 1 bis 18 Kohlenstoffatomen, gerad- oder verzweigtkettiges C₃-C₁₈-Alkyl, das durch -O-, -S- oder -NE₁₁- unterbrochen ist, C₅-C₁₂-Cycloalkyl, C₆-C₁₄-Aryl oder C₁-C₃-Hydroxylalkyl darstellen, oder E₇ und E₈ zusammen mit dem N-Atom einen Pyrrolidin-, Piperidin-, Piperazin- oder Morpholinring darstellen,
X -O- oder -N(E₁₆)- darstellt,
Y -O- oder -N(E₁₇)- darstellt,
Z C₂-C₁₂-Alkylen, C₄-C₁₂-Alkylen, unterbrochen durch ein bis drei Stickstoffatome, Sauerstoffatome oder ein Gemisch davon, darstellt, oder C₃-C₁₂-Alkylen, Butenylen, Butinylen, Cyclohexylen oder Phenylen, jeweils substituiert mit einer Hydroxylgruppe, darstellt,
m null, 1 oder 2 ist,
p 1 ist, oder p auch null ist, wenn X und Y -N(E₁₆)-bzw. -N(E₁₇) - darstellen,
E₁₅ eine Gruppe -CO-C(E₁₈)=C(H)E₁₉ darstellt, oder, wenn Y -N(E₁₇)- darstellt, zusammen mit E₁₇, eine Gruppe -CO-CH=CH-CO- bildet, worin E₁₈ Wasserstoff oder Methyl darstellt, und E₁₉ Wasserstoff, Methyl oder -CO-X-E₂₀ darstellt, worin E₂₀ Wasserstoff oder C₁-C₁₈-Alkyl darstellt,
E₁₆ und E₁₇ unabhängig voneinander Wasserstoff, C₁-C₁₈₋Alkyl, C₃-C₁₂-Alkyl, unterbrochen durch 1 bis 3 Sauerstoffatome, darstellen, oder Cyclohexyl oder C₇-C₁₅-Aralkyl darstellen, und E₁₆ zusammen mit E₁₇ im Fall, wenn Z Ethylen darstellt, auch Ethylen bildet,
E₁₁ Wasserstoff, gerad- oder verzweigtkettiges C₁-C₁₈₋Alkyl, C₅-C₁₂-Cycloalkyl, gerad- oder verzweigtkettiges C₂-C₁₈₋Alkenyl, C₆-C₁₄-Aryl oder C₇-C₁₅-Aralkyl darstellt;
E₁₂ gerad- oder verzweigtkettiges C₁-C₁₈-Alkyl, gerad- oder verzweigtkettiges C₃-C₁₈-Alkenyl, C₅-C₁₀-Cycloalkyl, C₆-C₁₆₋Aryl oder C₇-C₁₅-Aralkyl darstellt;
E₁₃ Wasserstoff, geradkettiges oder verzweigtes C₁-C₁₈₋Alkyl, das mit -PO(OE₁₂)₂ substituiert ist, Phenyl, das unsubstituiert oder mit OH, C₇-C₁₅-Aralkyl oder -CH₂OE₁₂ substituiert ist, darstellt;
E₃ Alkyl mit 1 bis 20 Kohlenstoffatomen, Hydroxyalkyl mit 2 bis 20 Kohlenstoffatomen, Alkyl, substituiert mit Alkoxycarbonyl mit 2 bis 9 Kohlenstoffatomen, Alkenyl mit 3 bis 18 Kohlenstoffatomen, Cycloalkyl mit 5 bis 12 Kohlenstoffatomen, Phenylalkyl mit 7 bis 15 Kohlenstoffatomen, Aryl mit 6 bis 10 Kohlenstoffatomen, oder das Aryl, substituiert mit einem oder zwei Alkyl mit 1 bis 4 Kohlenstoffatomen, oder 1,1,2,2-Tetrahydroperfluoralkyl darstellt, worin die Perfluoralkyleinheit 6 bis 16 Kohlenstoffatome aufweist, und
L Alkylen mit 1 bis 12 Kohlenstoffatomen, Alkyliden mit 2 bis 12 Kohlenstoffatomen, Benzyliden, p-Xylylen, α,α,α',α'-Tetramethyl-m-xylylen oder Cycloalkyliden darstellt.

19. Verbindung der Formel IIIc nach Anspruch 18, worin
G₁ und G₁' jeweils Wasserstoff darstellen,
G₂ Chlor, Phenylsulfonyl oder Phenylthio darstellt;
G₂' CF₃ darstellt;
E₂ und E₂' unabhängig gerad- oder verzweigtkettiges Alkyl mit 1 bis 24 Kohlenstoffatomen, gerad- oder verzweigtkettiges Alkenyl mit 2 bis 18 Kohlenstoffatomen, Cycloalkyl mit 5 bis 12 Kohlenstoffatomen, Phenylalkyl mit 7 bis 15 Kohlenstoffatomen, Phenyl, oder das Phenyl oder das Phenylalkyl, substituiert an dem Phenylring mit 1 bis 3 Alkyl mit 1 bis 4 Kohlenstoffatomen, darstellen; und
L Methylen darstellt.

20. Zusammensetzung, stabilisiert gegen thermischen, oxidativen oder durch Licht induzierten Abbau, die umfasst
(a) ein organisches, gegen durch Wärme, oxidativen oder durch Licht induzierten Abbau anfälliges Material,
und
(b) eine Verbindung der Formel IIIc nach Anspruch 19.

21. Zusammensetzung nach Anspruch 20, wobei das organische Material ein natürliches, halbsynthetisches, synthetisches, thermoplastisches oder vernetztes Polymer darstellt.

## Revendications

1. Composition adhésive stabilisée, adaptée pour utilisation comme couche adhésive dans un article stratifié ou une construction multicouche, qui comprend
(a) un adhésif; et
(b1) un benzotriazole photostable, décalé vers le rouge, hautement soluble, de formule I, II ou III 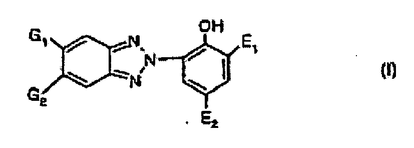 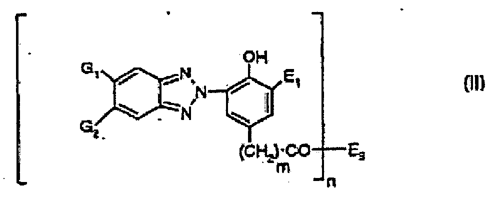 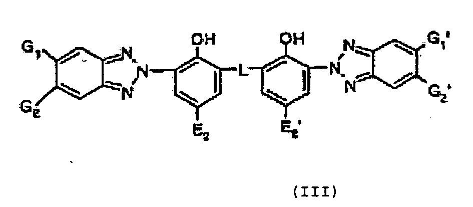 ou
(b2) un benzotriazole photostable et hautement soluble qui est le 2-(2-hydroxy-3-α-cuményl-5-tertiooctylphényl)-2H-benzotriazole ou le 2-(2-hydroxy-3-α-cuményl-5-tertiobutylphényl)-2H-benzotriazole;
ou
une association des composés selon (b1) et (b2);
dans laquelle dans la formule (I)
G₁ est un atome d'hydrogène,
G₂ est un groupe cyano, chloro, fluoro, CF₃-, -CO-G₃-, E₃SO- ou E₃SO₂-,
G₃ est un groupe alkyle à chaîne linéaire ou ramifiée de 1 à 24 atomes de carbone, alcényle à chaîne linéaire ou ramifiée de 2 à 18 atomes de carbone, cycloalkyle de 5 à 12 atomes de carbone, phénylalkyle de 7 à 15 atomes de carbone, phényle, ou ledit groupe phényle ou ledit groupe phénylalkyle substitué sur le cycle phényle par 1 à 4 groupes alkyle de 1 à 4 atomes de carbone,
E₁ est un groupe phénylalkyle de 7 à 15 atomes de carbone, phényle, ou ledit groupe phényle ou ledit groupe phénylalkyle substitué sur le cycle phényle par 1 à 4 groupes alkyle de 1 à 4 atomes de carbone,
E₂ est un groupe alkyle à chaîne linéaire ou ramifiée de 1 à 24 atomes de carbone, alcényle à chaîne linéaire ramifiée de 2 à 18 atomes de carbone, cycloalkyle de 5 à 12 atomes de carbone, phénylalkyle de 7 à 15 atomes de carbone, phényle, ou ledit groupe phényle ou ledit groupe phénylalkyle substitué sur le cycle phényle par 1 à 3 groupes alkyle de 1 à 4 atomes de carbone; ou bien E₂ est un groupe alkyle de 1 à 24 atomes de carbone ou ledit groupe alcényle de 2 à 18 atomes de carbone substitué par un ou plusieurs groupes -OH, -OE₄, -NCO, -NH₂, -NHCOE₁₁, -NHE₄ ou - N(E₄)₂ ou des combinaisons de ceux-ci, où E₄ est un groupe alkyle à chaîne linéaire ou ramifiée de 1 à 24 atomes de carbone; ou ledit groupe alkyle ou ledit groupe alcényle entrecoupé par un ou plusieurs groupes -O-, -NH- ou -NE₄- ou des combinaisons de ceux-ci et qui peut être éventuellement substitué par un ou plusieurs groupes OH, -OE₄ ou -NH₂ ou des combinaisons de ceux-ci;
E₁₁ est tel que défini ci-dessous;
E₃ est un groupe alkyle de 1 à 20 atomes de carbone, hydroxyalkyle de 2 à 20 atomes de carbone, alcényle de 3 à 18 atomes de carbone, cycloalkyle de 5 à 12 atomes de carbone, phénylalkyle de 7 à 15 atomes de carbone, aryle de 6 à 10 atomes de carbone ou ledit groupe aryle substitué par un ou deux groupes alkyle de 1 à 4 atomes de carbone ou un groupe 1, 1, 2, 2-tétrahydroperfluoroalkyle où le résidu perfluoroalkyle a de 6 à 16 atomes de carbone; ou
est un composé de formule I où
G₁ est un atome d'hydrogène,
G₂ est un groupe chloro, fluoro, CF₃-, E₃SO- ou E₃SO₂-,
E₁ est un atome d'hydrogène ou un groupe alkyle linéaire ou ramifié de 1 à 24 atomes de carbone,
E₂ est tel que défini ci-dessus, et
E₃ est un groupe alkyle à chaîne linéaire ou ramifiée de 1 à 7 atomes de carbone,
dans laquelle dans les formules (II) et (III)
G₁ et G₁' sont indépendamment un atome d'hydrogène ou d'halogène,
G₂ et G₂' sont indépendamment un atome d'halogène, un groupe nitro, cyano, perfluoroalkyle de 1 à 12 atomes de carbone, -COOG₃, -P(O)(C₈H₅)₂, -CO-G₃, -CO-NH-G₃, -CO-N(G₃)₂, N(G₃)-CO-G₃, E₃SO-, ou E₃SO₂-; ou bien G₂' est un atome d'hydrogène,
G₃ est un atome d'hydrogène, un groupe alkyle à chaîne linéaire ou ramifiée de 1 à 24 atomes de carbone, alcényle à chaîne linéaire ou ramifiée de 2 à 18 atomes de carbone, cycloalkyle de 5 à 12 atomes de carbone, phénylalkyle de 7 à 15 atomes de carbone, phényle, ou ledit groupe phényle ou ledit groupe phénylalkyle substitué sur le cycle phényle par 1 à 4 groupes alkyle de 1 à 4 atomes de carbone,
G₆ est un groupe perfluoroalkyle de 1 à 12 atomes de carbone,
G₇ est un atome d'hydrogène ou un groupe perfluoroalkyle de 1 à 12 atomes de carbone,
E₁ est un atome d'hydrogène, un groupe alkyle à chaîne linéaire ou ramifiée de 1 à 24 atomes de carbone, alcényle à chaîne linéaire ou ramifiée de 2 à 24 atomes de carbone, cycloalkyle de 5 à 12 atomes de carbone, phénylalkyle de 7 à 15 atomes de carbone, phényle, ou ledit groupe phényle ou ledit groupe phénylalkyle substitué sur le cycle phényle par 1 à 4 groupes alkyle de 1 à 4 atomes de carbone, ou bien E₁ est un groupe alkyle de 1 à 24 atomes de carbone substitué par un ou deux groupes hydroxy,
E₂ et E₂' sont indépendamment un groupe alkyle à chaîne linéaire ou ramifiée de 1 à 24 atomes de carbone, alcényle à chaîne linéaire ou ramifiée de 2 à 18 atomes de carbone, cycloalkyle de 5 à 12 atomes de carbone, phénylalkyle de 7 à 15 atomes de carbone, phényle, ou ledit groupe phényle ou ledit groupe phénylalkyle substitué sur le cycle phényle par 1 à 3 groupes alkyle de 1 à 4 atomes de carbone, ou bien E₂ et E₂' sont indépendamment ledit groupe alkyle de 1 à 24 atomes de carbone ou ledit groupe alcényle de 2 à 18 atomes de carbone substitué par un ou plusieurs groupes -OH, -OCOE₁₁, -OE₄, -NCO, -NH₂, - NHCOE₁₁, -NHE₄ ou -N(E₄)₂ ou des combinaisons de ceux-ci, où E₄ est un groupe alkyle à chaîne linéaire ou ramifiée de 1 à 24 atomes de carbone; ou ledit groupe alkyle ou ledit groupe alcényle entrecoupé par un ou plusieurs groupes -O-, -NH- ou -NE₄- ou des combinaisons de ceux-ci et qui peut être éventuellement substitué par un ou plusieurs groupes OH, -OE₄ ou -NH₂ ou une combinaison de tels groupes;
n vaut 1 ou 2,
lorsque n vaut 1, E₅ est -OE₆ ou -NE₇E₈, ou
E₅ est -PO(OE₁₂)₂, -OSi(E₁₁)₃ ou -OCO-E₁₁,
ou un groupe alkyle en C₁ à C₂₄ à chaîne linéaire ou ramifiée qui est entrecoupé par -O-, -S- ou -NE₁₁ et qui peut être éventuellement substitué par -OH ou -OCO-E₁₁, un groupe cycloalkyle en C₅ à C₁₂ qui est éventuellement substitué par -OH, alcényle en C₂ à C₁₈ qui est éventuellement substitué par -OH, un groupe aralkyle en C₇ à C₁₅, -CH₂-CHOH-E₁₃ ou glycidyle,
E₆ est un atome d'hydrogène, un groupe alkyle en C₁ à C₂₄ à chaîne linéaire ou ramifiée qui est éventuellement substitué par un ou plusieurs groupes OH, OE₄ ou NH₂, ou bien -OE₆ est - (OCH₂CH₂)_{w}OH ou -(OCH₂CH₂)_{w}OE₂₁ où w varie de 1 à 12 et E₁₂ est un groupe alkyle de 1 à 12 atomes de carbone,
E₇ et E₈ sont indépendamment un atome d'hydrogène, un groupe alkyle de 1 à 18 atomes de carbone, alkyle en C₃ à C₁₈ à chaîne linéaire ou ramifiée qui est entrecoupé par -O-, -S-, ou - NE₁₁-, cycloalkyle en C₅ à C₁₂, aryle en C₆ à C₁₄ ou hydroxyalkyle en C₁ à C₃, ou bien E₇ et E₈ forment conjointement avec l'atome N un cycle pyrrolidine, pipéridine, pipérazine ou morpholine,
E₅ est -X-(Z)ₚ-Y-E₁₅
où
X est -O- ou -N(E₁₆)-,
Y est -O- ou -N(E₁₇)-,
Z est un groupe alkylène en C₂ à C₁₂, alkylène en C₄ à C₁₂ entrecoupé par un à trois atomes d'azote, atomes d'oxygène ou une combinaison de ceux-ci, ou est un groupe alkylène en C₃ à C₁₂, buténylène, butynylène, cyclohexylène ou phénylène, substitués chacun par un groupe hydroxy,
m vaut zéro, 1 ou 2,
p vaut 1, ou p vaut aussi zéro lorsque X et Y sont -N(E₁₆)- et -N(E₁₇)-, respectivement,
E₁₅ est un groupe -CO-C(E₁₈)=C(H)E₁₉ ou, lorsque Y est -N(E₁₇)-, forme conjointement avec E₁₇ un groupe -CO-CH=CH-CO-, où E₁₈ est un atome d'hydrogène ou un groupe méthyle, et E₁₉ est un atome d'hydrogène, un groupe méthyle ou -CO-X-E₂₀, où E₂₀ est un atome d'hydrogène, un groupe alkyle en C₁ à C₁₂ ou un groupe de formule 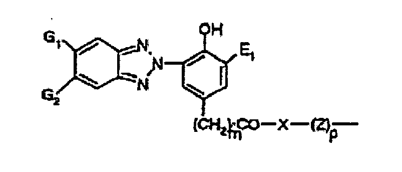 où les symboles E₁, G₂, X, Z, m et p ont le sens défini ci-dessus, et E₁₆ et E₁₇ sont indépendamment l'un de l'autre un atome d'hydrogène, un groupe alkyle en C₁ à C₁₂, alkyle en C₃ à C₁₂ entrecoupé par de 1 à 3 atomes d'oxygène, ou bien est un groupe cyclohexyle ou aralkyle en C₇ à C₁₅, et E₁₆ forme conjointement avec E₁₇ dans le cas où Z est un groupe éthylène, un groupe éthylène aussi,
lorsque n vaut 2, E₅ est l'un des radicaux bivalents -O-E₉-O- ou -N(E₁₁)-E₁₀-N(E₁₁)-;
Eg est un groupe alkylène en C₂ à C₈, alcénylène en C₄ à C₈, alcynylène en C₄, cyclohexylène, alkylène en C₄ à C₁₀ à chaîne linéaire ou ramifiée qui est entrecoupée par -O- ou par -CH₂₋CHOH-CH₂-O-E₁₄-O-CH₂-CHOH-CH₂-
E₁₀ étant un groupe alkylène en C₂ à C₁₂ à chaîne linéaire ou ramifiée qui peut être entrecoupée par -O-, un groupe cyclohexylène, ou 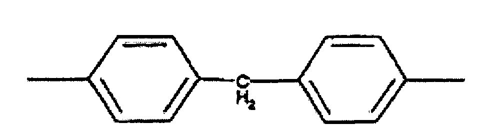 ou 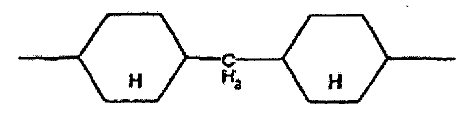 ou E₁₀ et E₁₁ forment conjointement avec les deux atomes d'azote un cycle pipérazine,
E₁₄ est un groupe alkylène en C₂ à C₈ à chaîne linéaire ou ramifiée, alkylène en C₄ à C₁₀ à chaîne linéaire ou ramifiée qui est entrecoupée par -O-, cycloalkylène, arylène ou 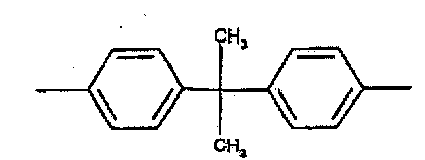 ou 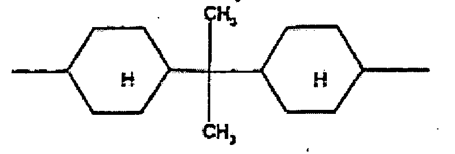 où E₇ et E₈ sont indépendamment un atome d'hydrogène, un groupe alkyle de 1 à 18 atomes de carbone ou bien E₇ et E₈ forment conjointement un groupe alkylène de 4 à 6 atomes de carbone, 3-oxapentaméthylène, 3-iminopentaméthylène ou 3-méthylimino-pentaméthylene,
E₁₁ est atome d'hydrogène, un groupe alkyle en C₁ à C₁₈ à chaîne linéaire ou ramifiée, cycloalkyle en C₅ à C₁₂, alcényle en C₂ à C₈ à chaîne linéaire ou ramifiée, aryle en C₆ à C₁₄ ou aralkyle en C₇ à C₁₅,
E₁₃ est H, un groupe alkyle en C₁ à C₁₈ à chaîne linéaire ou ramifiée qui est substitué par -PO(OE₁₂)₂, phényle qui est éventuellement substitué par OH, aralkyle en C₇ à C₁₅ ou - CH₂OE₁₂.
E₃ est un groupe alkyle de 1 à 20 atomes de carbone, hydroxyalkyle de 2 à 20 atomes de carbone, alkyle substitué par un radical alcoxycarbonyle de 2 à 9 atomes de carbone, alcényle de 3 à 18 atomes de carbone, cycloalkyle de 5 à 12 atomes dé carbone, phénylalkyle de 7 à 15 atomes de carbone, aryle de 6 à 10 atomes de carbone ou ledit groupe aryle substitué par un ou deux groupes alkyle de 1 à 4 atomes de carbone ou 1, 1, 2, 2-tétrahydroperfluoroalkyle où le résidu perfluoroalkyle comporte de 1 à 16 atomes de carbone, et
L est un groupe alkylène de 1 à 12 atomes de carbone, alkylidène de 2 à 12 atomes de carbone, benzylidène, p-xylylène, α, α, α', α'-tétraméthyl-m-xylylène ou cycloalkylidène.

2. Composition selon la revendication 1, dans laquelle le benzotriazole (b1) de formule I, II ou III et les benzotriazoles (b2) présentent une durabilité accrue et une faible perte d'absorbance lorsqu'ils sont exposés aux rayons actiniques comme en témoigne une perte d'absorbance inférieure à 0,5 unités d'absorbance après exposition pendant 893 heures ou à 0,8 unités d'absorbance après exposition pendant 1338 heures dans un appareil d'exposition aux agents atmosphériques à l'arc de xénon.

3. Composition selon la revendication 1, dans laquelle le composé benzotriazolique est un composé de formule IA 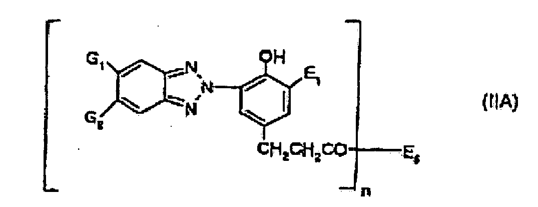 où
G₁ est un atome d'hydrogène,
G₂ est CF₃- ou un groupe fluoro,
E₁ est un atome d'hydrogène ou un groupe alkyle linéaire ou ramifié de 1 à 24 atomes de carbone ou phénylalkyle de 7 à 15 atomes de carbone,
E₅ est -OE₆ ou -NE₇E₈, ou bien
E₅ est -X-(Z)ₚ-Y-E₁₅
où
X est -O- ou -N(E₁₆)-,
Y est -O- ou -N(E₁₇)-,
Z est un groupe alkylène en C₂ à C₁₂, alkylène en C₄ à C₁₂ entrecoupé par un à trois atomes d'azote, atomes d'oxygène ou des combinaisons de ceux-ci, ou est un groupe alkylène en C₃ à C₁₂, buténylène, butynylène, cyclohexylène ou phénylène, substitués chacun par un groupe hydroxy,
m vaut zéro, 0, 1, 2 ou 3,
p vaut 1, ou p vaut aussi zéro lorsque X et Y sont -N(E₁₆)- et -N(E₁₇)-, respectivement,
E₁₅ est un groupe -CO-C(E₁₈)=C(H)E₁₉ ou, lorsque Y est - N(E₁₇)-, forme conjointement avec E₁₇ un groupe -CO-CH=CH-CO-, où E₁₈ est un atome d'hydrogène ou un groupe méthyle, et E₁₉ est un atome d'hydrogène, un groupe méthyle ou -CO-X-E₂₀, où E₂₀ est un atome d'hydrogène, un groupe alkyle en C₁ à C₁₂ ou un groupe de formule

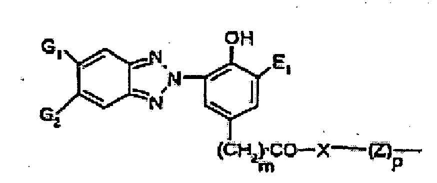

4. Composition selon la revendication 1, dans laquelle le benzotriazole est un composé de formule IIIA 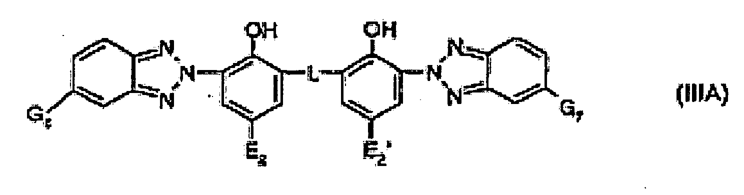 où
G₆ est CF₃,
G₇ est un atome d'hydrogène ou CF₃,
E₂ et E₂' sont indépendamment un groupe alkyle à chaîne linéaire ou ramifiée de 1 à 24 atomes de carbone, alcényle à chaîne linéaire ou ramifiée de 2 à 18 atomes de carbone, cycloalkyle de 5 à 12 atomes de carbone, phénylalkyle de 7 à 15 atomes de carbone, phényle, ou ledit groupe phényle ou ledit groupes phénylalkyle substitué sur le cycle phényle par 1 à 3 groupes alkyle de 1 à 4 atomes de carbone, et
L est un groupe alkylène de 1 à 12 atomes de carbone, alkylidène de 2 à 12 atomes de carbone, benzylidène, p-xylylène, α, α, α', α'-tétraméthyl-m-xylylène ou cycloalkylidène.

5. Composition selon la revendication 1, dans laquelle le benzotriazole est un composé de formule I 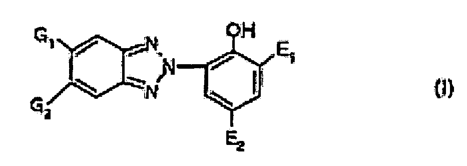 où
G₁ est un atome d'hydrogène,
G₂ est CF₃-,
E₁ est un groupe phénylalkyle de 7 à 15 atomes de carbone, phényle, ou ledit groupe phénylalkyle substitué sur le cycle phényle par 1 à 4 groupes alkyle de 1 à 4 atomes de carbone, et
E₂ est un groupe alkyle à chaîne linéaire ou ramifiée de 1 à 24 atomes de carbone, alcényle à chaîne linéaire ramifiée de 2 à 18 atomes de carbone, cycloalkyle de 5 à 12 atomes de carbone, phénylalkyle de 7 à 15 atomes de carbone, phényle, ou ledit groupe phényle ou ledit groupe phénylalkyle substitué sur le cycle phényle par 1 à 3 groupes alkyle de 1 à 4 atomes de carbone; ou bien E₂ est ledit groupe alkyle de 1 à 24 atomes de carbone ou ledit groupe alcényle de 2 à 18 atomes de carbone substitué par un ou plusieurs groupes -OH, -NH₂, ou -NHCOE₁₁, ou des combinaisons de ceux-ci, ou ledit groupe alkyle ou ledit groupe alcényle entrecoupé par un ou plusieurs -O- et qui peut être éventuellement substitué par un ou plusieurs -OH; ou bien
est un composé de formule I
où
G₁ est un atome d'hydrogène,
G₂ est CF₃-,
E₁ est un atome d'hydrogène ou un groupe alkyle linéaire
ou ramifié de 1 à 24 atomes de carbone ou phénylalkyle de 7 à 15 atomes de carbone, et
E₂ est tel que défini ci-dessus.

6. Composition selon la revendication 1, dans laquelle le benzotriazole est un composé de formule IIA 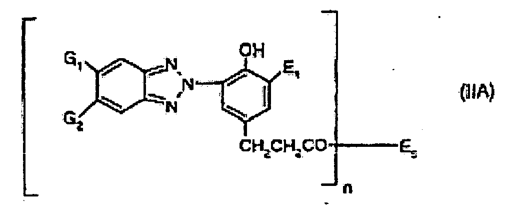 où
G₁ est un atome d'hydrogène,
G₂ est CF₃-,
E₁ est un atome d'hydrogène, un groupe alkyle linéaire ou ramifié de 1 à 24 atomes de carbone ou phénylalkyle de 7 à 15 atomes de carbone,
E₅ est -OE₆ ou -NE₇E₈ où
E₆ est un atome d'hydrogène, un groupe alkyle en C₁ à C₂₄ à chaîne linéaire ou ramifiée qui est éventuellement substitué par un ou plusieurs groupes OH, ou bien -OE₆ est -(OCH₂CH₂)_{w}OH ou -(OCH₂CH₂)_{w}OE₂₁ où w varie de 1 à 12 et E₁₂ est un groupe alkyle de 1 à 12 atomes de carbone, et
E₇ et E₈ sont indépendamment un atome d'hydrogène, un groupe alkyle de 1 à 18 atomes de carbone, alkyle en C₃ à C₁₈ à chaîne linéaire ou ramifiée qui est entrecoupé par -O-, -S-, ou - NE₁₁-, cycloalkyle en C₅ à C₁₂, aryle en C₆ à C₁₄ ou hydroxyalkyle en C₁ à C₃, ou bien E₇ et E₈ forment conjointement avec l'atome N un cycle pyrrolidine, pipéridine, pipérazine ou morpholine.

7. Composition selon la revendication 1, dans laquelle le benzotriazole est un composé de formule IIIA 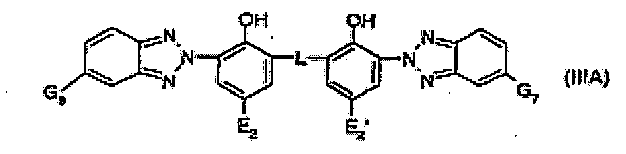 où
G₆ est CF₃,
G₇ est un atome d'hydrogène ou CF₃,
E₂ et E₂' sont indépendamment un groupe alkyle à chaîne linéaire ou ramifiée de 1 à 24 atomes de carbone, alcényle à chaîne linéaire ou ramifiée de 2 à 18 atomes de carbone, cycloalkyle de 5 à 12 atomes de carbone, phénylalkyle de 7 à 15 atomes de carbone, phényle, ou ledit groupe phényle ou ledit groupe phénylalkyle substitué sur le cycle phényle par 1 à 3 groupes alkyle de 1 à 4 atomes de carbone, et
L est un groupe méthylène.

8. Composition selon la revendication 1, dans laquelle le benzotriazole est
(a) le 5-trifluorométhyl-2-(2-hydroxy-3-α-cuményl-5-tertiooctylphényl)-2H-benzotriazole;
(b) le 5-trifluorométhyl-2-(2-hydroxy-5-tertiooctylphényl)-2H-benzotriazole;
(c) le 5-trifluorométhyl-2-(2-hydroxy-3, 5-di-tertiooctylphényl)-2H-benzotriazole;
(d) le 2, 2'-méthylene-bis [6-(5-trifluorométhyl-2H-benzotriazol-2-yl)-4-tertiooctylphenol];
(e) le méthylene-2-[4-tertiooctyl-6-(2H-benzotriazol-2-yl)phénol]2'-[4-tertiooctyl-6-(5-trifluorométhyl-2H-benzotriazol-2-yl)phénol];
(f) l'acide 3-(5-trifluorométhyl-2H-benzotriazol-2-yl)-5-tertiobutyl-4-hydroxyhydrocinnamique
(g) le 3-(5-trifluorométhyl-2H-benzotriazol-2-yl)-5-tertiobutyl-4-hydroxy-hydrocinnamate de méthyle;
(h) le 3-(5-trifluorométhyl-2H-benzotriazol-2-yl)-5-tertiobutyl-4-hydroxy-hydrocinnamate d'isooctyle;
(i) le 5-trifluorométhyl-2-[2-hydroxy-5-(3-hydroxypropyl)phényl]-2H-benzotriazole;
(j) le 5-butylsulfonyl-2-(2-hydroxy-3-α-cuményl-5-tertiooctylphényl)-2H-benzotriazole;
(k) le 5-octylsulfonyl-2-(2-hydroxy-3, 5-di-α-cuménylphényl)-2H-benzotriazole;
(l) le 5-dodécylsulfonyl-2-(2-hydroxy-3, 5-di-tertiobutylphényl)-2H-benzotriazole;
(m) le 5-octylsulfonyl-2-(2-hydroxy-3, 5-di-tertiooctylphényl)-2H-benzotriazole;
(n) le 5-trifluorométhyl-2-(2-hydroxy-3-α-cuményl-5-tertiobutylphényl)-2H-benzotriazole;
(o) le 5-trifluorométhyl-2-(2-hydroxy-3-a-cuményl-5-nonylphényl)-2H-benzotriazole;
(p) le 5-trifluorométhyl-2-[2-hydroxy-3-α-cuményl-5-(2-hydroxyéthyl)phényl]-2H-benzotriazole;
(q) le 5-trifluorométhyl-2-[2-hydroxy-3-α-cuményl-5-(3-hydroxypropyl) phényl]-2H-benzotriazole;
(r) le 5-trifluorométhyl-2-(2-hydroxy-3, 5-di-tertioamylphényl)-2H-benzotriazole;
(s) le 5-trifluorométhyl-2-(2-hydroxy-3, 5-di-tertiobutylphényl)-2H-benzotriazole;
(t) le 5-trifluorométhyl-2-(2-hydroxy-3-dodécyl-5-méthylphényl)-2H-benzotriazole;
(u) le 5-trifluorométhyl-2-[2-hydroxy-3-tertiobutyl-5-(3-hydroxypropyl) phényl)-2H-benzotriazole;
(v) le 5-trifluorométhyl-2-[2-hydroxy-3-tertiobutyl-5-(2-hydroxyéthyl)phényl]-2H-benzotriazole;
(w) le 5-trifluorométhyl-2-[2-hydroxy-5-(2-hydroxyéthyl)phényl]-2H-benzotriazole;
(x) le 5-trifluorométhyl-2-(2-hydroxy-3, 5-di-α-cuménylphényl)-2H-benzotriazole;
(y) le 5-fluoro-2-(2-hydroxy-3, 5-di-α-cuménylphényl)-2H-benzotriazole;
(z) le 5-butylsulfonyl-2-(2-hydroxy-3, 5-di-α-cuménylphényl)-2H-benzotriazole;
(aa) le 5-butylsulfonyl-2-(2-hydroxy-3, 5-di-tertiobutylphényl)-2H-benzotriazole;
(bb) le 5-butylsulfonyt-2-(2-hydroxy-3, 5-di-tertiooctylphényl)-2H-benzotriazole;
(cc) le 5-phénylsulfonyl-2-(2-hydroxy-3, 5-di-tertiobutylphényl)-2H-benzotriazole; ou
(dd) le 5-chloro-2-(2-hydroxy-3, 5-di-α-cuménylphényl)-2H-benzotriazole.

9. Composition selon la revendication 1, dans laquelle la teneur en benzotriazole du composant (b1) ou (b2) est de 0,1 à 20% en poids par rapport à la composition adhésive.

10. Composition selon la revendication 1, dans laquelle le rapport pondéral (b1) sur (b2) est de 75:25 à 25:75.

11. Composition selon la revendication 1, dans laquelle l'adhésif du composant (a) est choisi dans le groupe constitué par des adhésifs sensibles à la pression, des adhésifs à base de caoutchouc, des adhésif à base d'émulsion ou de solvant, des adhésifs fusibles à chaud et des adhésif à base de produit naturels

12. Composition selon la revendication 1, dans laquelle la composition adhésive est présente dans une construction multicouche ou stratifiée.

13. Composition selon la revendication 12, dans laquelle la construction multicouche ou stratifiée est choisie dans le groupe constitué par
(a) des feuilles et panneaux de signalisation rétroréfléchissants et des feuilles de marquage flexibles;
(b) des films antisolaires de construction variable;
(c) des miroirs en argent anticorrosion et des réflecteurs Solaires;
(d) des étiquettes d'Impression réfléchissantes;
(e) des verres à absorption UV et des revêtements en verre;
(f) des dispositifs électrochromes;
(g) des films/vitrages;
(h) des pare-brises et des Couches Intermédiaires; et
(i) des films optiques.

14. Composition selon la revendication 1 dans laquelle le composant adhésif (a) est une résine choisie dans le groupe constitué par
(i) les polyuréthannes;
(ii) les polyacryliques;
(iii) les époxy;
(iv) les phénoliques;
(v) les polyimides;
(vi) le poly(vinylbutyral);
(vii) les polycyanoacrylates;
(viii) les polyacrylates;
(ix) les copolymères d'éthylène/acide acrylique et leurs sels (ionomères);
(x) les polymères de silicone;
(xi) poly(éthylène/acétate de vinyle);
(xii) le polypropylène atactique;
(xiii) les copolymères de styrène-diène;
(xiv) les polyamides;
(xv) le polybutadiène se terminant par un groupe hydroxy;
(xvi) le polychloroprène;
(xvii) le poly(acétate de vinyle);
(xviii) les copolymères carboxylés de styrène/butadiène;
(xix) le poly(alcool vinylique); et
(xx) les polyesters.

15. Composition selon la revendication 1, dans laquelle le composant adhésif (a) est une résine choisie dans le groupe constitué par le poly (vinylbutyral), les copolymères d'éthylène/acétate de vinyle, les polyacryliques, les polyacrylates, le caoutchouc naturel, les polycyanoacrylates, le poly(alcool vinylique), le caoutchouc en styrène/butadiène, les phénoliques, les polymères vinyliques, les polyuréthannes et les copolymères en bloc de styrène.

16. Composition adhésive stabilisée, adaptée pour une utilisation comme couche adhésive dans un article stratifié ou une construction multicouche, qui comprend
(a) un adhésif, et
(b) une combinaison
(1) d'un benzotriazole hautement photostable qui est le 2- (2-hydroxy-3, 5-di-α-cuménylphényl)-2H-benzotriazole ou un benzotriazole décalé vers le rouge qui est le chloro-2-(2-hydroxy-3, 5-di-tertiobutylphényl)-2H-benzotriazole ou le 5-chloro-2-(2-hydroxy-3-tertiobutyl-5-méthylphényl)-2H-benzotriazole ayant chacun une solubilité relativement réduite dans certains adhésifs; et
(2) d'une quantité solubilisante d'un deuxième benzotriazole ayant une solubilité élevée dans certains adhésifs et choisi dans le groupe constitué par le 2-(2-hydroxy-3, 5-ditertiobutylphényl)-2H-benzotriazole, le 2-(2-hydroxy-3, 5-ditertioamyphényl)-2H-benzotriazole, le 2-(2-hydroxy-5-tertiooctylphényl)-2H-benzotriazole, le 2-(2-hydroxy-3-sec-butyl-5-tertiobutylphényl)-2H-benzotriazole, le 2-(2-hydroxy-3-α-cuményl-5-tertiooctylphényl)-2H-benzotriazole ou le 2-(2-hydroxy-3-α-cuményl-5-tertiobutyl-phényl)-2H-benzotriazole.

17. Composition selon la revendication 16, dans laquelle le mélange de benzotriazoles dans le composant (b) présente une durabilité améliorée et une faible perte lorsqu'ils sont exposés aux rayons actiniques comme en témoigne une perte d'absorbance inférieure à 0,5 unités d'absorbance après exposition pendant 893 heures ou à 0,8 unités d'absorbance après exposition pendant 1338 heures dans un appareil d'exposition aux agents atmosphériques à l'arc de xénon.

18. Composé selon la formule IIIc 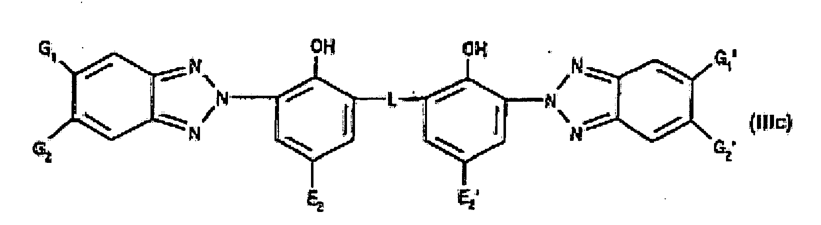 dans laquelle
G₁ et G₁' sont indépendamment un atome d'hydrogène ou d'halogène,
G₂ est un groupe halogène, nitro, cyano, -COOG₃, - P(O)(C₆H₅)₂,-CO-G₃,-CO-NH-G₃,-CO-N(G₃)₂,-N(G₃)-CO-G₃, E₃S-, E₃SO- ou E₃SO₂-,
G₂' est un groupe perfluoroalkyle de 1 à 12 atomes de carbone,
G₃ est un atome d'hydrogène ou un groupe alkyle à chaîne linéaire ou ramifiée de 1 à 24 atomes de carbone, alcényle à chaîne linéaire ou ramifiée de 2 à 18 atomes de carbone, cycloalkyle de 5 à 12 atomes de carbone, phénylalkyle de 7 à 15 atomes de carbone, phényle, ou ledit groupe phényle ou ledit groupe phénylalkyle substitué sur le cycle phényle par 1 à 4 groupes alkyle de 1 à 4 atomes de carbone,
E₂ et E₂' sont indépendamment un groupe alkyle à chaîne linéaire ou ramifiée de 1 à 24 atomes de carbone, alcényle à chaîne linéaire ou ramifiée de 2 à 18 atomes de carbone, cycloalkyle de 5 à 12 atomes de carbone, phénylalkyle de 7 à 15 atomes de carbone, phényle, ou ledit groupe phényle ou ledit groupe phénylalkyle substitué sur le cycle phényle par 1 à 3 groupes alkyle de 1 à 4 atomes de carbone, ou bien E₂ et E₂' sont indépendamment ledit groupe alkyle de 1 à 24 atomes de carbone ou ledit groupe alcényle de 2 à 18 atomes de carbone substitué par un ou plusieurs groupes -OH, -OCOE₁₁, -OE₄, -NCO, -NH₂, - NHCOE₁₁, -NHE₄ ou -N(E₄)₂ ou des combinaisons de ceux-ci, où E₄ est un groupe alkyle à chaîne linéaire ou ramifiée de 1 à 24 atomes de carbone; ou ledit groupe alkyle ou ledit groupe alcényle entrecoupé par un ou plusieurs groupes -O-, -NH- ou -NE₄- ou des combinaisons de ceux-ci et qui peut être éventuellement substitué par un ou plusieurs groupes OH, -OE₄ ou -NH₂ ou une combinaison ceux-ci; ou bien E₂ et E₂' sont indépendamment - (CH₂)ₘ-CO-E₅; ou bien encore E₂ et E₂' sont indépendamment un groupe de la formula
**-(CH**_{**2**}**)**_{**m**}**-CO-X(Z)**_{**p**}**-Y-E**_{**15**}
où
E₅ est -OE₆ ou -NE₇E₈, ou
E₅ est -PO(OE₁₂)₂, -OSi(E₁₁)₃ ou -OCO-E₁₁,
ou un groupe alkyle en C₁ à C₂₄ à chaîne linéaire ou ramifiée qui est entrecoupé par -O-, -S- ou -NE₁₁ et qui peut être éventuellement substitué par -OH ou -OCO-E₁₁, un groupe cycloalkyle en C₅ à C₁₂ qui est éventuellement substitué par -OH, alcényle en C₂ à C₁₈ qui est éventuellement substitué par -OH, un groupe aralkyle en C₇ à C₁₅, -CH₂-CHOH-E₁₃ ou glycidyle,
E₆ est un atome d'hydrogène, un groupe alkyle en C₁ à C₂₄ à chaîne linéaire ou ramifiée qui est éventuellement substitué par un ou plusieurs groupes OH, OE₄ ou NH₂, ou bien -OE₆ est - (OCH₂CH₂)_{w}OH ou -(OCH₂CH₂)_{w}OE₂₁ où w varie de 1 à 12 et E₁₂ est un groupe alkyle de 1, à 12 atomes de carbone,
E₇ et E₈ sont indépendamment un atome d'hydrogène, un groupe alkyle de 1 à 18 atomes de carbone, alkyle en C₃ à C₁₈ à chaîne linéaire ou ramifiée qui est entrecoupé par -O-, -S-, ou - NE₁₁-, cycloalkyle en C₅ à C₁₂, aryle en C₆ à C₁₄ ou hydroxyalkyle en C₁ à C₃, ou bien E₇ et E₈ forment conjointement avec l'atome N un cycle pyrrolidine, pipéridine, pipérazine ou morpholine,
X est -O- ou -N(E₁₆)-,
Y est -O- ou -N(E₁₇)-,
Z est un groupe alkylène en C₂ à C₁₂, alkylène en C₄ à C₁₂ entrecoupé par un à trois atomes d'azote, atomes d'oxygène ou une combinaison de ceux-ci, ou est un groupe alkylène en C₃ à C₁₂, buténylène, butynylène, cyclohexylène ou phénylène, substitués chacun par un groupe hydroxy,
m vaut zéro, 1 ou 2,
p vaut 1, ou p vaut aussi zéro lorsque X et Y sont -N(E₁₆)- et -N(E₁₇)-, respectivement,
E₁₅ est un groupe -CO-O(E₁₈)=C(H)E₁₉ ou, lorsque Y est un -N(E₁₇)- forme conjointement avec E₁₇ un groupe -CO-CH=CH-CO-, où E₁₈ est un atome d'hydrogène ou un groupe méthyle, et E₁₉ est un atome d'hydrogène, un groupe méthyle ou -CO-X-E₂₀ où E₂₀ est un atome d'hydrogène ou un groupe alkyle en C₁ à C₁₈;
E₁₆ et E₁₇ sont indépendamment l'un de l'autre un atome d'hydrogène, un groupe alkyle en C₁ à C₁₈, alkyle en C₃ à C₁₂ entrecoupé par de 1 à 3 atomes d'oxygène, ou bien est un groupe cyclohexyle ou aralkyle en C₇ à C₁₅, et E₁₆ forme conjointement avec E₁₇ dans le cas où Z est un groupe éthylène, un groupe éthylène aussi,
E₁₁ est atome d'hydrogène, un groupe alkyle en C₁ à C₁₈ à chaîne linéaire ou ramifiée, cycloalkyle en C₅ à C₁₂, alcényle en C₂ à C₈ à chaîne linéaire ou ramifiée, aryle en C₆ à C₁₄ ou aralkyle en C₇ à C₁₅,
E₁₂ est un groupe alkyle en C₁ à C₁₈ à chaîne linéaire ou ramifiée, alcényle en C₃ à C₁₈ à chaîne linéaire ou ramifiée, cycloalkyle en C₅ à C₁₀, aryle en C₆ à C₁₆ ou aralkyle en C₇ à C₁₅,
E₁₃ est atome d'hydrogène, un groupe alkyle en C₁ à C₁₈ à chaîne linéaire ou ramifiée qui est substitué par -PO(OE₁₂)₂, phényle qui est éventuellement substitué par OH, aralkyle en C₇ à C₁₅ ou -CH₂OE₁₂.
E₃ est un groupe alkyle de 1 à 20 atomes de carbone, hydroxyalkyle de 2 à 20 atomes de carbone, alkyle substitué par un radical alcoxycarbonyle de 2 à 9 atomes de carbone, alcényle de 3 à 18 atomes de carbone, cycloalkyle de 5 à 12 atomes de carbone, phénylalkyle de 7 à 15 atomes de carbone, aryle de 6 à 10 atomes de carbone ou ledit groupe aryle substitué par un ou deux groupes alkyle de 1 à 4 atomes de carbone ou 1, 1, 2, 2-tétrahydroperfluoroalkyle où le résidu perfluoroalkyle comporte de 1 à 16 atomes de carbone, et
L est un groupe alkylène de 1 à 12 atomes de carbone, alkylidène de 2 à 12 atomes de carbone, benzylidène, p-xylylène, α, α, α', α'-tétraméthyl-m-xylylène ou cycloalkylidène.

19. Composé selon la formule IIIc selon la revendication 18, dans lequel
G₁ et G₁' sont chacun un atome d'hydrogène,
G₂ est un groupe chloro, fluoro, phénylsulfonyle ou phénylthio,
G₂' est CF3,
E₂ et E₂' sont indépendamment un groupe alkyle à chaîne linéaire ou ramifiée de 1 à 24 atomes de carbone, alcényle à chaîne linéaire ou ramifiée de 2 à 18 atomes de carbone, cycloalkyle de 5 à 12 atomes de carbone, phénylalkyle de 7 à 15 atomes de carbone, phényle, ou ledit groupe phényle ou ledit groupe phénylalkyle substitué sur le cycle phényle par 1 à 3 groupes alkyle de 1 à 4 atomes de carbone,
L est un groupe méthylène.

20. Composition stabilisée contre la dégradation photo-induite, oxydative ou thermique qui comprend :
(a) une matière organique sujette à une dégradation photo-induite, oxydative ou thermique,
(b) un composé de formule IIIc selon la revendication 19.

21. Composition selon la revendication 20, dans laquelle la matière organique est un polymère naturel, semi-synthétique, synthétique, thermoplastique ou réticulé.
